# EUROPEAN PATENT APPLICATION

(11) **EP 3 777 512 A1**
(43) Date of publication of application: **17.02.2021**
(21) Application number: 20197049.8
(22) Date of filing: 10.06.2019
(51) Int. Cl.: A01D 43/063, A01D 34/66, B62D 49/06

(54) **WORK VEHICLE**

(30) Priority: 05.07.2018 JP 2018128511; 05.07.2018 JP 2018128512; 20.09.2018 JP 2018176492; 12.11.2018 JP 2018212272; 13.11.2018 JP 2018213062; 13.11.2018 JP 2018213063
(62) Divisional of application: 19179216.7
(71) Applicant: Kubota Corporation, Osaka-shi, Osaka 556-8601 (JP)
(72) Inventor: TASHIMA, Shinya, SAKAI-SHI, Osaka 5900823 (JP); SHIBATA, Takashi, SAKAI-SHI, Osaka 5900823 (JP); HIRAI, Ryota, SAKAI-SHI, Osaka 5900823 (JP); IIZUKA, Atsushi, SAKAI-SHI, Osaka 5900823 (JP); MATSUMOTO, Ryo, SAKAI-SHI, Osaka 5900823 (JP); HASHIMOTO, Taisuke, SAKAI-SHI, Osaka 5900823 (JP); MIHARA, Akihito, SAKAI-SHI, Osaka 5900823 (JP); TONOYA, Yoshihisa, SAKAI-SHI, Osaka 5900823 (JP); KAGO, Tatsuki, SAKAI-SHI, Osaka 5900823 (JP); HABU, Kentaro, SAKAI-SHI, Osaka 5900823 (JP); TAKAOKA, Masaki, SAKAI-SHI, Osaka 5900823 (JP); MIYAGUCHI, Kazutomo, SAKAI-SHI, Osaka 5900823 (JP); AKAI, Yuto, SAKAI-SHI, Osaka 5900823 (JP); KASETANI, Takahiro, SAKAI-SHI, Osaka 5900823 (JP); KANAI, Toshiki, SAKAI-SHI, Osaka 5900823 (JP); TOKUNAGA, Tatsuro, SAKAI-SHI, Osaka 5900823 (JP); AKITA, Masayuki, SAKAI-SHI, Osaka 5900823 (JP); KUMASHIRO, Takashi, SAKAI-SHI, Osaka 5900823 (JP); YAMAMOTO, Tomohisa, SAKAI-SHI, Osaka 5900823 (JP); YAMASHITA, Nobuyuki, SAKAI-SHI, Osaka 5900823 (JP)
(74) Representative: Cabinet Beau de Loménie

(57) **Abstract**

This invention provides a work vehicle comprising: a front wheel (111); a rear wheel (112); a pair of right and left main frames (110A) that are supported to the front wheel (111) and the rear wheel (112); a prime mover section (102) located at a front portion of the main frames (110A); and a front axle attachment bracket (107) that extends between the right and left main frames (110A) at a position below the prime mover section (102), wherein the front axle attachment bracket (107) includes an attachment plate (170) at each of right and left end portions, and the attachment plates (170) each include an attachment surface on a side facing a corresponding main frame (110A), and the attachment plates (170) are each configured to be detachable from the corresponding main frame (110A) via a bolt coupling mechanism, and are configured such that a coupling position can be changed in a vehicle body front-rear direction.

## Description

### BACKGROUND OF THE INVENTION

### 1. Field of the Invention

The present invention relates to a work vehicle. The present disclosure further relates to a support carriage that is used when a grass collecting device, which is included in a riding grass mower and is detachably supported to a rear portion of a vehicle body, is attached to and detached from the riding mower, and also relates to a riding grass mower that has the support carriage. The present disclosure is further related to a work vehicle that includes the riding grass mower.

### 2. Description of the Related Art

### (1) First Related Art

A riding grass mower disclosed in JP 2016-220552 A (or corresponding EP 3 097 756 A1 or EP 3 097 757 A1) includes a grass mowing device provided in a vehicle body, a support mechanism that is detachably supported to a rear portion of the vehicle body, and a grass collecting device that is supported to the support mechanism and has a grass collecting container that receives and stores cut grass obtained by the grass mowing device. The riding grass mower includes a support carriage (called a carrier in JP 2016-220552 A) that is used when attaching and detaching the grass collecting device.

When the grass collecting device is to be removed from the vehicle body, the position of the support carriage relative to the vehicle body needs to be manually adjusted to a position according to which the grass collecting device that has been removed from the vehicle body can be placed in a favorable state on the support carriage (can be placed thereon as designed), and therefore the adjustment of the position of the support carriage is troublesome, and the removal of the grass collecting device is time-consuming.

In view of this, there is a desire for a support carriage and a riding grass mower that enable the grass collecting device removal operation to be performed quickly, while also making it possible for the grass collecting device that was removed from the vehicle body to be placed in a favorable state on the support carriage.

### (2) Second Related Art

A work vehicle disclosed in JP H08-020251 A includes a front axle attachment bracket that spans a pair of right and left main frames below a prime mover section. Two end portions of the front axle attachment bracket are fixed to the right and left main frames by being welded thereto.

This work vehicle is advantageous in that the front axle can be rollably supported with use of the front axle attachment bracket.

However, there are cases where there is desire to achieve model diversification by employing engines having different types of output as the engine installed on the main frames. In such cases, various wheel base specifications are also desired in accordance with differences in engine output, and vehicle body frames that correspond to such wheel bases need to be configured. For this reason, the number of types of vehicle body frames tends to increase, and there is room for improvement with respect to this.

In view of this, there is desire for a work vehicle that can reduce the number of types of vehicle body frames by giving the front axle attachment bracket, which spans the right and left main frames, a structure that can accommodate differences in wheel bases.

### (3) Third Related Art

A grass mower disclosed in JP 2016-140264 A (or corresponding EP 3 050 424 A1) includes a mower that is located in the lower portion of a vehicle body and feeds cut grass outward from a discharge portion, a duct that is connected to and in communication with the discharge portion and guides the cut grass that is fed from the discharge portion, and a grass collecting portion that is located in the rear portion of the vehicle body and collects the cut grass that is guided by the duct.

With this type of grass mower, the discharge portion formed in the mower and the entrance portion of the duct are connected to each other by insertion mating. Conveying wind produced by the mower is used to blow and guide the cut grass to the grass collecting portion via a conveying passage that connects the discharge portion to the interior of the duct. The duct is supported to a frame pertaining to the grass collecting portion. In order to allow the raising and lowering of the mower, which is supported so as to be capable of being raised and lower via a link mechanism, while also maintaining a state of being connected to the bottom portion of the conveying passage, the bottom portion of the duct is provided such that the orientation can be changed relative to the duct main body in accordance with the raising/lowering of the mower.

With the above-described conventional configuration, the discharge portion is supported to the mower, and the duct is supported to the frame pertaining to the grass collecting portion, and therefore there are cases where the grass collecting portion rolls relative to the vehicle body during grass mowing, and the grass collecting portion comes into contact with an object such as a furrow and is subjected to a large amount of force. In such a case, a gap is sometimes formed between the discharge portion and the entrance portion of the duct that is connected to the discharge portion. If this gap increases in size, there is a risk that cut grass passing through the duct due to guiding wind will be discharged to the outside through the gap.

In particular, with the above-described configuration in which the orientation of the bottom portion of the duct can be changed relative to the duct main body, the duct main body is formed with a downward-open U shape including a ceiling face and right and left side faces, and therefore there is a risk of deformation of portions on the lower end side of the duct main body.

In view of this, there is a desire to prevent cut grass conveyed through the duct from being discharged to the outside.

### (4) Fourth Related Art

A grass mower disclosed in JP 2003-274730 A includes a mower that is suspended and supported to a traveling vehicle body so as to be capable of being raised and lowered via a link mechanism.

The link mechanism that supports the mower is configured as follows. Two swing links are respectively provided on front and rear sides, first end portions of the swing links are swingably coupled to a frame of the traveling vehicle body, second end portions of the swing links are swingably coupled to auxiliary links, and the auxiliary links are swingably coupled to a mowing blade housing of the mower.

With this configuration, even if the mower is raised to the maximum raised position relative to the traveling vehicle body, the swing links suspend and support the mowing blade housing via the auxiliary links, and therefore a space is formed above the mowing blade housing. As a result, this is advantageous in that space for arrangement of a transmission mechanism for transmitting motive power to the mower blades can be easily provided above the mowing blade housing.

However, with this configuration, the auxiliary links, which have two end portions that are swingably coupled in pivoting manner, are provided between the swing links and the mowing blade housing, and therefore the number of pivot support locations increases, and there is a risk of an increase in wobbling in the horizontal direction. As a result, the position of the mower is not stable in the horizontal direction relative to the traveling vehicle body, and there are disadvantages such as that members pertaining to the traveling vehicle body and members pertaining to the mower come into contact with each other, and such members become damaged over extended usage.

In view of this, there is desire to make it possible to provide space for the arrangement of the transmission mechanism regardless of mower raising and lowering operations, while also stabilizing the position of the mower in the horizontal direction and suppressing the risk of damage to members.

### (5) Fifth Related Art

A riding grass mower disclosed in JP 2002-101722 A has a configuration in which a grass collecting container is supported to the rear end portion of a traveling vehicle body, and raising and lowering of the grass collecting container and a cut grass discharge operation are performed with use of multiple hydraulic cylinders including lift cylinders and dump cylinders.

In this riding grass mower, in order to raise and lower the grass collecting container as well as perform the cut grass discharge operation, multiple hydraulic cylinders are provided for the grass collecting container.

The traveling vehicle body is provided with control valves and hydraulic pumps that serve as supply sources for supplying hydraulic oil to the hydraulic cylinders. For this reason, in order for the grass collecting container to be attached to and detached from the traveling vehicle body, detachable couplers or the like need to be provided along pipes that extend from the hydraulic oil supply sources on the traveling vehicle body side to the hydraulic cylinders on the grass collecting container side.

Although not explicitly described in JP 2002-101722 A, multiple hydraulic cylinders are provided for the grass collecting container, and supply and discharge pipes need to be provided for each of such hydraulic cylinders, and therefore couplers are provided for attachment to and detachment from twice as many pipes as the number of hydraulic cylinders that are used.

With this structure, when the grass collecting container is to be attached/detached, all of the attachment/detachment couplers provided along the pipes need to be connected and disconnected, and therefore the operation of attaching/detaching the grass collecting container is laborious, and there is room for improvement in this respect.

In view of this, there is desire for a riding grass mower that enables the attachment and detachment of the grass collecting container to be performed with a simpler operation by reducing the number of pipes for the supply and discharge of hydraulic oil to hydraulic cylinders pertaining to the grass collecting container that need to be attached/detached.

### SUMMARY OF THE INVENTION

### (1) The following is proposed to solve the problem of "First Related Art".

A support carriage that carries and supports a grass collecting device when the grass collecting device is to be attached to or detached from a rear portion of a vehicle body of a riding grass mower, the support carriage including:
a base portion configured to move on a work floor; and
a positioning portion that is provided at a front portion of the base portion and is configured to be engaged with the vehicle body from behind,
wherein when the positioning portion is engaged with the vehicle body, the base portion is positioned with respect to the vehicle body in a front-rear direction and a width direction.

According to this configuration, when the support carriage is moved toward the vehicle body and the positioning portion engages with the vehicle body, the position of the support carriage at the time of positioning portion engagement can be set to a support carriage position at which the grass collecting device detached from the vehicle body can be placed thereon in a favorable state, and therefore when the grass collecting device is to be detached from the vehicle body, the support carriage can be arranged at an appropriate location by merely moving the support carriage toward the vehicle body and engaging the positioning portion with the vehicle body, and the grass collecting device detached from the vehicle body can be placed on the support carriage in a favorable state, and moreover, the removal of the grass collecting device can be performed swiftly.

In a preferred embodiment, the riding grass mower includes a link mechanism configured to raise and lower the grass collecting device relative to the vehicle body,
a lift cylinder of the link mechanism has:
one end portion configured to be detachably coupled to the rear portion of the vehicle body, and
an other end portion configured to be coupled to the link mechanism, and
the base portion includes a cylinder supporting portion that supports the lift cylinder so as to be at a set extending length and in a set coupling orientation relative to the link mechanism when the lift cylinder has been detached from the vehicle body.

According to this configuration, the orientation in which the link mechanism is coupled to the grass collecting container when the lift cylinder is supported by the cylinder supporting portion can be set to an orientation according to which the link mechanism is located at a vehicle body position that enables easy coupling of the link mechanism to the vehicle body when the link mechanism is to be coupled to the vehicle body, and therefore when the grass collecting device is to be attached to the vehicle body, the link mechanism can be swiftly coupled to the vehicle body without requiring adjustment of the position of the link mechanism relative to the vehicle body.

In a preferred embodiment, the base portion is shaped as a frame in a plan view.

According to this configuration, the weight of the base portion is reduced due to the base portion having a hollow interior, thus enabling the support carriage to be moved easily.

The following riding grass mower is also encompassed in the present invention.

A riding grass mower including: a vehicle body;
a grass mowing device provided on the vehicle body;
a grass collecting device that includes a support mechanism that is detachably supported to a rear portion of the vehicle body, and a grass collecting container that is supported to the support mechanism and is configured to store cut grass conveyed from the grass mowing device; and
a support carriage that carries and supports the grass collecting device when the support mechanism is attached to or detached from the vehicle body,
wherein the support carriage includes a positioning portion configured to engage with the vehicle body from behind, and
when the positioning portion is engaged with the vehicle body, the support carriage is positioned with respect to the vehicle body in a front-rear direction and a width direction.

According to this configuration, engagement of the positioning portion with the vehicle body enables setting the support carriage at a location according to which the grass collecting device detached from the vehicle body can be placed on the support carriage in a favorable state, and therefore when the grass collecting device is to be detached from the vehicle body, the removal of the grass collecting device can be performed swiftly, while also enabling the detached grass collecting device to be placed on the support carriage in a favorable state.

### (2) The following is proposed to solve the problem of "Second Related Art".

A work vehicle including: a front wheel;
a rear wheel;
a pair of right and left main frames that are supported to the front wheel and the rear wheel;
a prime mover section located at a front portion of the main frames; and
a front axle attachment bracket that extends between the right and left main frames at a position below the prime mover section,
wherein the front axle attachment bracket includes an attachment plate at each of right and left end portions, and the attachment plates each include an attachment surface on a side facing a corresponding main frame, and
the attachment plates are each configured to be detachable from the corresponding main frame via a bolt coupling mechanism, and are configured such that a coupling position can be changed in a vehicle body front-rear direction.

According to this configuration, by changing the location of the coupling of the attachment plates to the right and left main frames in the vehicle body front-rear direction, it is possible to change the position of the front axle attachment bracket relative to the main frames in the front-rear direction, and the vehicle body frame can be easily configured for various wheel base specifications. Accordingly, there is no need to prepare various types of vehicle body frames for different types of wheel bases, thus making it possible to reduce the number of types of vehicle body frames.

In a preferred embodiment, the bolt coupling mechanism includes bolt insertion holes that are formed in the attachment plates and the main frames, and coupling bolts configured to be inserted into the bolt insertion holes,
the bolt insertion holes include:
a first hole group that enables coupling of the attachment plates to the main frames at a predetermined position in the vehicle body front-rear direction, and
a second hole group that enables coupling of the attachment plates to the main frames at a position that is different from the predetermined position in the vehicle body front-rear direction.

According to this configuration, it is possible to obtain a vehicle body frame that can accommodate differences in wheel bases with a simple configuration including the first hole group that enables the attachment plates to be coupled to the right and left main frames at a predetermined position in the vehicle body front-rear direction and the second hole group that enables the attachment plates to be coupled to the right and left main frames at a different position in the vehicle body front-rear direction from the predetermined position.

In a case where the first hole group and the second hole group are formed in the main frames, even a large change in the wheel base can be easily accommodated without changing the size of the attachment plates.

On the other hand, in a case where the first hole group and the second hole group are formed in the attachment plates, it is possible to suppress a reduction in strength on the main frame side.

### (3) The following is proposed to solve the problem of "Third Related Art".

A grass mower including:
a vehicle body;
a mower located below the vehicle body, the mower having a discharge portion configured to discharge cut grass outward;
a duct configured to be in communication with and connected to the discharge portion and guide cut grass conveyed from the discharge portion;
a grass collecting portion that is located at a rear portion of the vehicle body and is configured to collect cut grass that is guided by the duct; and
a deformation prevention member configured to prevent a change in orientation of a portion of the duct that is connected to the discharge portion.

According to this configuration, deformation of the duct can be prevented by the deformation prevention member, and therefore even if external force is applied to the duct due to, for example, swinging of the vehicle body during grass mowing or the application of a large amount of force due to the grass collecting portion coming into contact with an object such as a furrow, it is possible to avoid the case where a large gap is formed between the discharge portion and the entrance portion of the duct.

As a result, it is possible to prevent cut grass conveyed by the duct from being discharged to the outside.

In a preferred embodiment, the deformation prevention member is arranged between a vehicle body fixing portion and the portion of the duct that is connected to the discharge portion, and is configured to prevent a change in orientation of the duct by abutting against the vehicle body fixing portion.

According to this configuration, the deformation prevention member can reliably prevent a change in the orientation of the duct by abutting against a highly rigid vehicle body fixing portion.

In a preferred embodiment, the vehicle body fixing portion is a transmission case that houses a transmission mechanism that transmits motive power to a traveling wheel of the vehicle body.

According to this configuration, the transmission case includes the transmission mechanism that transmits motive power, and thus is highly rigid and does not deform easily. Moreover, in order to transmit motive power to a travelling apparatus, the transmission case is provided at a location in the vicinity of the duct in the lower portion of the vehicle body, and therefore the deformation prevention member can be firmly supported without provided a special support member.

In a preferred embodiment, the transmission case is constituted by two divided case portions that are coupled by flange-coupling, and
the deformation prevention member is jointly coupled with the transmission case by a bolt used for flange-coupling of the transmission case.

According to this configuration, the deformation prevention member is jointly fastened using a bolt provided for flange-coupling of the transmission case, and therefore the deformation prevention member can be attached with a simple configuration and without providing a separate new coupling member.

In a preferred embodiment, the mower is supported to the vehicle body so as to be capable of being raised and lowered,
the duct has a bottom plate that can change in orientation in coordination with raising and lowering of the mower,
a linking mechanism is provided to interlockingly link the mower and the bottom plate such that an orientation of the bottom plate changes in coordination with raising and lowering of the mower, and
the deformation prevention member is arranged between the linking mechanism and the portion of the duct that is connected to the discharge portion, and is configured to prevent a change in orientation of the duct by abutting against the linking mechanism.

According to this configuration, the orientation of the bottom plate of the duct is changed along with raising/lowering of the mower, and therefore when the mower is raised or lowered, the orientation of the bottom surface of the duct changes due to the linking operation of the linking mechanism, and the state of smoothly conveying cut grass can be maintained. It should be noted that the linking mechanism needs to be provided at a location in the vicinity of one lateral side of the duct in order to interlockingly link the mower and the bottom plate of the duct. In view of this, by utilizing this linking mechanism, it is possible to support the deformation prevention member with a simple configuration and without requiring the provision of a special support member.

### (4) The following is proposed to solve the problem of "Fourth Related Art".

A grass mower including: a traveling vehicle body;
a mower provided with a mowing blade that is driven to rotate, a mowing blade housing that covers an upper side of the mowing blade, and a transmission mechanism that is located above the mowing blade housing and transmits motive power to the mowing blade;
a link mechanism configured to suspend and support the mower to the traveling vehicle body so as to be capable of being raised and lowered, the link mechanism including a swing link on a front side of the travelling vehicle body and a swing link on a rear side of the traveling vehicle body; and
a vertical extension portion configured to extend upward from each of a front-side portion and a rear-side portion of an upper portion of the mowing blade housing,
wherein the swing link on the front side has one end that is swingably coupled to the traveling vehicle body and an other end that is swingably coupled to an upper portion of the vertical extension portion on the front side, and
the swing link on the rear side has one end that is swingably coupled to the traveling vehicle body and an other end that is swingably coupled to an upper portion of the vertical extension portion on the rear side.

According to this configuration, the link mechanism that supports the mower is configured by the front-side swing link and the back-side swing link, and the pivot coupling locations are only at the end portions of the swing links, and therefore there is little risk of a large amount of wobbling in the right-left direction even over extended use. As a result, the position of the mower relative to the traveling vehicle body in the right-left direction is stable, and there is a reduced risk of contact between a member of the travelling vehicle body and a member of the mower.

Also, the swing links are swingably coupled to the vertical extension portions that extend upward from the upper surface of the mowing blade housing, and therefore even if the mower is raised to the maximum raising position, the swing links support the mowing blade housing in a suspended manner via the vertical extension portions, and therefore it is possible to avoid the case where the transmission mechanism located above the mowing blade housing interferes with a member of the vehicle body.

Accordingly, it is possible to provide space for the arrangement of the transmission mechanism regardless of mower raising and lowering operations, while also stabilizing the position of the mower in the right-left direction and suppressing the risk of damage to members.

In a preferred embodiment, the grass mower further includes: a grass collection duct configured such that cut grass discharged from a discharge portion of the mowing blade housing is guided backward relative to a vehicle body; and
a grass collecting container configured to store cut grass guided by the grass collection duct,
a bottom plate of the discharge portion is supported so as to be capable of swinging upward and downward about a first horizontal axis by operation of a mower operation tool,
the grass collection duct has a bottom plate that forms a cut grass guiding surface and is continuous with the bottom plate of the discharge portion, and the bottom plate of the grass collection duct is supported so as to be capable of swinging upward and downward about a second horizontal axis by operation of a duct operation tool, and
the bottom plate of the grass collection duct is configured to be capable of swinging between a cut grass guiding state in which a front end portion of the bottom plate is continuous with the bottom plate of the discharge portion, and a retracted state in which the front end portion rotates upward such that a center of gravity position is located rearward of the second horizontal axis.

According to this configuration, if a cut grass clog forms, the cut grass clog can be eliminated by swinging the bottom plate of the discharge portion or the bottom plate of the grass collection duct, thus making it possible to perform smooth discharging. Also, in the case where operations end or cut grass is to be collected from the cut grass container, if the bottom plate of the discharge portion is to be swung in order to discharge the cut grass that remains in the discharge portion, when the bottom plate of the grass collection duct is switched to the retracted state, the bottom plate of the grass collection duct can maintain the retracted state by its own weight even if the mower operation tool is released. As a result, the bottom portion of the grass collection duct is opened, and the cut grass in the discharge portion can be easily discharged.

In a preferred embodiment, the grass mower further includes: the grass mower further includes a gap suppressing member configured to press a side plate of the grass collection duct inward in a lateral direction.

The bottom plate of the grass collection duct is given a swingable configuration, and therefore the bottom plate is arranged at a distance from side plates that are located on respective sides thereof in the lateral direction. There are cases where the side plates move outward in the lateral direction and widen the gap between the side plates and the bottom plate due to the pressing force of discharged cut grass or due to the application of excessive force in the lateral direction caused by the grass collecting container coming into contact with an object such as a ground protrusion or a tree during mowing. If the gap widens, there are disadvantages such as cut grass accumulating and forming a clump.

In view of this, according to the above configuration, the gap suppressing member is provided, and therefore even if the aforementioned forces act on the side plates, the gap suppressing member presses the side plate inward in the lateral direction, thus preventing the widening of the gap between the side plate and the bottom plate and making it easier to avoid the accumulation of cut grass.

### (5) The following is proposed to solve the problem of "Fifth Related Art".

A riding grass mower including: a mower device provided at a lower portion of a traveling vehicle body;
a grass collecting container configured to be detachably supported to the traveling vehicle body;
a plurality of hydraulic cylinders configured to raise and lower the grass collecting container and to change an orientation of the grass collecting container;
an electromagnetic valve that is provided in a hydraulic oil supply/discharge passage extending from a hydraulic oil supply source provided in the traveling vehicle body to the plurality of hydraulic cylinders, and is configured to control supply and discharge of hydraulic oil to and from the hydraulic cylinders; and
a coupler that is provided between the hydraulic oil supply source and the electromagnetic valve, and is configured to be capable of connecting and disconnecting the hydraulic oil supply/discharge passage,
wherein the electromagnetic valve is supported to the traveling vehicle body via a holder device, and the holder device is configured to enable attachment and detachment of the electromagnetic valve to and from the traveling vehicle body.

According to this configuration, an attachment/detachment coupler for connection and disconnection of the hydraulic oil supply/discharge passage is provided between the hydraulic oil supply source and the electromagnetic valve, and the electromagnetic valve for the supply and discharge of hydraulic oil to and from hydraulic cylinders of the grass collecting container is supported to the traveling vehicle body via the holder device, and the electromagnetic valve can also be attached to and detached from the traveling vehicle body.

As described above, the electromagnetic valve can be attached to and detached from the traveling vehicle body via the holder device, and the hydraulic oil supply passage can also be attached and detached with use of the coupler, and therefore when the grass collecting container is attached to and detached from the travelling vehicle body, the hydraulic oil supply/discharge passage can also be connected to and disconnected from the hydraulic cylinders relatively easily.

At this time, the electromagnetic valve is also attached and detached along with the grass collecting container, and therefore there is no need to connect or disconnect the hydraulic oil supply/discharge passage between the electromagnetic valve and the individual hydraulic cylinders. The attachment/detachment coupler for connection and disconnection of the hydraulic oil supply/discharge passage needs to be provided between the hydraulic oil supply source and the electromagnetic valve, but it is sufficient to provide only two pipes, one for supply and one for discharge, between the hydraulic oil supply source and the electromagnetic valve. In other words, the supply and discharge of hydraulic oil to and from the individual hydraulic cylinders is performed downstream of the electromagnetic valve relative to the hydraulic oil supply source, and therefore there is no need for a coupler upstream of the electromagnetic valve, it is sufficient to provide only two pipes respectively for supply and discharge, and the number of couplers that are used can be reduced.

Accordingly, in the flow path from the hydraulic oil supply source to the electromagnetic valve, it is sufficient to provide two pipes that can supply and discharge the total amount of hydraulic oil that is supplied and discharge downstream of the electromagnetic valve, and it is sufficient that the attachment/detachment coupler enables the attachment and detachment of the two pipes, thus making it possible to reduce the number of couplers that are provided and the labor required for attachment and detachment.

In a preferred embodiment, a ROPS (rollover protection structure) is provided upright at a rear end portion of the traveling vehicle body,
the grass collecting container is detachably supported to the ROPS, and
the holder device is provided in the ROPS.

According to this configuration, in the traveling vehicle body that includes the ROPS, the holder device is provided on the ROPS, thus making it possible to utilize the ROPS as the electromagnetic valve supporting means.

In a preferred embodiment, the holder device includes
a valve support mechanism configured to support the electromagnetic valve, and
a cover body configured to cover the electromagnetic valve and the hydraulic oil supply/discharge passage.

According to this configuration, the electromagnetic valve can be supported by the valve support mechanism of the holder device, and the hydraulic oil supply/discharge passage can also be protected by the cover body of the holder device.

In a preferred embodiment, the valve support mechanism includes
a support platform member provided on a traveling vehicle body side,
a placement portion provided in the electromagnetic valve,
a horizontal positioning means configured to restrict and allow horizontal movement of the placement portion relative to the support platform member in a state where the placement portion is placed on the support platform member, and
a vertical position restricting means configured to restrict and allow vertical movement of the placement portion relative to the support platform member.

According to this configuration, the valve support mechanism includes a placement structure realized by the support platform member and the placement portion, and a position restricting structure for the vertical and horizontal directions realized by the horizontal positioning means and the vertical position restricting means, thus making it possible to reliably support and the electromagnetic valve and restrict movement thereof.

In a preferred embodiment, the horizontal positioning means includes:
a plurality of engagement holes formed in the support platform member, and
a plurality of lock pins formed on the placement portion, and
the plurality of lock pins engage with the plurality of engagement holes so as to prevent horizontal movement and relative rotation of the placement portion relative to the support platform member.

According to this configuration, the horizontal positioning means for preventing horizontal movement and relative rotation of the placement portion relative to the support platform member is obtained by a simple structure including the engagement holes formed in the support platform member and the lock pins formed in the placement portion.

In a preferred embodiment, the plurality of lock pins include a combination of a long lock pin that is long in an up-down direction and a short lock pin that is short in the up-down direction.

According to this configuration, the lock pins of the horizontal positioning means include a combination of a long lock pin and a short lock pin, and therefore the insertion of the lock pins into the engagement holes can be easily performed in order beginning with the longer lock pin.

In a preferred embodiment, the vertical position restricting means includes an R-pin ("beta pin") that can be inserted into and withdrawn from a lock pin among the plurality of lock pins.

According to this configuration, the vertical position restricting means can be easily configured with a structure employing an R-pin that can be inserted into and withdrawn from the lock pin.

In a preferred embodiment, the cover body includes
a valve cover portion configured to enclose the electromagnetic valve, and
a pipe cover portion configured to cover the hydraulic oil supply/discharge passage from the electromagnetic valve to the coupler,
the valve cover portion is supported to the electromagnetic valve, and
the pipe cover portion is supported to a traveling vehicle body side.

According to this configuration, the cover body includes the valve cover portion that is supported to the electromagnetic valve and the pipe cover portion that is supported to the traveling vehicle body, and thus can cover both the electromagnetic valve and the hydraulic oil supply/discharge passage.

In a preferred embodiment, the pipe cover portion is shaped as a channel that is open downward, and
the pipe cover portion and the valve cover portion can be coupled to and uncoupled from each other.

According to this configuration, the electromagnetic valve and the hydraulic oil supply/discharge passage can both be covered by the cover body. Also, in the cover portion, the valve cover portion is supported to the electromagnetic valve, and the pipe cover portion is supported to the traveling vehicle body.

Accordingly, when the electromagnetic valve is to be attached or detached, it is possible to uncouple the valve cover portion and the pipe cover portion and attach or detach the electromagnetic valve without requiring disassembly of the electromagnetic valve and the valve cover portion. At this time, the hydraulic oil supply/discharge passage can also be opened up outward via the downward-open portion of the channel-shaped pipe cover portion, and the attachment and detachment of the hydraulic oil supply/discharge passage portion can also be easily performed along with the electromagnetic valve.

In a preferred embodiment, among the plurality of lock pins, the lock pin that the R-pin can be inserted into and withdrawn from is provided at a portion of the cover body that is outwardly exposed from a valve cover portion that encloses the electromagnetic valve.

According to this configuration, the lock pin that the R-pin can be inserted into and withdrawn from is provided at a location that is exposed to the outside from the valve cover portion that encloses the electromagnetic valve, and therefore the R-pin can be easily inserted into and withdrawn from the lock pin.

### (6) Other features and advantages achieved thereby will become apparent from the following.

### BRIEF DESCRIPTION OF THE DRAWINGS

Fig. 1 is diagram showing a first embodiment (the same applies hereinafter up to Fig. 11), and specifically is a perspective view of a support carriage and a positioning reference portion.
Fig. 2 is an overall left side view of a riding grass mower.
Fig. 3 is an overall plan view of the riding grass mower.
Fig. 4 is a side view that shows a coupling structure of a link mechanism and also shows a positioning mechanism.
Fig. 5 is a side view that shows the coupling structure of the link mechanism and shows the positioning mechanism in an actuation state.
Fig. 6 is a view in section taken along VI-VI in Fig. 5.
Fig. 7 is a side view showing the support carriage when a grass collecting device is attached or detached.
Fig. 8 is a view in vertical section of the support carriage when the grass collecting device is carried and supported thereon.
Fig. 9 is a side view showing the support carriage when the grass collecting device is transported.
Fig. 10 is a plan view of the positioning reference portion and a positioning portion.
Fig. 11 is a plan view of the positioning portion in an engaged state.
Fig. 12 is a diagram showing a second embodiment (the same applies hereinafter up to Fig. 20), and specifically is an overall side view of a riding grass mower.
Fig. 13 is a plan view of vehicle body frames.
Fig. 14 is a view in vertical section of a front axle attachment bracket taken along a front-rear direction.
Fig. 15 is a view in vertical section of the front axle attachment bracket taken along a right-left direction.
Fig. 16 is an exploded perspective view of the main frames and the front axle attachment bracket.
Fig. 17 is a perspective view of a supporting portion of a hood front cover.
Fig. 18 is an illustrative diagram of movement of the hood front cover.
Fig. 19 is an illustrative diagram of the main frames and the front axle attachment bracket in a variation.
Fig. 20 is an illustrative diagram of the main frames and the front axle attachment bracket in the variation.
Fig. 21 is a diagram showing a third embodiment (the same applies hereinafter up to Fig. 31), and specifically is an overall side view of a grass mower.
Fig. 22 is an overall plan view of the grass mower.
Fig. 23 is a plan view of a mower.
Fig. 24 is a side view of a mower arrangement portion in a ground contact state.
Fig. 25 is a side view in vertical section of a discharge portion and a duct in a ground contact state.
Fig. 26 is a side view of the mower arrangement portion in a raised state.
Fig. 27 is a side view in vertical section of the discharge portion and the duct in the raised state.
Fig. 28 is a plan view in horizontal section of the discharge portion and the duct.
Fig. 29 is a plan view in vertical section of the duct.
Fig. 30 is a perspective view of an operation linking configuration.
Fig. 31 is a block diagram of an abnormality detection device.
Fig. 32 is a diagram showing a fourth embodiment (the same applies hereinafter up to Fig. 42), and specifically is an overall side view of a grass mower.
Fig. 33 is an overall plan view of the grass mower.
Fig. 34 is a plan view of a mower.
Fig. 35 is a side view of a mower arrangement portion in a ground contact state.
Fig. 36 is a side view in vertical section of a discharge portion and a duct in a ground contact state.
Fig. 37 is a side view of the mower arrangement portion in a raised state.
Fig. 38 is a side view in vertical section of the discharge portion and the duct in the raised state.
Fig. 39 is a plan view in horizontal section of the discharge portion and the duct.
Fig. 40 is a plan view in vertical section of the duct.
Fig. 41 is a perspective view of an operation linking configuration.
Fig. 42 is a side view of a second linking mechanism when a bottom plate is in a retracted state.
Fig. 43 is a diagram showing a fifth embodiment (the same applies hereinafter up to Fig. 50), and specifically is an overall side view of a riding grass mower.
Fig. 44 is an overall plan view of the riding grass mower.
Fig. 45 is an overall plan view of a transmission system and a gear shift operation mechanism.
Fig. 46 is a side view of the gear shift operation mechanism.
Fig. 47 is a plan view of the gear shift operation mechanism.
Fig. 48 is a view in vertical section taken along line IIL-IIL in Fig. 47.
Fig. 49 is an exploded perspective view of the gear shift operation mechanism.
Fig. 50 is a side view of a terminal cap.
Fig. 51 is a diagram showing a sixth embodiment (the same applies hereinafter up to Fig. 63), and specifically is an overall side view of a riding grass mower.
Fig. 52 is an overall plan view of the riding grass mower.
Fig. 53 is a circuit diagram showing a hydraulic system.
Fig. 54 is a perspective view of a hydraulic pipe portion.
Fig. 55 is an illustrative diagram of an operation aspect of a combined operation lever.
Fig. 56 is a rear view of a holder device.
Fig. 57 is a right side view of the holder device.
Fig. 58 is an exploded perspective view of the holder device.
Fig. 59 is an exploded perspective view of a cover body.
Fig. 60 is a view in vertical section of the cover body taken along a front-rear direction.
Fig. 61 is a right side view of a pivot support frame portion of a grass collecting device.
Fig. 62 is an illustrative diagram of a wire harness for high-dump use.
Fig. 63 is an illustrative diagram of a wire harness for low-dump use.

### DETAILED DESCRIPTION OF PREFERRED EMBODIMENTS

In each of the embodiments, a riding grass mower is illustrated as an example of a work vehicle.

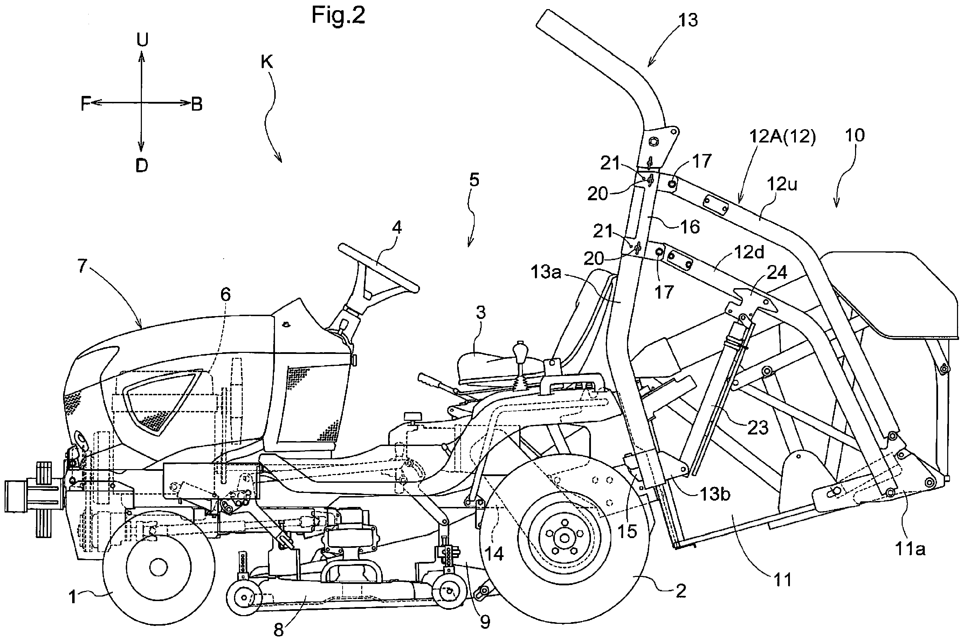

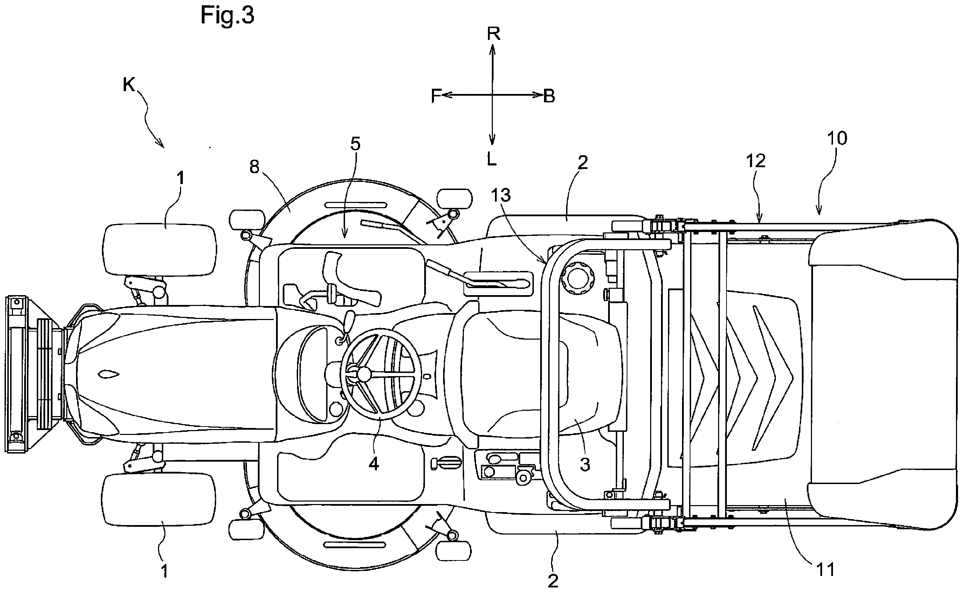

Also, in the following description, the direction indicated by an arrow F is the "vehicle body forward direction" with respect to the vehicle body of the riding grass mower, the direction indicated by an arrow B is a "vehicle body backward direction", the direction indicated by an arrow U is the "vehicle body upward direction", and the direction indicated by an arrow D is the "vehicle body downward direction" (e.g., see Fig. 2). Also, the direction indicated by an arrow L is the "body leftward direction" with respect to the vehicle body, and the direction indicated by an arrow R is the "vehicle body rightward direction" (e.g., see Fig. 3).

### FIRST EMBODIMENT

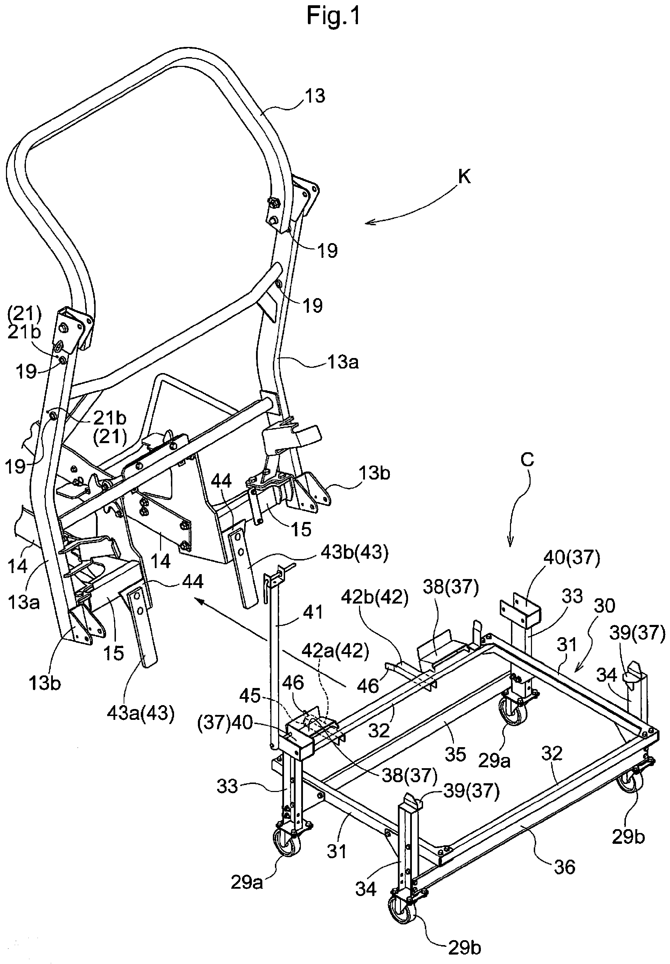

Hereinafter, a first embodiment will be described with reference to Figs. 1 to 11.

A support carriage C is for use when a grass collecting device 10 is attached to and detached from a riding grass mower K that includes the detachable grass collecting device 10.

### Overview of riding grass mower

As shown in Figs. 2 and 3, the riding grass mower K includes a riding vehicle body that has a pair of right and left front wheels 1 that are attached so as to be swingable and steerable, a pair of right and left rear wheel 2 that are attached so as to be drivable, and a driving section 5 that has a driver seat 3 and a steering wheel 4 for steering the front wheels 1. A prime mover section 7, which has an engine 6 that outputs motive power that is transmitted to the rear wheel 2, is formed in the front portion of the vehicle body. A grass mowing device 8 that performs grass and lawn mowing is provided between the front wheels 1 and the rear wheel 2. The grass mowing device 8 is driven by motive power that is transmitted from the engine 6. A grass collecting device 10 that has a grass collecting container 11 is supported to the rear portion of the vehicle body. A conveying duct 9 is provided spanning between the grass mowing device 8 and the grass collecting container 11, and conveys cut grass and lawn clippings (collectively called "cut grass" hereinafter) obtained by the grass mowing device 8 to the grass collecting container 11 by wind produced by rotation of mowing blades (not shown) of the grass mowing device 8. The conveying duct 9 is provided extending in the front-rear direction between the left rear wheel 2 and the right rear wheel 2 below the vehicle body.

### Configuration of grass collecting device

As shown in Figs. 2 and 3, the grass collecting device 10 includes the grass collecting container 11 and a link mechanism 12 that constitutes a support mechanism for supporting the grass collecting container 11 to the vehicle body.

The link mechanism 12 extends backward from a support frame 13 that is provided upright in the rear portion of the vehicle body, and is capable of swinging upward and downward. An extending end portion of the link mechanism 12 is relatively-swingably coupled to the grass collecting container 11. As shown in Fig. 1, the support frame 13 is supported to the rear portion of right and left vehicle body frames 14 via coupling members 15. Due to swinging of the link mechanism 12, the grass collecting container 11 is raised and lowered between a lowered storing orientation for receiving cut grass from the grass mowing device 8 at a lowered position relative to the vehicle body, and a raised discharging orientation for discharging the stored cut grass at a raised position relative to the vehicle body.

Specifically, the link mechanism 12 includes a pair of right and left link mechanism portions 12A. The left link mechanism portion 12A extends backward from a left vertical support portion 13a of the support frame 13, and is capable of swinging upward and downward. An extending end portion of the left link mechanism portion 12A is swingably coupled to a link supporting portion 11a that is provided at the left lateral side portion of the grass collecting container 11. The right link mechanism portion 12A extends backward from a right vertical support portion 13a of the support frame 13, and is capable of swinging upward and downward. An extending end portion of the right link mechanism portion 12A is swingably coupled to a link supporting portion 11a that is provided at the right lateral side portion of the grass collecting container 11.

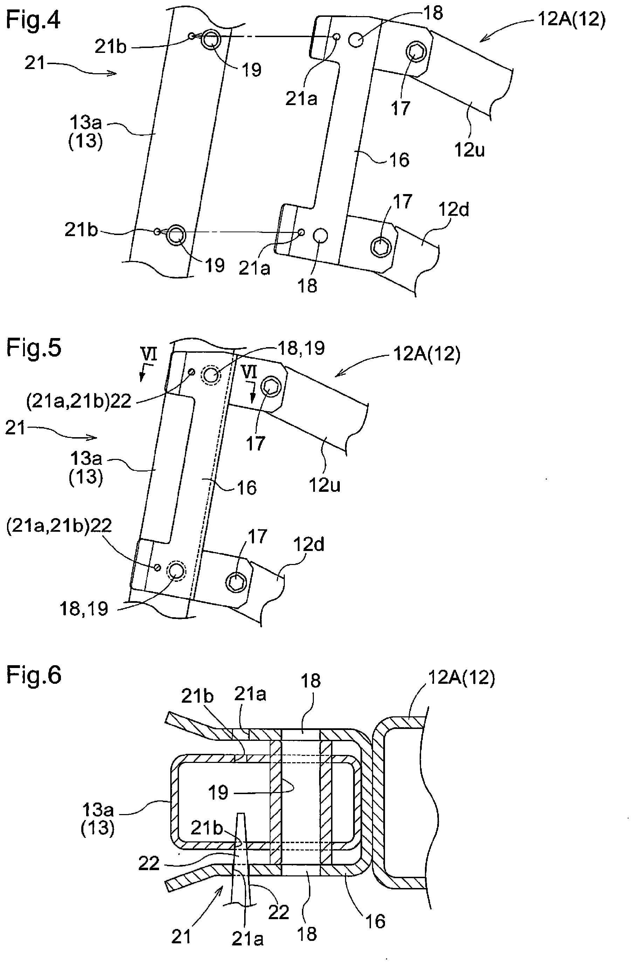

The right and left link mechanism portions 12A are configured so as to be coupled to the vertical support portion 13a to be capable of being attached/detached and also swinging upward and downward with use of a coupling structure shown in Figs. 4 and 5.

Specifically, as shown in Fig. 4, a coupling portion 16 is provided at the front portion of each of the link mechanism portions 12A, and the coupling portion 16 spans between an upper link member 12u and a lower link member 12d that constitute the link mechanism portion 12A. The upper link member 12u and the lower link member 12d are relatively-swingably coupled to the coupling portion 16 via pivot shafts 17. A coupling hole 18 is formed at two locations in the up-down direction in the coupling portion 16. An upper and a lower support hole 19 are formed in the vertical support portion 13a in correspondence with the two coupling holes 18. One coupling shaft 20 (see Fig. 2) is detachably inserted into the upper coupling hole 18 and the upper support hole 19, and another coupling shaft 20 is detachably inserted into the lower coupling hole 18 and the lower support hole 19, and thus the link mechanism portion 12A is coupled to the vertical support portion 13a so as to be capable of being attached/detached and also swinging upward and downward.

As shown in Fig. 4, the right and left link mechanism portions 12A are each provided with a positioning mechanism 21 that extends between the link mechanism portion 12A and the vertical support portion 13a and facilitates the operation of coupling the link mechanism 12 to the support frame 13. The positioning mechanism 21 includes two support mechanism positioning holes 21a formed at upper and lower positions of the coupling portion 16, and two vehicle body positioning holes 21b formed at upper and lower positions of the vertical support portion 13a.

As shown in Figs. 5 and 6, in the positioning mechanism 21, a positioning rod 22 (e.g., the tip end of a construction wrench) is inserted through the upper support mechanism positioning hole 21a and the upper vehicle body positioning hole 21b such that the upper support mechanism positioning hole 21a and the upper vehicle body positioning hole 21b are aligned by the positioning rod 22, and then the positioning rod 22 is inserted through the lower support mechanism positioning hole 21a and the lower vehicle body positioning hole 21b such that the lower support mechanism positioning hole 21a and the lower vehicle body positioning hole 21b are aligned by the positioning rod 22, whereby the two upper and lower coupling holes 18 are aligned with the support holes 19. The operation of the positioning mechanism 21 makes it easier to attach the coupling shafts 20 to the coupling holes 18 and the support holes 19.

As shown in Fig. 2, in each of the right and left link mechanism portions 12A, a lift cylinder 23 capable of swinging the link mechanism portion 12A relative to the support frame 13 is configured to couple a cylinder attachment portion 24, which is formed in the lower link member 12d, to a cylinder coupling portion 13b, which is formed in the vertical support portion 13a. When the right and left link mechanism portions 12A swing upward and downward due to extending/retracting of the lift cylinders 23, the grass collecting container 11 is raised and lowered between the lowered storing orientation and the raised discharging orientation. The right and left lift cylinders 23 are detachably coupled to the cylinder coupling portions 13b.

The grass collecting device 10 is attached to the vehicle body by coupling the right and left link mechanism portions 12A to the vertical support portions 13a such that the link mechanisms 12 become coupled to the support frames 13, and then coupling the right and left lift cylinders 23 to the cylinder coupling portions 13b. When the link mechanisms 12 are being coupled to the support frames 13, the coupling portions 16 can be easily coupled to the vertical support portions 13a by using the positioning mechanisms 21 in the right and left link mechanism portions 12A.

After the grass collecting device 10 has been attached to the vehicle body, when the right and left link mechanism portions 12A are swung upward and downward by the lift cylinders 23, the link mechanisms 12 are raised and lowered, and the grass collecting container 11 is raised and lowered between the lowered storing orientation and the raised discharging orientation.

The grass collecting device 10 can be detached from the vehicle body by uncoupling the right and left link mechanism portions 12A from the vertical support portions 13a such that the link mechanisms 12 are detached from the support frame 13, and then uncoupling the right and left lift cylinders 23 from the cylinder coupling portions 13b such that the right and left lift cylinders 23 are detached from the support frames 13.

### Configuration of support carriage

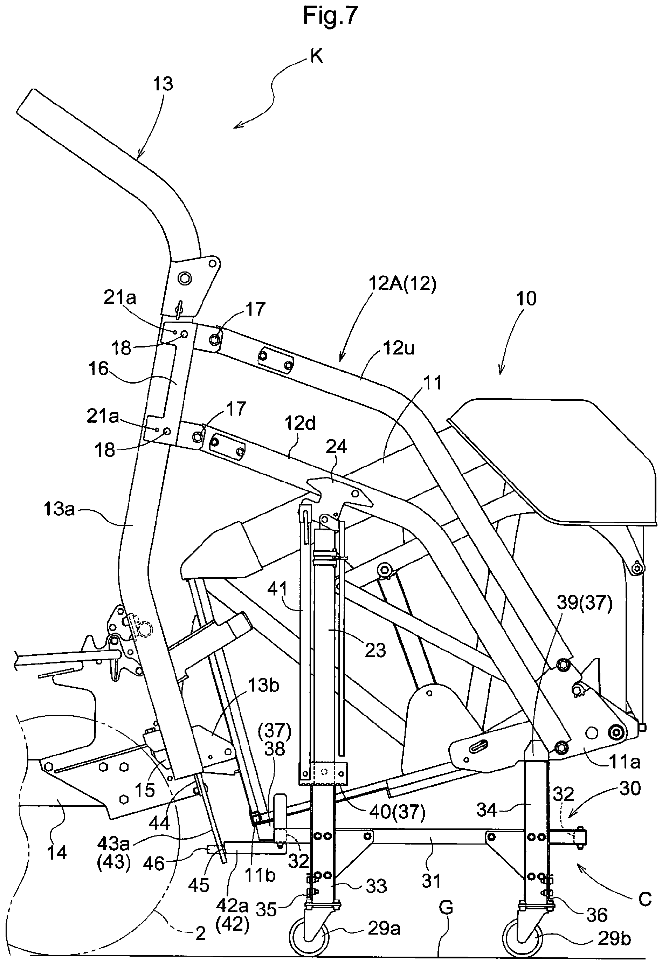

As shown in Fig. 1, the support carriage C includes a base portion 30 that includes a pair of right and left front caster wheels 29a and a pair of right and left rear caster wheels 29b. The base portion 30 can move over a work floor G (see Fig. 7) such as the ground with use of the front caster wheels 29a and the rear caster wheels 29b. The base portion 30 is constituted by a pair of right and left longitudinal frames 31 and a pair of front and rear lateral frames 32 that are assembled to form a frame shape in a plan view. The interior of the base portion 30 is a cavity portion surrounded by the pair of right and left longitudinal frames 31 and the pair of front and rear lateral frames 32, and the base portion 30 has a lightweight configuration. In the present embodiment, the base portion 30 has a rectangular frame shape in a plan view, but the shape is not limited to this, and it is possible to employ a non-rectangular shape such as a hexagonal shape, a elliptical shape or other closed frame (closed loop) shapes

The front caster wheels 29a are supported to lateral side portions of the front portion of the base portion 30. Specifically, the front caster wheels 29a are supported to the lower portions of front support frames 33 that are arranged extending in the up-down direction of the base portion 30 in laterally outward portions of the front portion of the longitudinal frame 31. The rear caster wheels 29b are supported to lateral side portions of the rear portion of the base portion 30. Specifically, the rear caster wheels 29b are supported to the lower portions of rear support frames 34 that are arranged extending in the up-down direction of the base portion 30 in laterally outward portions of the rear portion of the longitudinal frame 31. A front reinforcement frame 35 is coupled between the right and left front support frames 33. A rear reinforcement frame 36 is coupled between the right and left rear support frames 34.

As shown in Fig. 1, a placement portion 37 for placement of the grass collecting device 10 is formed in the upper portion of the base portion 30. The placement portion 37 includes a pair of right and left front container placement portions 38 that are formed on the front lateral frame 32, rear container placement portions 39 that are formed in the upper portions of the right and left rear support frames 34, and cylinder holding portions 40 that are formed in the upper portions of the right and left front support frames 33. As shown in Fig. 7, the right and left rear container placement portions 39 are positioned higher than the right and left front container placement portions 38.

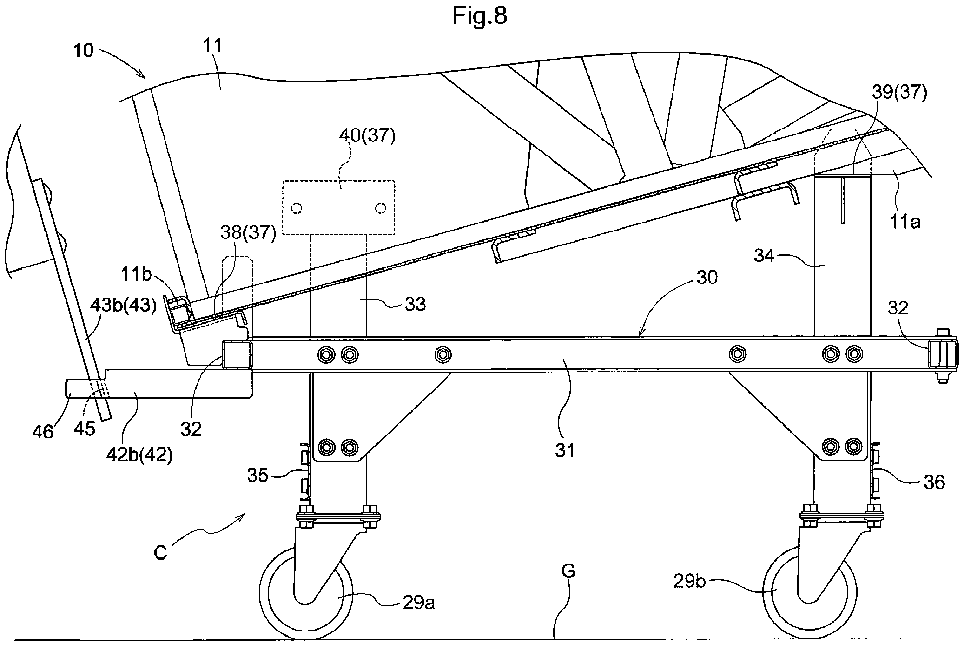

As shown in Figs. 7 and 8, the right and left front container placement portions 38 are configured to support the front side of the grass collecting container 11 when front lower portions 11b of the container frame of the grass collecting container 11 are placed thereon. The right and left rear container placement portions 39 are configured to support the rear side of the grass collecting container 11 and the rear end sides of the link mechanism portions 12A when the link supporting portions 11a are placed thereon. The right and left cylinder holding portions 40 are configured to support the lift cylinders 23 and the front end sides link mechanism portions 12A when end portions of the lift cylinders 23 on the sides opposite to the sides coupled to the lower link members 12d are set thereon.

As shown in Fig. 1, a cylinder supporting portion 41 is provided in the left side portion of the base portion 30. Specifically, as shown in Fig. 7, the cylinder supporting portion 41 is configured by a rod-shaped member that extends from the left cylinder holding portion 40 toward the corresponding link mechanism portion 12A. An extending end portion of the cylinder supporting portion 41 is configured to be detachably coupled to the cylinder attachment portion 24 of the lower link member 12d.

As shown in Fig. 7, an extending end portion of the cylinder supporting portion 41 is coupled to the cylinder attachment portion 24, and thus the cylinder supporting portion 41 supports the cylinder attachment portion 24 in an extending state and prevents retraction of the left lift cylinder 23. When the extending end portion of the cylinder supporting portion 41 is coupled to the cylinder attachment portion 24, the cylinder supporting portion 41 supports the cylinder attachment portion 24 in an extending state, and supports the lift cylinder 23, which is held to the left cylinder holding portion 40, in a state of extending to a set extending length and furthermore in a set coupling orientation with respect to the link mechanism portion 12A. The set extending length of the lift cylinder 23, which is supported by the cylinder supporting portion 41, is set to an extending length at which the link mechanism portion 12A is coupled to the grass collecting container 11 at a coupling angle according to which the ground height of the coupling portion 16 of the link mechanism portion 12A is approximately the same as the ground height of the portion of the vertical support portion 13a to which the coupling portion 16 is coupled. A corresponding link mechanism portion coupling orientation of the lift cylinder 23, which is supported by the cylinder supporting portion 41, is set to a corresponding link mechanism portion coupling orientation in which the link mechanism portion 12A is coupled to the grass collecting container 11 in a coupling orientation in which the ground height of the coupling portion 16 of the link mechanism portion 12A is approximately the same as the ground height of the portion of the vertical support portion 13a to which the coupling portion 16 is coupled.

### Configuration of positioning portion

As shown in Fig. 1, a positioning portion 42 that includes a pair of right and left positioning arms 42a and 42b, which are side-by-side in the lateral width direction of the vehicle body, is provided in the front portion of the base portion 30. The positioning portion 42 is configured such that when the support carriage C is moved toward the vehicle body from the rear side of the vehicle body, the positioning portion 42 detachably engages with a positioning reference portion 43 that is provided in the rear portion of the vehicle body as shown in Figs. 1 and 7.

Specifically, as shown in Fig. 1, the positioning reference portion 43 includes a pair of right and left reference members 43a and 43b that are side-by-side in the lateral width direction of the vehicle body. The right and left reference members 43a and 43b are supported to brackets 44 of the vehicle body frames 14. The right and left reference members 43a and 43b are fixed to the vehicle body frames 14.

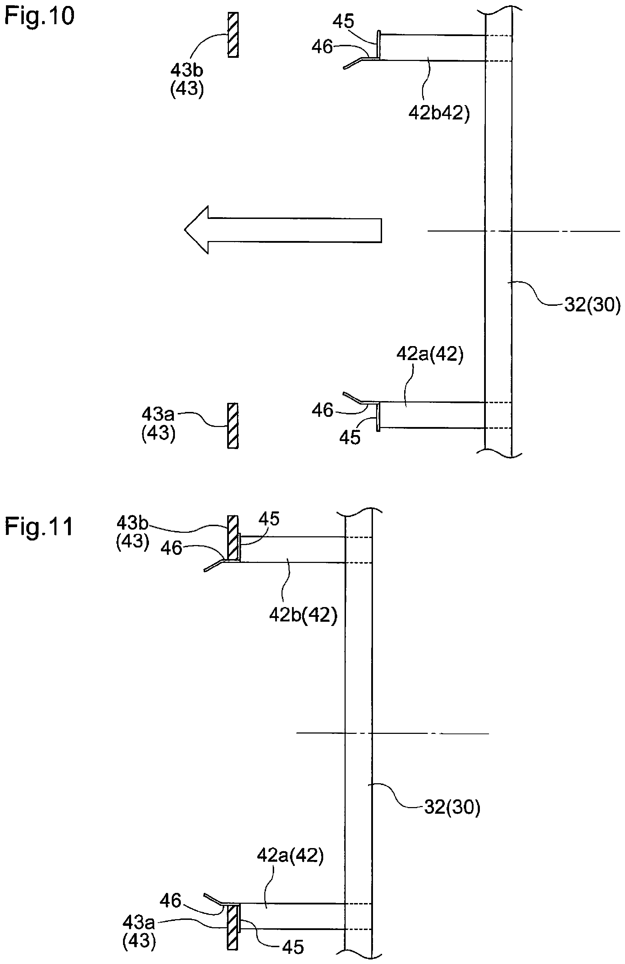

As shown in Fig. 1, the positioning portion 42 includes a pair of right and left positioning arms 42a and 42b. As shown in Figs. 1 and 10, the right and left positioning arms 42a and 42b project forward from the front lateral frame 32. As shown in Fig. 10, a forward abutting portion 45 and an outward lateral abutting portion 46 are formed in the front portion of each of the right and left positioning arms 42a and 42b.

As shown in Fig. 11, when the positioning portion 42 is engaged with the positioning reference portion 43, the forward abutting portion 45 of the left positioning arm 42a abuts against the backward portion of the left reference member 43a, the outward lateral abutting portion 46 of the left positioning arm 42a abuts against the inward lateral portion of the left reference member 43a, the forward abutting portion 45 of the right positioning arm 42b abuts against the backward portion of the right reference member 43b, and the outward lateral abutting portion 46 of the right positioning arm 42b abuts against the inward lateral portion of the right reference member 43b.

Specifically, the positioning portion 42 can be detachably engaged with the positioning reference portion 43 of the vehicle body, and through this engagement, the right and left positioning arms 42a and 42b abut against the backward portions of the reference members 43a and 43b so as to position the base portion 30 with respect to the vehicle body in the front-rear direction, and furthermore the right and left positioning arms 42a and 42b abut against the inward lateral portions of the reference members 43a and 43b so as to position the base portion 30 with respect to the vehicle body in the lateral width direction of the vehicle body. The corresponding vehicle body position of the base portion 30 that is determined by the positioning portion 42 is set to a corresponding vehicle body position at which the grass collecting device 10 detached from the vehicle body is placed in a favorable designed state on the support carriage C.

When the grass collecting device 10 is to be removed from the vehicle body, such removal is performed as follows such that the removed grass collecting device 10 is carried on and supported by the support carriage C.

As shown in Fig. 7, the support carriage C is moved toward the vehicle body of the riding grass mower K, which is positioned on the work floor G (e.g. the ground), from the rear side of the vehicle body. Due to the base portion 30 being lightweight, the support carriage C can be moved and operated easily. When the positioning portion 42 is to be engaged with the positioning reference portion 43, the support carriage C is stopped and placed at the location where the support carriage C is to be located after engagement. After the support carriage C is stopped, the right and left link mechanism portions 12A are uncoupled from the vertical support portions 13a so as to uncouple the link mechanisms 12 from the support frames 13, the right and left lift cylinders 23 are uncoupled from the cylinder coupling portions 13b, and then the grass collecting device 10 is detached from the support frames 13 and placed on the support carriage C. When the base portion 30 is positioned with respect to the vehicle body by the positioning portion 42, the support carriage C becomes located at an appropriate position of placement on the grass collecting device 10 due to the positioning of the positioning portion 42, and the grass collecting device 10 is placed on the support carriage C in a favorable designed placement state as shown in Fig. 7. In other words, the front lower portions 11b of the grass collecting container 11 are placed on the right and left front container placement portions 38, the right and left link supporting portions 11a are placed on the rear container placement portions 39, and the end portions of the right and left lift cylinders 23 that were detached from the cylinder coupling portions 13b are placed on the cylinder holding portions 40.

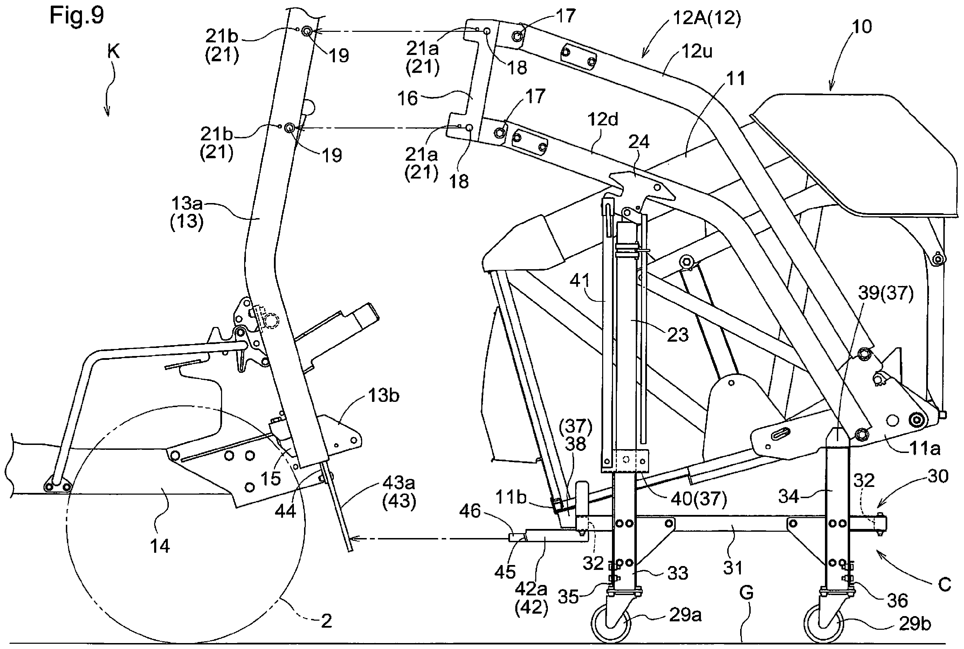

As shown in Fig. 9, when the grass collecting device 10 is to be attached to the vehicle body, the support carriage C is moved toward the vehicle body of the riding grass mower K, which is positioned on the work floor G (e.g. the ground), from the rear side of the vehicle body. As shown in Fig. 7, when the positioning portion 42 is to be engaged with the positioning reference portion 43, the support carriage C is stopped and placed at the location where the support carriage C is to be located after engagement. When the base portion 30 is positioned with respect to the vehicle body by the positioning portion 42, the support carriage C becomes located at the same position as when removing the grass collecting device 10 due to the positioning of the positioning portion 42, one of the lift cylinders 23 is supported by the cylinder supporting portion 41 in a state of extending to a set extending length and furthermore in a set coupling orientation with respect to the link mechanism portion 12A, the coupling portions 16 are located at a positions corresponding to the portions of the vertical support portions 13a that have the support holes 19, and the right and left link mechanism portions 12A can be easily coupled to the vertical support portions 13a. Due to using the positioning mechanisms 21, the coupling shafts 20 can be easily attached to the coupling portions 16 and the vertical support portions 13a. The end portions of the right and left lift cylinders 23 are detached from the cylinder holding portions 40, and then moved to the cylinder coupling portions 13b.

### Variations of first embodiment

(1) The above embodiment illustrates an example in which the support mechanisms are constituted by link mechanisms 12 that can swing upward and downward, and in which the grass collecting container 11 is raised and lowered by the lift cylinders 23, but a configuration is possible in which the lift cylinders 23 are omitted, the support mechanisms are supported to the support frames 13 in a non-raising/lowering manner, and the grass collecting container 11 cannot be raised or lowered.
(2) Although the above embodiment illustrates an example in which the cylinder supporting portion 41 is configured to operate with respect to the left lift cylinder 23, a cylinder supporting portion that operates with respect to the right lift cylinder 23 may be employed.
(3) Although the above embodiment illustrates an example in which the base portion 30 can move with use of caster wheels, there is no limitation to the use of caster wheels, and it is possible to employ steerable wheels, drivable wheels, crawlers, or the like.
(4) Besides a support carriage that is moved manually, the present invention is also applicable to a support carriage that is moved by motive power from a electric motor or the like.

### SECOND EMBODIMENT

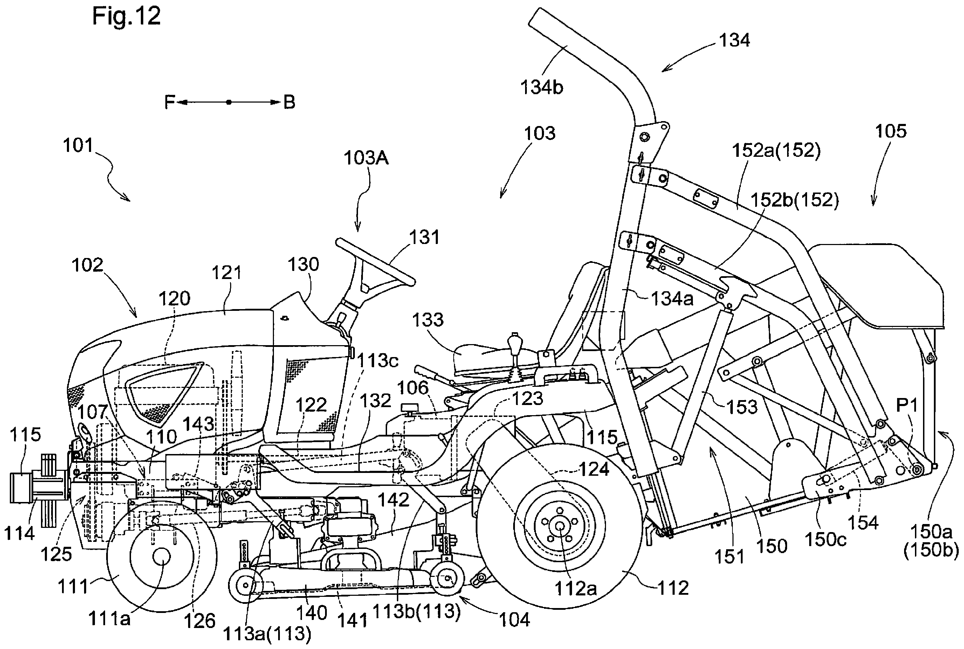

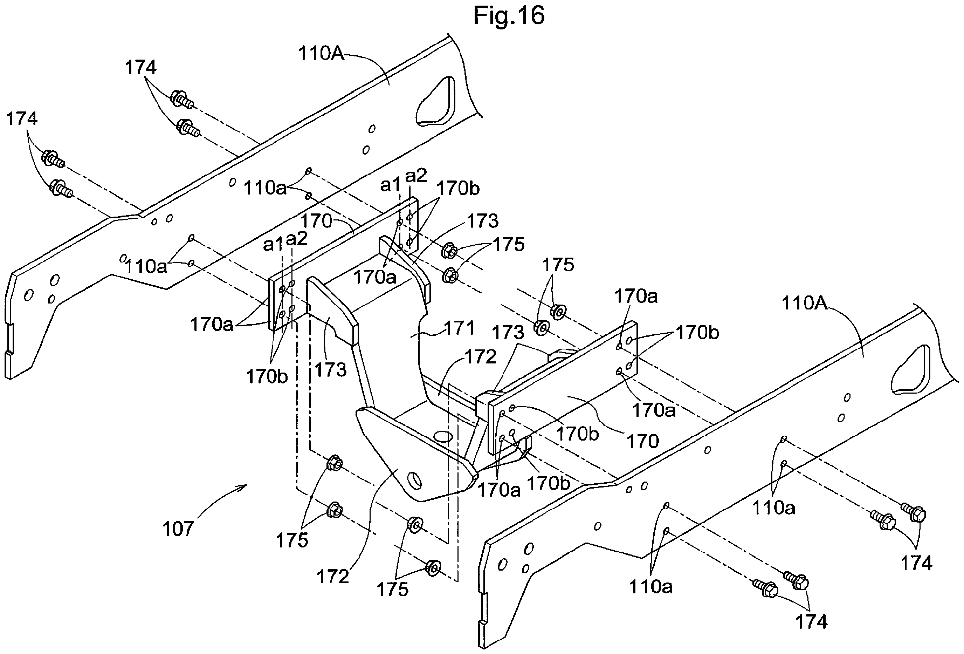

Hereinafter, a second embodiment will be described with reference to Figs. 12 to 20.

### Overall configuration of riding grass mower

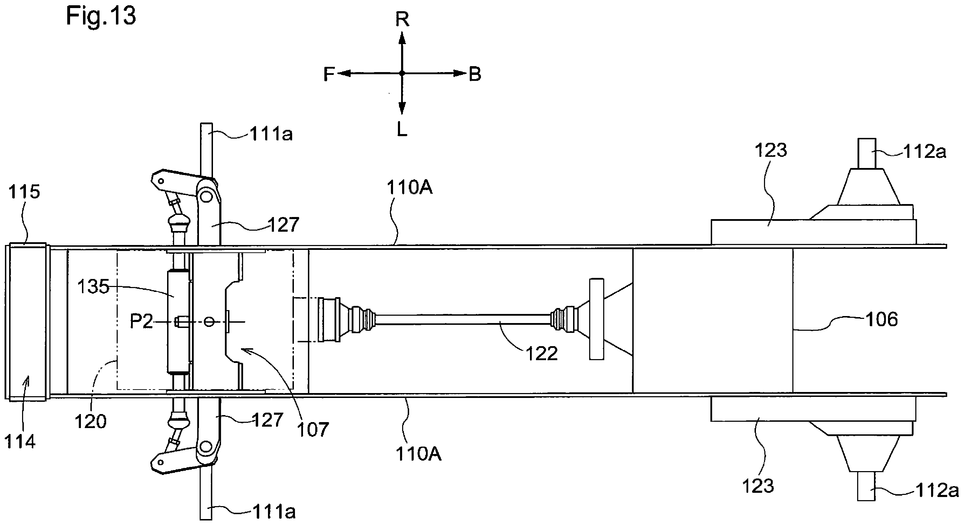

Fig. 12 is an overall side view of a riding grass mower serving as a work vehicle, and Fig. 13 is an overall plan view of a vehicle body frame 110. This riding grass mower has a self-propelled configuration including a pair of right and left steerable front wheels 111 on the front side of the vehicle body frame 110 of a traveling vehicle body 101, and including a pair of right and left drivable rear wheel 112 on the rear side.

A rear discharge type of mower device 104 is attached by suspension so as to be capable of being raised and lowered, at a location between the front wheels 111 and the rear wheel 112 in the front-rear direction below the vehicle body frame 110. A grass collecting device 105 that stores grass cut by the mower device 104 is provided on the rear side of the traveling vehicle body 101.

As shown in Figs. 12 and 13, a prime mover section 102 is provided in the front portion above the vehicle body frame 110 of the traveling vehicle body 101, and a boarding driving section 103 is provided behind the prime mover section 102.

In the prime mover section 102, an engine 120 is mounted to the vehicle body frame 110 in a state of being enclosed under an engine hood 121. Motive power output from the rear side of the engine 120 is input to a hydrostatic continuously variable transmission (HST) device 106 at a rearward position via a main transmission shaft 122, and output from the hydrostatic continuously variable transmission device 106 passes through a transmission case 123 that includes a gear transmission mechanism, and is transmitted to a rear wheel shaft 112a that is supported to right and left rear wheel shaft cases 124, thus driving the rear wheel 112.

The front wheels 111 are steered by a power steering device 135 that operates in accordance with operations performed on a steering wheel 131 provided in the boarding driving section 103.

In this configuration, motive power for work can be extracted from the front side of the engine 120. Specifically, a power takeoff mechanism 125 constituted by a belt transmission mechanism is provided on the front side of the engine 120, and motive power from the engine 120 is transmitted to the mower device 104 via a power takeoff (PTO) shaft 126 provided in the power takeoff mechanism 125.

The boarding driving section 103 behind the prime mover section 102 is provided with a steering portion 103A that includes the steering wheel 131, a steering panel 130 that is continuous with the rear side of the engine hood 121, and the like. The driver seat 133 is disposed behind the steering portion 103A, at a position above a boarding step 132 positioned at foot level, and a ROPS (rollover protection structure) 134 is provided upright behind the driver seat 133.

The ROPS 134 has an upside-down U shape in a front view, and includes right and left columnar leg portions 134a having lower end sides that are coupled and fixed to a pair of right and left ROPS bases (not shown) that are integrated with the rear end portion of the vehicle body frame 110. The upper end portion sides of the right and left columnar leg portions 134a are connected to each other by an upside-down U-shaped upper frame 134b, thus covering the region above the driver seat 133.

The vehicle body frame 110 includes a pair of right and left main frames 110A. A guard frame 115, which serves as a protection member for the front portion of the vehicle body, is provided at the front portion of the right and left main frames 110A. The guard frame 115 is provided with a balance weight attachment portion 114 to which balance weights can be attached.

The rear portions of the right and left main frames 110A are connected by the transmission case 123.

A front axle attachment bracket 107 that extends between the right and left main frames 110A is provided at a location that is closer to the front portion of the right and left main frames 110A and also faces the lower surface side of the engine 120. Front wheel shaft cases 127 are coupled to the front axle attachment bracket 107 so as to be capable of rolling about a swing axis p2 that extends in the front-rear direction.

### Boarding driving section

As shown in Fig. 12, the riding driving section 103 is provided with a transmission operation pedal (not shown) and a brake pedal (not shown) at locations at foot level toward the right side of the steering portion 103A above the boarding step 132.

The transmission operation pedal is linked to the hydrostatic continuously variable transmission device 106 via a gear shift operation mechanism (not shown), and gear shift operations are input to the hydrostatic continuously variable transmission device 106 by pressing the transmission operation pedal.

The brake pedal is linked to a travel braking device (not shown) via a brake linking mechanism (not shown).

### Mower device

The mower device 104 includes a housing 140 that is supported by suspension to the vehicle body frame 110 via a link device 113 so as to be capable of being raised and lowered.

The link device 113 includes front links 113a that are coupled to right and left sides of the front portion of the mower device 104, rear links 113b that are coupled to the right and left sides of the rear portion of the mower device 104, and coupling links 113c that interlink the front links 113a and the rear links 113b on the right and left sides, and furthermore, mower lift cylinders 143 are coupled to the upper end portions of the front links 113a.

The vertical height position of the housing 140 relative to the vehicle body frame 110 can be changed by extension and retraction of the mower lift cylinders 143.

A pair of right and left rotating blades 141 are arranged in the housing 140. The rotating blades 141 rotate about a vertical axis and are arranged such that portions of the rotation paths thereof are overlapped with each other, and when driven to rotate at the same speed, the rotating blades 141 cut grass and produce conveying wind by the rotating movement, and the conveying wind discharges the cut grass rearward from a discharge opening formed in the rear portion of the housing 140.

### Grass collecting device

As shown in Fig. 12, the grass collecting device 105 includes a grass collecting container 150 that stores cut grass, and an elevation drive mechanism 151 that operates so as to enable the grass collecting container 150 to be raised and lowered relative to the traveling vehicle body 101, and to enable the discharging of cut grass.

The grass collecting container 150 includes a receiving opening (not shown) on the front end side for receiving cut grass that is supplied from the mower device 104 via the conveying duct 142, a discharge opening 150a on the rear end side, and an opening/closing lid 150b that covers the discharge opening 150a.

The elevation drive mechanism 151 includes elevation links 152 that couple the grass collecting container 150 to the ROPS 134 provided at the rear side of the traveling vehicle body 101, lift cylinders 153 that raise and lower the elevation links 152 relative to the ROPS 134, and dump cylinders 154 for changing the orientation of the grass collecting container 150 relative to the elevation links 152 from a nearly horizontal collecting orientation to a backward inclined orientation, and also for opening and closing the opening/closing lid 150b of the grass collecting container 150.

The elevation links 152 includes a pair of right and left upper links 152a and a pair of right and left lower links 152b, and the front end sides of the upper links 152a and the lower links 152b are detachably coupled to the upper portion of the ROPS 134, and the rear portion sides are coupled to a lower portion in the vicinity of the rear end side of the grass collecting container 150. The upper end portions of the lift cylinders 153, which are constituted by hydraulic cylinders, are coupled to the lower links 152b, and when the lift cylinders 153 extend and retract, the elevation links 152 swing and the grass collecting container 150 is raised and lowered.

The dump cylinders 154, which are constituted by hydraulic cylinders, are arranged at the lower side of the rear end side of the grass collecting container 150. Due to the dump cylinders 154 extending and retracting, the grass collecting container 150 can swing about swing support points p1 arranged in the lower portion on the rear end side. End portions on one side of the dump cylinders 154 are coupled to a known dump operation mechanism (not shown) such that the orientation of the grass collecting container 150 can accordingly be switched between a backward inclined discharge orientation in which the front end side is lifted up, and a collecting orientation in which the front end side is lowered so as to be nearly horizontal.

The lift cylinders 153 and the dump cylinders 154 are provided in right-left pairs, and are disposed in a hydraulic circuit so as to operate in synchronization on the right and left sides.

The hydrostatic continuously variable transmission device 106, the power steering device 135, the lift cylinder 153, the dump cylinder 154 and the mower lift cylinder 143 receive hydraulic oil from a hydraulic oil supply pump (not shown) that is driven by motive power from the engine 120.

The hydrostatic continuously variable transmission device 106 has a known structure in which a variable capacity (variable displacement) hydraulic pump (not shown), which is driven by motive power from the engine 120 along with the hydraulic oil supply pump, and a variable capacity hydraulic motor (not shown) are connected in a closed circuit.

### Front axle attachment bracket

The front axle attachment bracket 107 is attached extending between the right and left main frames 110A, and as shown in Figs. 13 to 16, includes right and left attachment plates 170 that come into surface contact with the vehicle body-inward surfaces of the main frames 110A, a horizontal member 171 that extends between the right and left attachment plates 170, and connection members 172 that are fixed so as to sandwich the horizontal member 171 on the front and rear sides in the central portion, with respect to the right-left direction, of the horizontal member 171.

The right and left end portions of the horizontal member 171 are welded to the right and left attachment plates 170, and the connection members 172, which are located on the front and rear sides of the horizontal member 171, are welded to the front and rear edges of the horizontal member 171. At this time, the horizontal member 171 has an inverted trapezoid shape in which the central portion in the right-left direction is tapered downward. For this reason, when the connection members 172 are welded to the curved portions, the central portion of the horizontal member 171 in the right-left direction is given a three-dimensional shape having vertical walls on the right/left and front/rear sides, thus improving the strength of the horizontal member 171 itself.

Also, two reinforcement pieces 173 are respectively welded to the front and rear edges of the horizontal member 171 in each of the two end portions of the horizontal member 171 that are connected to the right and left attachment plates 170. Outer end portions of the reinforcement pieces 173 in the right-left direction, which face the right and left attachment plates 170, are welded to the right and left attachment plates 170.

The reinforcement pieces 173 are thus integrated with the front and rear portions of the horizontal members 171 by being welded thereto, and as a result, the outer end portions in the right-left direction are welded to the right and left attachment plates 170 along with the outer end portions in the right-left direction of the horizontal member 171.

In other words, the coupled body including the horizontal member 171 and the reinforcement pieces 173 is welded to the attachment plates 170 that are located on the right and left sides. Accordingly, the welding length according to which the coupled body is welded to the attachment plates 170 is equal to the sum of the lengths of the outer portions of the horizontal member 171 and the outer end portions of the reinforcement pieces 173, thus making it possible to improve the strength of the attachment of the horizontal member 171 and the reinforcement pieces 173 to the attachment plates 170.

The front axle attachment bracket 107 having the above-described configuration is attached to the right and left main frames 110A via bolt coupling mechanisms.

Specifically, the right and left main frames 110A are provided with bolt insertion holes 110a that can receive coupling bolts 174. The right and left attachment plates 170, which come into surface contact with the vehicle body-inward surfaces of the main frames 110A, are also provided with bolt insertion holes 170a and 170b that can receive the coupling bolts 174.

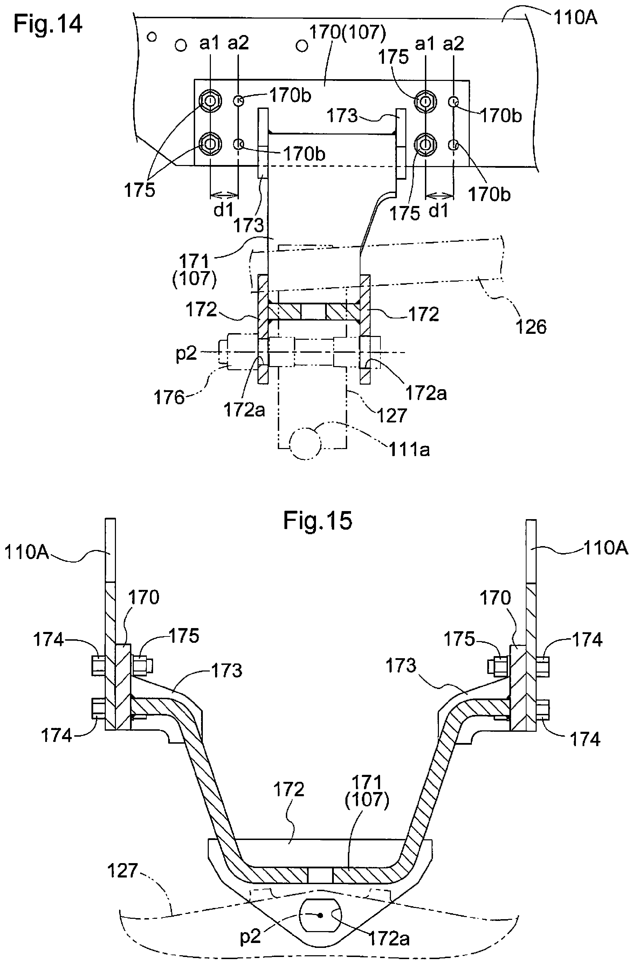

In the structure shown in Figs. 14 to 16, two coupling bolts 174 are inserted into four bolt insertion holes 110a that are formed in the left main frame 110A, and into four bolt insertion holes 170a among eight bolt insertion holes 170a and 170b formed in the left attachment plate 170, and then two nuts 175 are fastened thereto.

On the right side as well, two coupling bolts 174 are inserted into four bolt insertion holes 110a are formed in the right main frame 110A, and four bolt insertion holes 170a among eight bolt insertion holes 170a and 170b formed in the right attachment plate 170, and then two nuts 175 are fastened thereto.

As described above, four bolt insertion holes 170a among the eight bolt insertion holes 170a and 170b formed in each of the attachment plates 170 correspond to a first hole group a1 that enables coupling of the attachment plate 170 and the main frame 110A at a predetermined position in the vehicle body front-rear direction.

The remaining four bolt insertion holes 170b among the eight bolt insertion holes 170a and 170b formed in the attachment plate 170 correspond to a second hole group a2 that enables coupling of the attachment plate 170 and the main frame 110A at a position that is different from the predetermined position in the vehicle body front-rear direction.

Accordingly, if the insertion location of the coupling bolts 174 is changed from the first hole group a1 to the second hole group a2, the attachment position at which the front axle attachment bracket 107 is attached to the main frame 110A can be moved backward a distance d1. This therefore makes it possible to change the wheel base.

The connection members 172 located on the front and rear sides of the horizontal member 171 are provided with support holes 172a for insertion of a support shaft 176 that is for supporting the front wheel shaft case 127 so as to be capable of swinging about a swing axis p2 that extends in the front-rear direction.

### Front cover

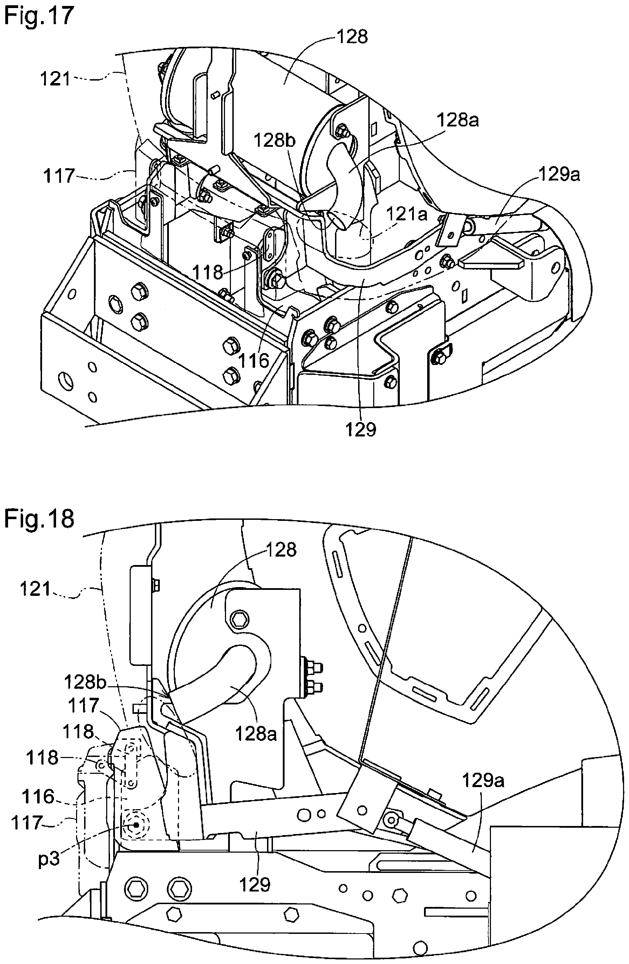

As shown in Figs. 17 and 18, a muffler 128 is provided on the front side of the engine 120 inside the engine hood 121 provided in the prime mover section 102. An exhaust pipe 128a of the muffler 128 is arranged such that an exhaust gas discharge opening 128b faces forward and diagonally downward.

The front portion of the engine hood 121 is provided with an exhaust opening 121a that is formed at a location facing the exhaust gas discharge opening 128b.

A pair of right and left fixing brackets 116 are provided in the front portion of the vehicle body frame 110, and the engine hood 121 is supported to a movable support frame 129 that is supported to the fixing brackets 116 so as to be capable of swinging about a swing support point p3 in the right-left direction. Accordingly, as the movable support frame 129 swings about the swing support point p3, the engine hood 121 also swings about the swing support point p3. A damper 129a is connected to the movable support frame 129.

The front portions of the fixing brackets 116 are provided with a front cover 117 that covers the upper portion and the like of a flywheel (not shown) of the power takeoff mechanism 125 provided on the front side of the engine 120.

The fixing bracket 116 and the front cover 117 are coupled via a pair of right and left swing links 118, and the front cover 117 can be changed between a covering orientation shown by solid lines in Fig. 18 and an open orientation shown by dashed double-dotted lines in the figure.

The front cover 117 is changed to the open orientation when the engine hood 121 is changed to the open orientation by swinging the movable support frame 129 about the swing support point p3, thus avoiding a situation in which the engine hood 121 in the open orientation interferes with the front cover 117.

### Variations of second embodiment

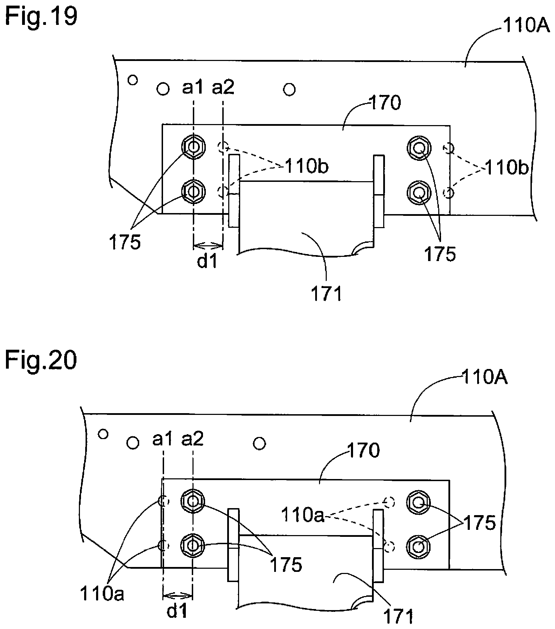

(1) The above embodiment illustrates an example in which the bolt coupling mechanism has a structure in which the first hole group a1 and the second hole group a2 are formed in the attachment plates 170 as insertion locations for the coupling bolts 174, but the present invention is not necessarily limited to this structure.
   For example, a structure is possible in which, as shown in Figs. 19 and 20, the first hole group a1 and the second hole group a2, which are insertion locations for the coupling bolts 174, are provided in the main frames 110A.
   According to this structure, it is possible to switch between a state in which, as shown in Fig. 19, the coupling bolts 174 are inserted into the bolt insertion holes 110a of the first hole group a1 formed in the main frames 110A and into the bolt insertion holes 170a of the attachment plate 170 and then the nuts 175 are fastened thereto, and a state in which, as shown in Fig. 20, the coupling bolts 174 are inserted into the bolt insertion holes 110b of the second hole group a2 formed in the main frames 110A and the bolt insertion holes 170a of the attachment plate 170 and then the nuts 175 are fastened thereto.
   According to this configuration, if the insertion location of the coupling bolts 174 is changed from the first hole group a1 to the second hole group a2 formed in the main frame 110A, the attachment position at which the front axle attachment bracket 107 is attached to the main frame 110A can be moved backward the distance d1. This therefore makes it possible to change the wheel base.
   It is sufficient that other configurations are similar to the configurations in the embodiment described above.
(2) The above embodiment illustrates an example in which the insertion locations of the coupling bolts 174 are two hole groups, namely the first hole group a1 and the second hole group a2 in the main frames 110A or the attachment plates 170, but the present invention is not necessarily limited to this structure.
   For example, a structure is possible in which three or more hole groups are formed with different distances from the predetermined position. Also, a structure is possible in which two or more hole groups are formed in both the main frames 110A and the attachment plates 170.
   It is sufficient that other configurations are similar to the configurations in the embodiment described above.
(3) The above embodiment illustrates an example in which the bolt coupling mechanism has a structure in which the bolt insertion holes 110a, 110b, 170a, and 170b are formed as round holes, but the present invention is not necessarily limited to this structure.
   For example, the holes in a group in the main frames 110A or the attachment plates 170 may be changed as appropriate, such as being formed as elongated holes or cutouts.
   It is sufficient that other configurations are similar to the configurations in the embodiment described above.
(4) The present invention is not limited to being applied to various types of riding grass mowers from large models to small models, and is also applicable to various types of work devices.

### THIRD EMBODIMENT

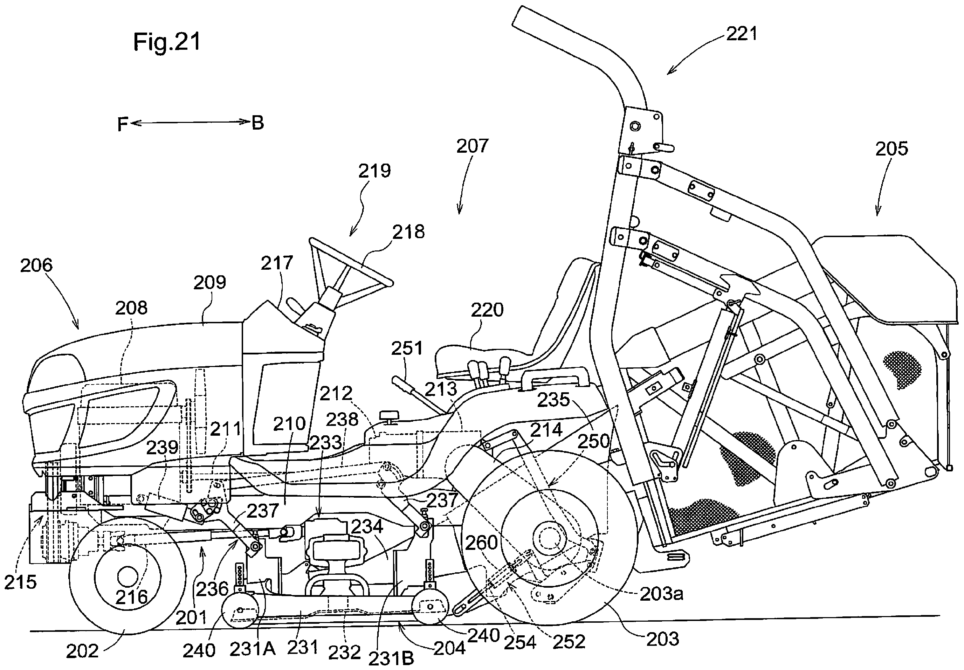

Hereinafter, a third embodiment will be described with reference to Figs. 21 to 31.

### Overall configuration

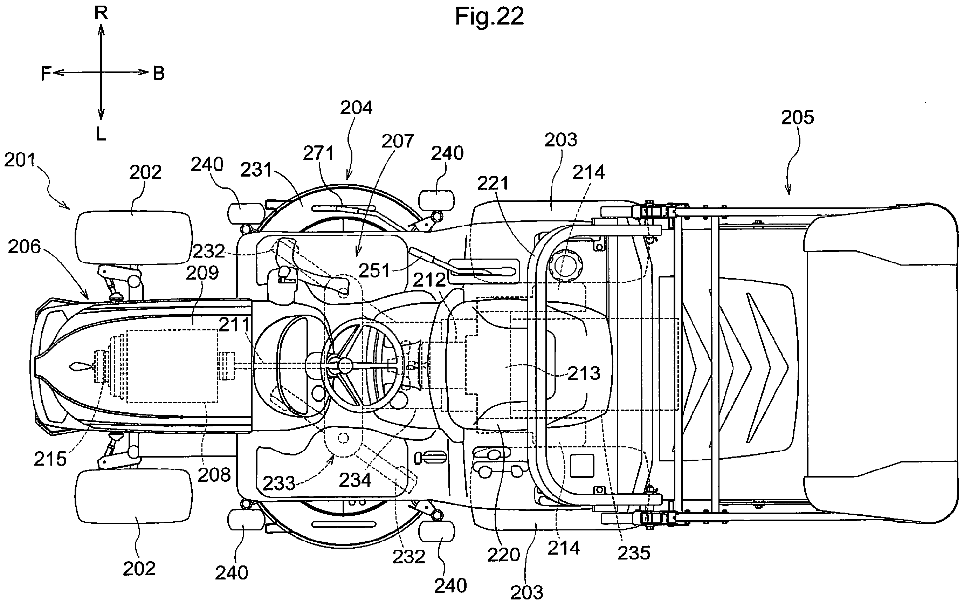

As shown in Figs. 21 and 22, a grass mower has a self-propelled configuration including a pair of right and left steerable front wheels 202 on the front side of a traveling vehicle body 201, and including a pair of right and left drivable rear wheel 203 on the rear side. A rear discharge type of mower 204 is attached by suspension so as to be capable of being raised and lowered, at a location between the front wheels 202 and the rear wheel 203 in the front-rear direction underneath the vehicle body. A grass collecting device 205, which is provided a grass collecting portion that stores grass cut by the mower 204, is arranged on the rear side of the traveling vehicle body 201.

A prime mover section 206 is provided in the front portion of the traveling vehicle body 201, and a boarding driving section 207 is provided behind the prime mover section 206. In the prime mover section 206, an engine 208 is mounted and supported to a vehicle body frame 210 in a state of being enclosed under an engine hood 209. Motive power output from the rear side of the engine 208 is input to a hydrostatic continuously variable transmission device (HST) 212 at a rearward position via a transmission shaft 211 that extends rearward. Output from the hydrostatic continuously variable transmission device 212 passes through a transmission case 213 provided in a rear portion and chain-type transmission mechanisms (not shown) that are included in right and left transmission cases 214, and is then transmitted to right and left rear wheel shafts 203a, thus driving the rear wheel 203. The transmission cases 214 are arranged extending rearward and diagonally downward from lateral side portions of the transmission case 213.

A power takeoff mechanism 215 constituted by a belt transmission mechanism is provided on the front side of the engine 208, and motive power from the engine 208 is transmitted to the mower 204 via a power takeoff (PTO) shaft 216 provided in the power takeoff mechanism 215 and a transmission mechanism 233 provided above the mower 204.

The boarding driving section 207 is provided with a steering panel 217 that is continuous with the rear side of an engine hood 209, a steering portion 219 that includes a steering wheel 218 that enables steering the front wheels 202, and the like. A driver seat 220 is disposed behind the steering portion 219, and a ROPS (rollover protection structure) 221 is provided behind the driver seat 220.

### Abnormality detection device

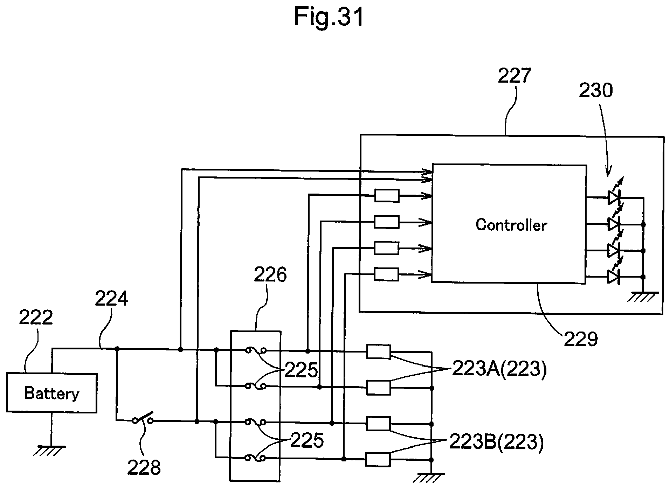

As shown in Fig. 31, the grass mower is provided with a battery 222, and electrical power is supplied to multiple electrical power loads 223. Fuses 225 are individually provided in power supply circuits 224 for supplying power to the electrical power loads 223, thus preventing abnormalities caused by overcurrent. The fuses 225 are collectively accommodated in a fuse box 226. The grass mower includes an abnormality detection device 227 according to which, when one of the fuses 225 breaks during an operation, it is possible to immediately learn which of the fuses 225 melted.

The electrical power loads 223 include an electrical power load 223B that receives power when a key switch 228 is turned on, and an electrical power load 223A that receives power regardless of the on/off state of the key switch 228. Each of the electrical power loads 223 receives electrical power via a fuse 225. A control device 229 is provided for identifying an abnormality, and a plurality of LED (light emitting diode) lamps 230 are provided in one-to-one correspondence with the fuses 225. The control device 229 receives information regarding the power supply circuits 224 at locations upstream and downstream of the fuses 225 in the power supply direction. Based on the information regarding the power supply circuits 224 at upstream and downstream locations, the control device 229 lights the LED lamp 230 that corresponds to the fuse 225 that melted. According to this configuration, a worker can immediately identify which fuse 225 has melted. Note that although four electrical power loads 223 are shown in Fig. 31, there is no limitation to four electrical power loads, and five or more electrical power loads 223 may be provided, and in this configuration as well, a fuse 225 and an LED lamp 230 are provided for each of the electrical power loads 223.

### Mower configuration

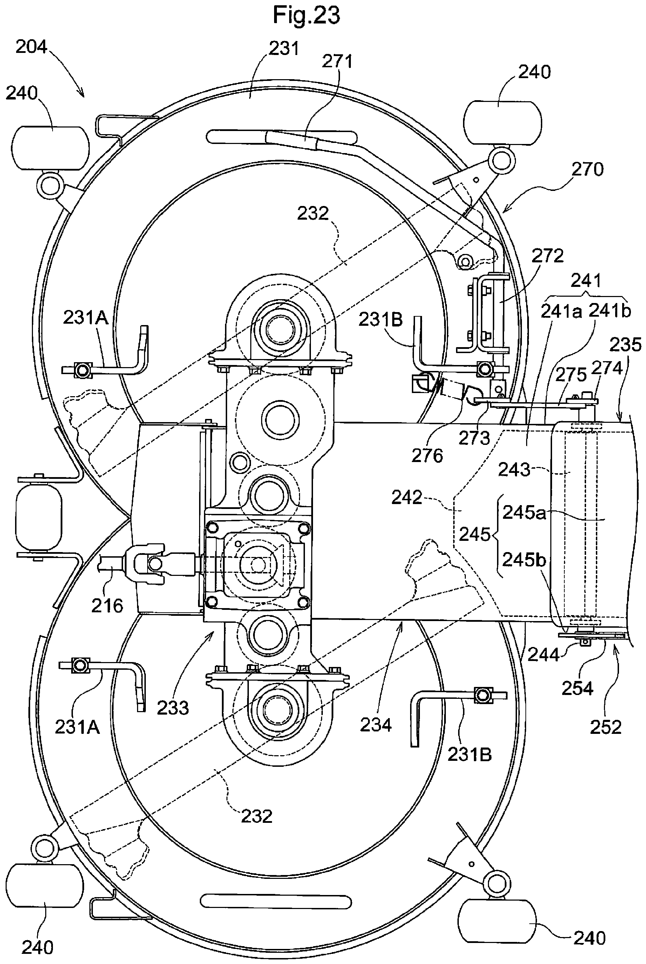

As shown in Fig. 23, the mower 204 has a structure including two blades 232 that are arranged side-by-side in the right-left direction in a mowing blade housing 231, and the left blade 232 is driven to rotate clockwise, whereas the right blade 232 is driven to rotate counter-clockwise. In this way, in this configuration, the blades 232 are driven to rotate in mutually opposite directions. When the left blade 232 is driven to rotate clockwise and the right blade 232 is driven to rotate counter-clockwise, cut grass is carried by conveying wind generated by the rotation of the two blades 232 and is discharged rearward from a discharge portion 234 that is formed in the vicinity of the center of the rear portion of the mowing blade housing 231. The cut grass discharged from the discharge portion 234 is guided by a grass collection duct 235 that is connected to the discharge portion 234, and fed to and stored in the grass collecting container 205.

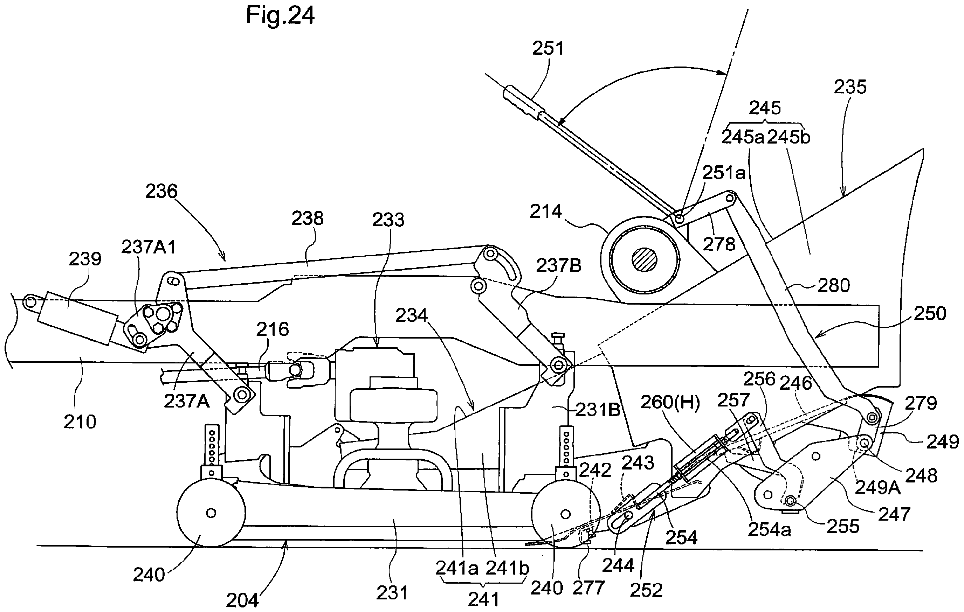

As shown in Fig. 24, the mower 204 is supported to the vehicle body frame 210 so as to be capable of being raised and lowered via an elevation link mechanism 236. The elevation link mechanism 236 includes one pair of front and rear swing links 237A and 237B on each of the right and left sides, and the upper end sides of the swing links are pivotably coupled to the vehicle body frame 210, whereas the lower end sides are pivotably coupled to the mowing blade housing 231.

A pair of right and left vertical extension portions 231A and 231B, which extend upward from the upper surface of the mowing blade housing 231, are provided upright on the upper portion of the mowing blade housing 231 at both locations on the front portion side and locations on the rear portion side. As shown in Fig. 23, the vertical extension portion 231A on the front portion side and the vertical extension portion 231B on the rear portion side are each constituted by a plate body that is bent into an "L" shape in a plan view, and are integrally coupled to the upper surface of the mowing blade housing 231 by welding.

The front swing link 237A has one end that is coupled to the vehicle body frame 210 of the traveling vehicle body 201 so as to be capable of swinging about a horizontal axis, and has another end that is coupled to the upper portion of the vertical extension portion 231A on the front portion side so as to be capable of swinging about a horizontal axis. The rear swing link 237B has one end that is coupled to the vehicle body frame 210 of the traveling vehicle body 201 so as to be capable of swinging about a horizontal axis, and has another end that is coupled to the upper portion of the vertical extension portion 231B on the rear portion side so as to be capable of swinging about a horizontal axis.

Upper end sides of the front swing link 237A and the rear swing link 237B are interlockingly coupled by a coupling rod 238, and a first end portion of an elevation hydraulic cylinder 239 is pivotably coupled to an operation portion 237A1 formed in the front swing link 237A. A second end portion of the hydraulic cylinder 239 is pivotably coupled to the vehicle body frame 210. When the hydraulic cylinder 239 extends and retracts, the swing links 237A and 237B also extend and retract, thus raising and lowering the mower 204. When mowing is performed, gauge wheels 240 provided on the lower end portion of the mowing blade housing 231 come into contact with the ground, and thus the mower 204 follows the ground while performing mowing.

As shown in Figs. 23, 24 and 25, the discharge portion 234 is formed so as to extend rearward and diagonally upward from the rear portion of the mowing blade housing 231 in the center in the right-left direction. The discharge portion 234 includes a discharge portion main body 241 that is integrally coupled to the mowing blade housing 231, and a guide member 242 that forms the bottom portion of the discharge portion main body 241. The discharge portion main body 241 has a ceiling surface 241a and right and left side surfaces 241b, and is shaped as an inverted "U" in a view along the front-rear direction. Also, the plate-shaped guide member 242 is provided so as to cover the lower side of an interior space formed by the discharge portion main body 241. Accordingly, the discharge portion main body 241 and the guide member 242 form an approximately rectangular tube-shaped conveying passage that extends rearward and diagonally upward. An upward guiding surface 243 that guides cut grass upward is formed at an intermediate point along the conveying path of the guide member 242.

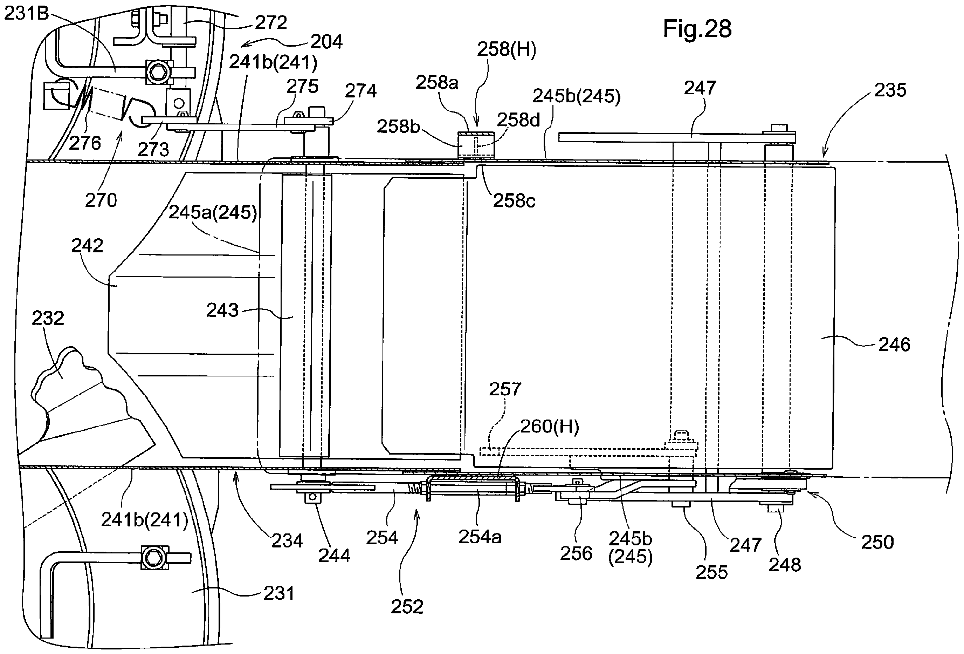

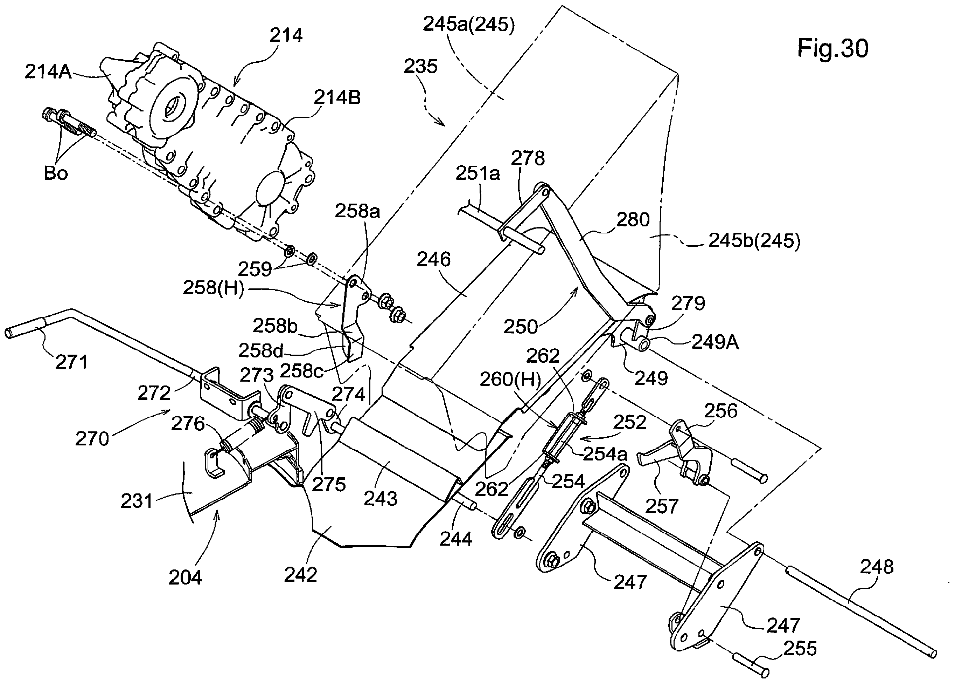

As shown in Figs. 28 and 30, the guide member 242 is supported by a pivot shaft 244 that extends between the right and left side surfaces 241b of the discharge portion main body 241, so as to be capable of pivoting upward and downward relative to the mowing blade housing 231. The guide member 242 is linked to a first operation lever 271 that is provided in the vicinity of the driver seat 220 via a first linking mechanism 270, and the guide member 242 is configured to be capable of being swung by manually operating the first operation lever 271. If the discharge portion 234 becomes clogged with cut grass during mowing, the cut grass clog can be loosened and conveyed by swinging the first operation lever 271 upward and downward.

As shown in Figs. 23, 25 and 28, the first linking mechanism 270 includes the first operation lever 271 that has a pivot shaft portion 272 extending in the right-left direction and can swing upward and downward in the right-side rear portion of the mowing blade housing 231, a first arm 273 that is fixed to a left end portion of the pivot shaft portion 272, a second arm 274 that is fixed to a right end portion of the pivot shaft 244, a push-pull link 275 and a tension spring 276 that are linked to the first arm 273 and the second arm 274, and the like. Due to the action of the tension spring 276, the first arm 273 is biased so as to swing diagonally forward while also being restricted by an abutting portion 277, thus holding the guide member 242 in a backward inclined guiding orientation. When the first operation lever 271 is pulled and swung backward and upward, the guide member 242 can be swung against the biasing force of the tension spring 276 in the forward and upward direction from the backward inclined guiding orientation.

During mowing, if cut grass becomes affixed to the guide member 242 and accumulates so as to cause a clog in the discharge portion 234, the operator can, while sitting in the driver seat 220, swing the guide member 242 in the up-down direction by swinging the first operation lever 271 in the up-down direction, thus eliminating the affixed and accumulated cut grass.

### Grass collection duct

Next, the grass collection duct 235 will be described.

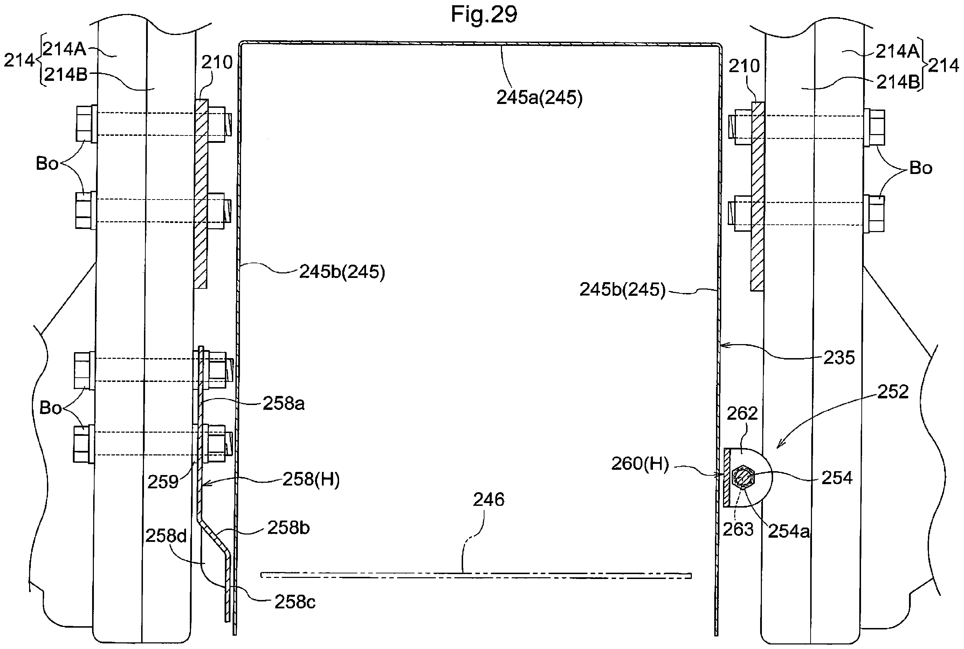

As shown in Figs. 23, 24, 25 and 28, the grass collection duct 235 is connected to and in communication with the discharge portion 234 formed in the mowing blade housing 231, and guides cut grass that is fed from the discharge portion 234. As shown in Figs. 21 and 29, the duct 235 is provided so as to extend in the front-rear direction in a space formed between the right and left transmission cases 214.

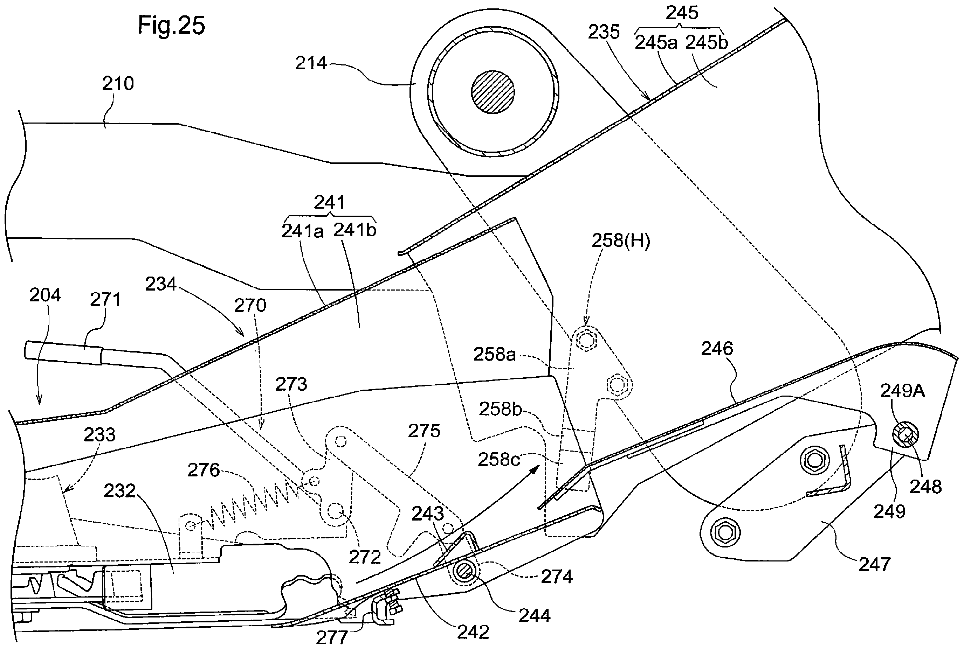

As shown in Figs. 25, 28 and 29, the duct 235 includes a duct main body 245 and a bottom plate 246. The duct main body 245 has a ceiling surface 245a and right and left side surfaces 245b, and is shaped as an inverted "U" in a view along the front-rear direction. Also, the plate-shaped bottom plate 246 is provided so as to cover the lower side of an interior space formed by the duct main body 245. Accordingly, similarly to the discharge portion 234 of the mower 204, an approximately rectangular tube-shaped conveying passage that extends rearward and diagonally upward is formed in an interior region that is enclosed by the duct main body 245 and the bottom plate 246.

Support members 247 are provided at fixed positions on the right and left outer sides of the duct 235. Although not shown, the support members 247 are supported at the fixed positions by being coupled to the vehicle body frame 210, the transmission cases 214, and the like. The bottom plate 246 of the duct 235 is supported by the right and left support members 247 so as to be capable of swinging upward and downward about a horizontal axis. Specifically, as shown in Figs. 25, 28 and 30, a pivot shaft 248 is provided extending between the right and left support members 247. Left and right support arms 249 are integrally coupled to the lower surface of the bottom plate 246 and extend backward and downward therefrom. Boss portions 249A are respectively provided on extending end portions of the right and left support arms 249, and are rotatably fitted around and supported to the pivot shaft 248.

The bottom plate 246 of the duct 235 is interlockingly coupled to a second operation lever 251, which is provided on one lateral side of the driver seat 220, via a second linking mechanism 250, and is configured to be rotated by operation of the second operation lever 251. As shown in Figs. 24 and 30, the second operation lever 251 is rotatably supported by a horizontal shaft portion 251a, and a first arm 278 is provided so as to integrally rotate with the left end portion of the horizontal shaft portion 251a. The second operation lever 251 is interlockingly linked to the second arm 279, which is coupled to the rotation boss portion 249a of the support arm 249, via a push-pull link 280. Accordingly, when the second operation lever 251 is swung, the bottom plate 246 also swings due to the interlocking structure of the second linking mechanism 250. As a result, similarly to the guide member 242, if the duct 235 becomes clogged with cut grass during mowing, the cut grass clog can be loosened and conveyed by swinging the second operation lever 251 upward and downward.

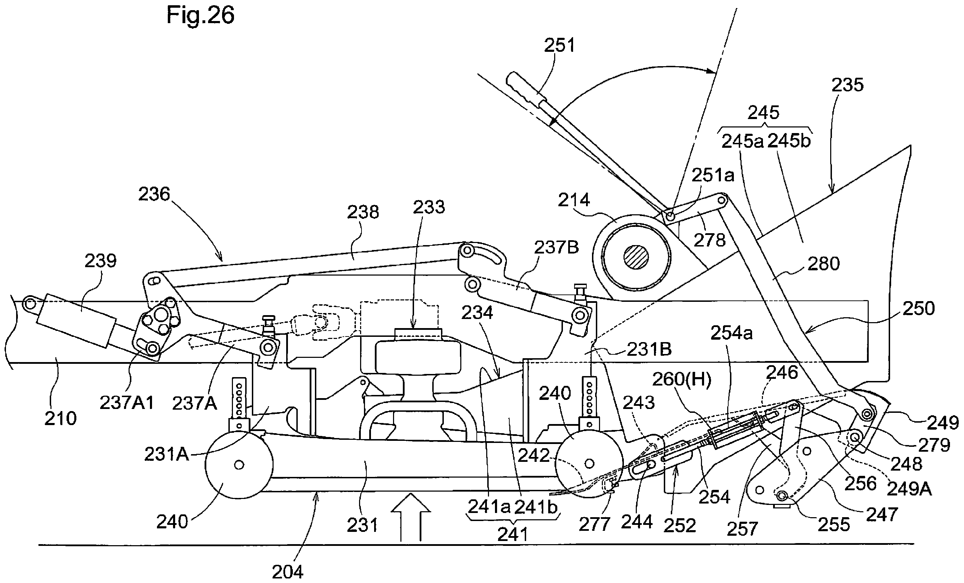

The bottom plate 246 of the duct 235 is configured so as to be able to change orientation in coordination with elevation of the mower 204 separately from the switch in orientation performed by operation of the second operation lever 251. Specifically, as shown in Figs. 24 and 26, a mower linking mechanism 252 that interlockingly links the mower 204 and the bottom plate 246 is provided so as to change the orientation of the bottom plate 246 in coordination with elevation of the mower 204. The mower linking mechanism 252 is provided at a position on the left outer side of the duct 235.

The mower linking mechanism 252 includes a push-pull link 254 having one end that is interlockingly linked to the left end portion of the pivot shaft 244 that supports the guide member 242, a pivot pin 255 provided in the support member 247, a first swing arm 256 that is pivotably connected to the other end portion of the push-pull link 254 and is swingably supported by the pivot pin 255, and a second swing arm 257 that is supported by the pivot pin 255 so as to be capable of swinging integrally with the first swing arm 256 and that has a swing end that abuts against the lower surface of the bottom plate 246. The push-pull link 254 includes a turn buckle portion 254a.

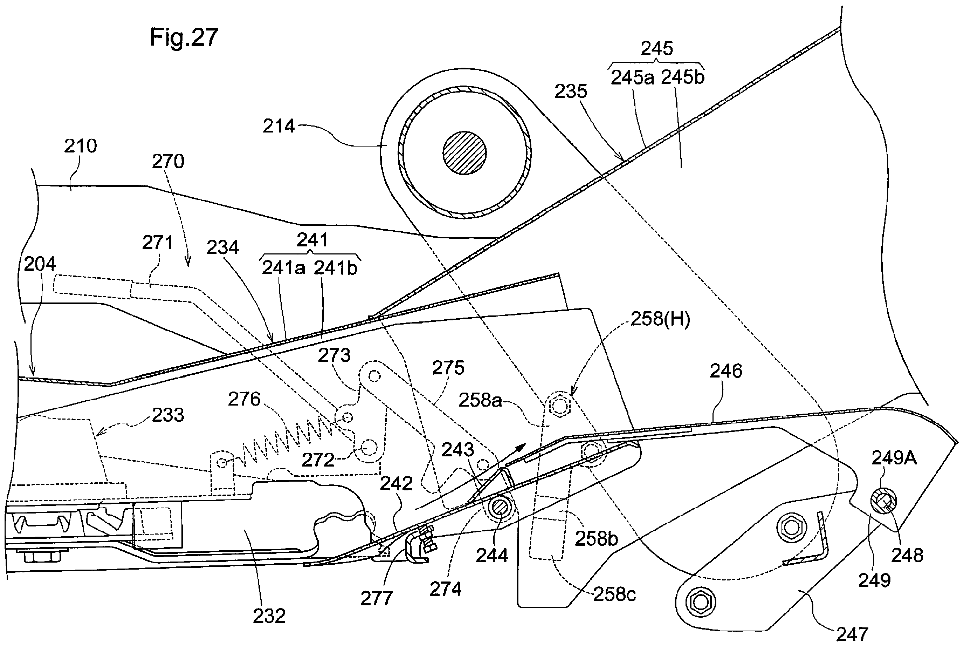

When the mower 204 is raised, the pivot shaft 244 is also raised and pushes the push-pull link 254, and thus the first swing arm 256 and the second swing arm 257 swing to change to an orientation in which front end of the bottom plate 246 rises (see Fig. 27). When the mower 204 is lowered, the pivot shaft 244 is also lowered and pulls the push-pull link 254, and thus the first swing arm 256 and the second swing arm 257 swing to change to an orientation in which front end of the bottom plate 246 descends (see Fig. 25). As a result, it is possible to prevent cases where the raising/lowering of the mower 204 causes damage to the bottom plate 246, causes cut grass to be discharged through a gap between the guide member 242 and the bottom plate 246, and the like.

The portion of the push-pull link 254 that is linked to the pivot shaft 244 is formed as an elongated hole, and even if an orientation switch is performed by operating the second operation lever 251, the guide member 242 does not swing in coordination, and even if the guide member 242 is swing, the bottom plate 246 does not swing in coordination.

### Deformation prevention member

As shown in Figs. 25, 28, 29 and 30, a duct stopper 258 is provided on the right side of the duct 235 and serves as a right-side deformation prevention member H that suppresses an outward change in orientation of the duct main body 245 by abutting against, from the laterally outward side, the duct main body 245 at the location of connection to the discharge portion 234 in the vicinity of the rear lower end portion of the right side surface 241b. As shown in Figs. 29 and 30, the duct stopper 258 is formed by a plate body that is bent so as to be approximately Z-shaped, and includes an upper attachment plate portion 258a, an intermediate portion 258b that is continuous with the lower portion of the attachment plate portion 258a and extends diagonally outward and downward, and an abutting portion 258c that is continuous with the lower portion of the intermediate portion 258b and extends along the right side surface of the duct main body 245. Also, a reinforcing rib 258d is integrally provided extending between the outer surface of the intermediate portion 258b and the outer surface of the abutting portion 258c.

The duct stopper 258 is provided in a manner in which the attachment plate portion 258a is coupled to the transmission case 214, and the abutting portion 258c abuts against or is in the vicinity of the right side surface 245b of the duct main body 245. The transmission case 214 is configured with a two-piece structure including two divided case portions 214A and 214B that are flange-coupled in order to facilitate the assembly of the chain-type transmission mechanism and the like. As shown in Fig. 29, the right and left divided case portions 214A and 214B are arranged such that flange portions formed at the division surfaces abut against each other, and are then coupled using a plurality of bolts Bo.

The attachment plate portion 258a of the duct stopper 258 is also fastened together by taking advantage of the flange coupling bolts Bo of the transmission case 214. Washers 259 are arranged between the duct stopper 258 and the transmission case 214 such that the abutting portion 258c is pressed against the right side surface 245b of the duct 235.

As shown in Figs. 28, 29 and 30, a U-shaped receiving member 260 is provided on the left side of the duct 235 and serves as a left-side deformation prevention member H that suppresses an outward change in orientation of the duct main body 245 by abutting against, from the laterally outward side, the duct main body 245 at the location of connection to the discharge portion 234 in the vicinity of the rear lower end portion of the left side surface 245b.

As described above, the mower linking mechanism 252 is provided on the left side of the duct 235. As shown in Figs. 28 and 30, the receiving member 260 is provided so as to be fixed to the push-pull link 254 of the mower linking mechanism 252. The receiving member 260 is constituted by an elongated plate-shaped member that includes bent portions 262 that are bent in the same direction at two end portions in the lengthwise direction, and has an approximately U-shaped structure overall. The push-pull link 254 is passed through insertion holes 263 (see Fig. 29) that are formed in the two bent portions 262, and the receiving member 260 is attached in a state of being integrally coupled to the outer side of the turn buckle portion 254a. The receiving member 260 is provided in the vicinity of the left side surface 245b of the duct main body 245. A slight gap is formed between the receiving member 260 and the side surface 245b so as to avoid interference with the side plate when the bottom plate 246 swings.

With the above configuration, an outward change in the orientation of the duct main body 245 can be suppressed by the duct stopper 258 abutting against the right side of the duct 235. An outward change in the orientation of the duct main body 245 can be suppressed by the receiving member 260 abutting against the left side of the duct 235.

### Variations of third embodiment

(1) In the above embodiment, the duct stopper 258, which serves as a deformation prevention member on the right side of the duct 235, is fastened together with the transmission case 214 using the flange coupling bolts Bo of the transmission case 214 that serves as the vehicle body-side fixing portion. As an alternative to the configuration, for example, a configuration is possible in which the duct stopper 258 is coupled to the transmission case 214 using dedicated fasteners that are provided separately, or another configuration is possible in which the duct stopper 258 is coupled to the vehicle body frame 210 as the vehicle body-side fixing portion instead of the transmission case 214. Also, instead of the deformation prevention member being provided in the vehicle body-side fixing portion, various configurations can be employed, such as a configuration in which the deformation prevention member extends around the lower side of the duct 235 and positionally holds and couples together the right and left side surfaces of the duct main body 245.
(2) Although the receiving member 260, which serves as the deformation prevention member on the left side of the duct 235, is provided in the push-pull link 254 in the configuration of the above embodiment. Alternatively, the receiving member 260 may be coupled to the transmission case 214 similarly to the duct stopper 258, or may be coupled to the vehicle body frame 210.

### FOURTH EMBODIMENT

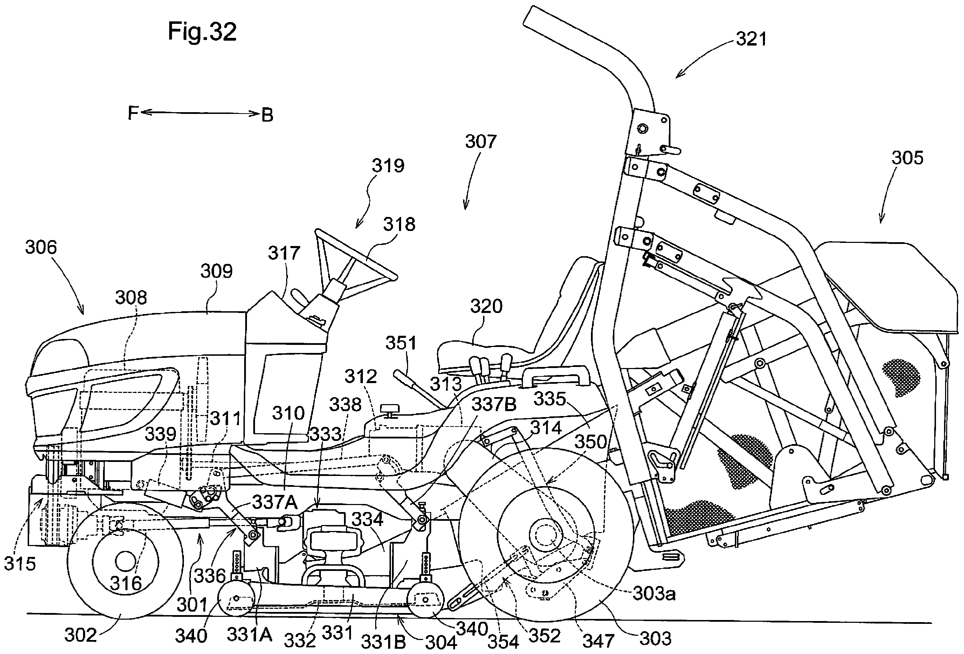

Hereinafter, a fourth embodiment will be described with reference to Figs. 32 to 42.

### Overall configuration

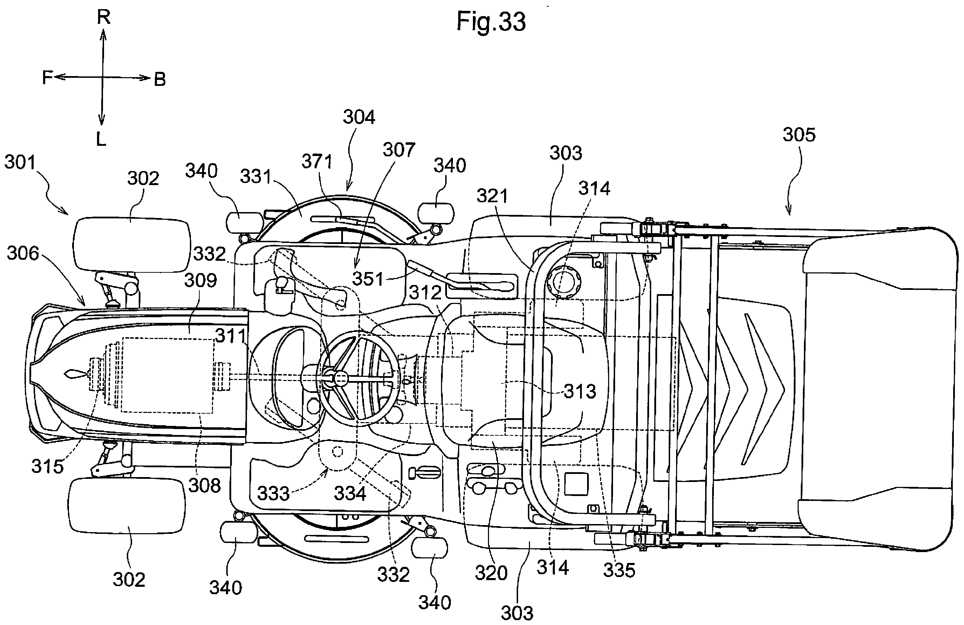

As shown in Figs. 32 and 33, a grass mower has a self-propelled configuration including a pair of right and left steerable front wheels 302 on the front side of a traveling vehicle body 301, and including a pair of right and left drivable rear wheel 303 on the rear side. A rear discharge type of mower 304 is attached by suspension so as to be capable of being raised and lowered, at a location between the front wheels 302 and the rear wheel 303 in the front-rear direction underneath the vehicle body. A grass collecting device 305, which is provided a grass collecting portion that stores grass cut by the mower 304, is arranged on the rear side of the traveling vehicle body 301.

A prime mover section 306 is provided in the front portion of the traveling vehicle body 301, and a boarding driving section 307 is provided behind the prime mover section 306. In the prime mover section 306, an engine 308 is mounted and supported to a vehicle body frame 310 in a state of being enclosed under an engine hood 309. Motive power output from the rear side of the engine 308 is input to a hydrostatic continuously variable transmission device (HST) 312 at a rearward position via a transmission shaft 311 that extends rearward. Output from the hydrostatic continuously variable transmission device 312 passes through a transmission case 313 provided in a rear portion and chain-type transmission mechanisms (not shown) that are included in right and left transmission cases 314, and is then transmitted to right and left rear wheel shafts 303a, thus driving the rear wheel 303. The transmission cases 314 are arranged extending rearward and diagonally downward from lateral side portions of the transmission case 313.

A power takeoff mechanism 315 constituted by a belt transmission mechanism is provided on the front side of the engine 308, and motive power from the engine 308 is transmitted to the mower device 304 via a power takeoff (PTO) shaft 316 provided in the power takeoff mechanism 315 and a transmission mechanism 333 provided above the mower 304.

The boarding driving section 307 is provided with a steering panel 317 that is continuous with the rear side of an engine hood 309, a steering portion 319 that includes a steering wheel 318 that enables steering the front wheels 302, and the like. A driver seat 320 is disposed behind the steering portion 319, and a ROPS (rollover protection structure) 321 is provided behind the driver seat 320.

### Mower configuration

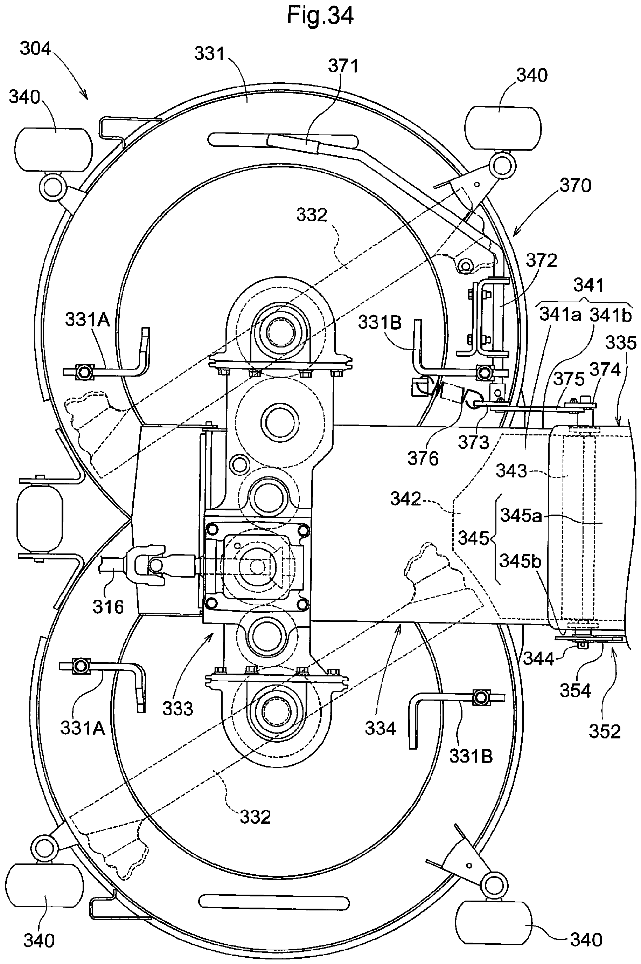

As shown in Fig. 34, the mower 304 has a structure including two blades 332 as mowing blades that are arranged side-by-side in the right-left direction in a mowing blade housing 331, the left blade 332 being driven to rotate clockwise and the right blade 332 being driven to rotate counter-clockwise. In this way, when the left blade 332 is driven to rotate clockwise and the right blade 332 is driven to rotate counter-clockwise, cut grass is carried by conveying wind generated by the rotation of the two blades 332 and is discharged rearward from a discharge portion 334 that is formed in the vicinity of the center of the rear portion of the mowing blade housing 331. The cut grass discharged from the discharge portion 334 is guided by a grass collection duct 335 that is connected to the discharge portion 334, and fed to and stored in the grass collecting container 305.

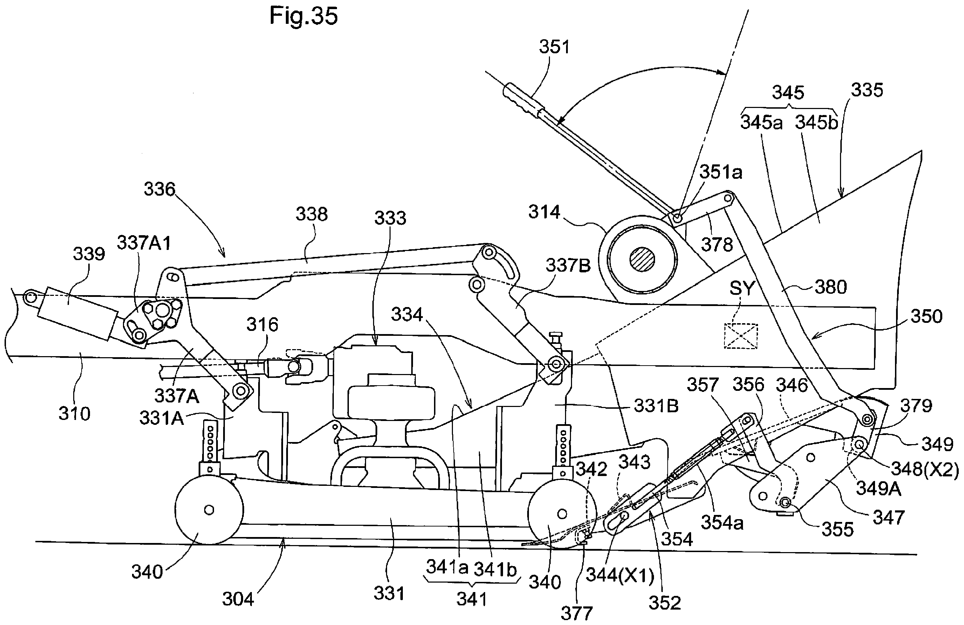

As shown in Fig. 35, the mower 304 is supported to the vehicle body frame 310 so as to be capable of being raised and lowered via an elevation link mechanism 336. The elevation link mechanism 336 includes one pair of front and rear swing links 337A and 337B on each of the right and left sides, and the upper end sides of the swing links are pivotably coupled to the vehicle body frame 310, whereas the lower end sides are pivotably coupled to the mowing blade housing 331.

A pair of right and left vertical extension portions 331A and 331B, which extend upward from the upper surface of the mowing blade housing 331, are provided upright on the upper portion of the mowing blade housing 331 at both locations on the front portion side and locations on the rear portion side. As shown in Fig. 34, the vertical extension portion 331A on the front portion side and the vertical extension portion 331B on the rear portion side are each constituted by a plate body that is bent into an "L" shape in a plan view, and are integrally coupled to the upper surface of the mowing blade housing 331 by welding.

The front swing link 337A has one end that is coupled to the vehicle body frame 310 of the traveling vehicle body 301 so as to be capable of swinging about a horizontal axis, and has another end that is coupled to the upper portion of the vertical extension portion 331A on the front portion side so as to be capable of swinging about a horizontal axis. The rear swing link 337B has one end that is coupled to the vehicle body frame 310 of the traveling vehicle body 301 so as to be capable of swinging about a horizontal axis, and has another end that is coupled to the upper portion of the vertical extension portion 331B on the rear portion side so as to be capable of swinging about a horizontal axis.

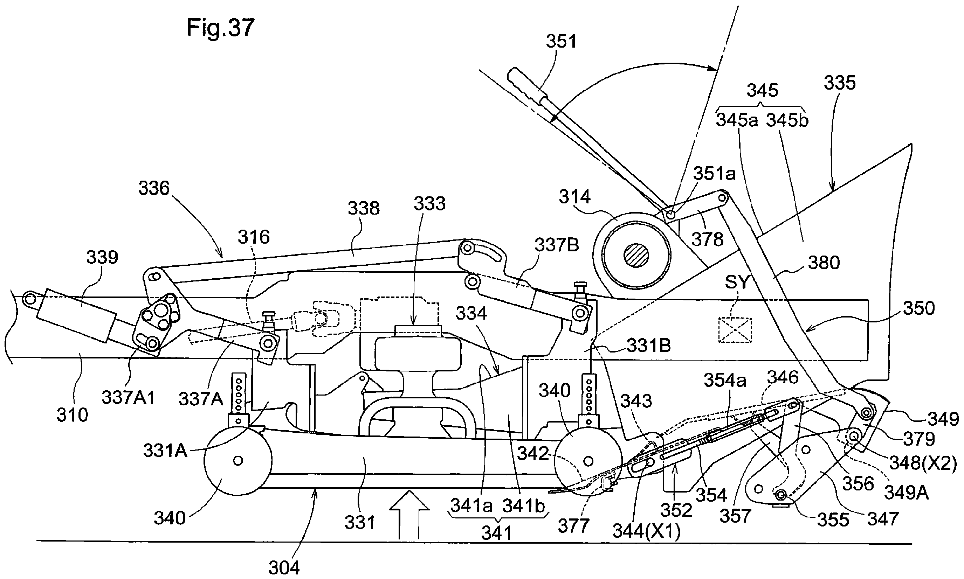

As shown in Fig. 34, the vertical extension portion 331A on the front portion side and the vertical extension portion 331B on the rear portion side are each constituted by a plate body that is bent into an "L" shape in a plan view, and are integrally coupled to the upper surface of the mowing blade housing 331 by welding. The vertical extension portion 331A on the front portion side and the vertical extension portion 331B on the rear portion side extend from the upper surface of the mowing blade housing 331 to a height substantially equivalent to the height of the mowing blade transmission mechanism 333. According to this configuration, as shown in Fig. 37, even when the mower 304 is raised to the maximum raised position, the upper end portion of the transmission mechanism 333 at a location corresponding to the vehicle body frame 310 does not interfere with the vehicle body frame 310, and it is possible to ensure a space for arranging the transmission mechanism 333 above the mowing blade housing 331.

Upper end sides of the front and rear swing links 337A and 337B are interlockingly coupled by a coupling rod 338, and a first end portion of an elevation hydraulic cylinder 339 is interlockingly coupled to an operation portion 337A1 formed in the front swing link 337A. A second end portion of the hydraulic cylinder 339 is pivotably coupled to the vehicle body frame 310. The mower 304 can be raised and lowered by causing the hydraulic cylinders 339 to extend and retract so as to swing the swing links 337A and 337B. When mowing is performed, gauge wheels 340 provided on the lower end portion of the mowing blade housing 331 come into contact with the ground, and thus the mower 304 follows the ground while performing mowing.

As shown in Figs. 34, 35 and 36, the discharge portion 334 is formed so as to extend rearward and diagonally upward from the rear portion of the mowing blade housing 331 in the center in the right-left direction. The discharge portion 334 includes a discharge portion main body 341 that is integrally coupled to the mowing blade housing 331, and a guide member 342 that forms the bottom portion of the discharge portion main body 341. The discharge portion main body 341 has a ceiling surface 341a and right and left side surfaces 341b, and is shaped as an inverted "U" in a view along the front-rear direction. Also, the plate-shaped guide member 342 is provided so as to cover the lower side of an interior space formed by the discharge portion main body 341. Accordingly, the discharge portion main body 341 and the guide member 342 form an approximately rectangular tube-shaped conveying passage that extends rearward and diagonally upward. An upward guiding surface 343 that guides cut grass upward is formed at an intermediate point along the conveying path of the guide member 342.

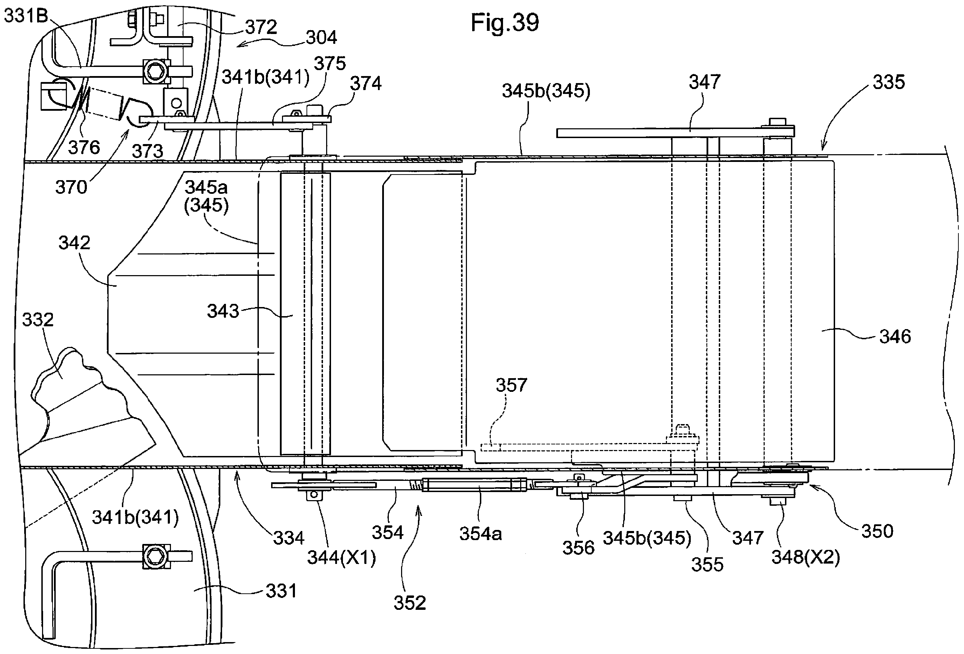

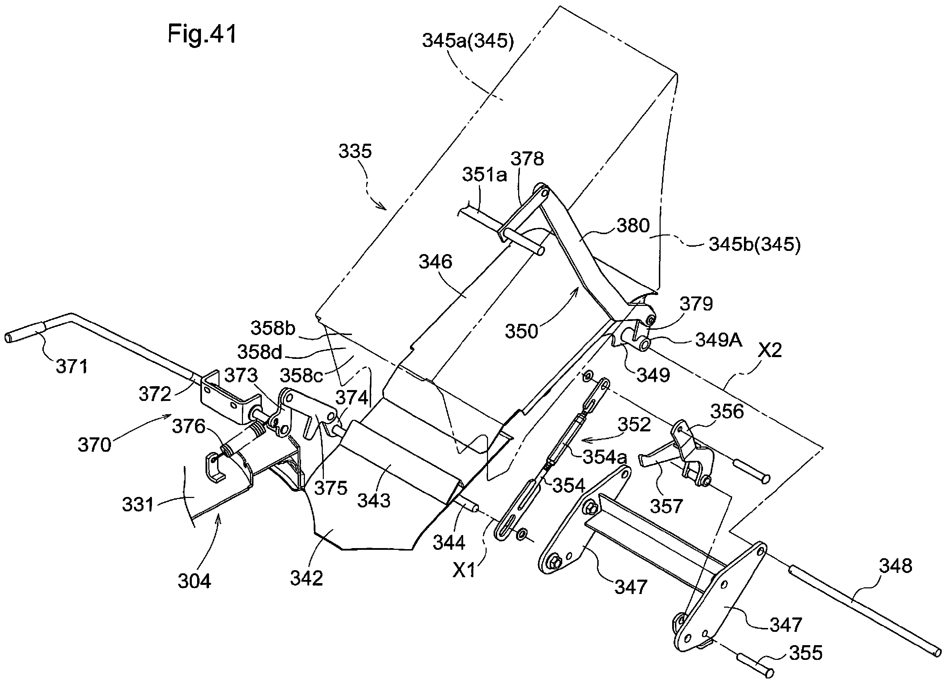

As shown in Figs. 39 and 41, the guide member 342 is supported by a pivot shaft 344 that extends between the right and left side surfaces 341b of the discharge portion main body 341, so as to be capable of swinging upward and downward about a first horizontal axis X1 relative to the mowing blade housing 331. The guide member 342 is linked to a first operation lever 371 that is provided in the vicinity of the driver seat 320 via a first linking mechanism 370, and the guide member 342 is configured to be capable of being swung by manually operating the first operation lever 371. If the discharge portion 334 becomes clogged with cut grass during mowing, the cut grass clog can be loosened and conveyed by swinging the first operation lever 371 upward and downward.

As shown in Figs. 34, 36 and 39, the first linking mechanism 370 includes the first operation lever 371 that has a pivot shaft portion 372 extending in the right-left direction and can swing upward and downward in the right-side rear portion of the mowing blade housing 331, a first arm 373 that is fixed to a left end portion of the pivot shaft portion 372, a second arm 374 that is fixed to a right end portion of the pivot shaft 344, a push-pull link 375 and a tension spring 376 that are linked to the first arm 373 and the second arm 374, and the like. Due to the action of the tension spring 376, the first arm 373 is biased so as to swing diagonally forward while also being restricted by an abutting portion 377, thus holding the guide member 342 in a backward inclined guiding orientation. When the first operation lever 371 is pulled and swung backward and upward, the guide member 342 can be swung against the biasing force of the tension spring 376 in the forward and upward direction from the backward inclined guiding orientation.

During mowing, if cut grass becomes affixed to the guide member 342 and accumulates so as to cause a clog in the discharge portion 334, the operator can, while sitting in the driver seat 320, swing the guide member 342 in the up-down direction by swinging the first operation lever 371 in the up-down direction, thus eliminating the affixed and accumulated cut grass.

### Grass collection duct

Next, the grass collection duct 335 will be described.

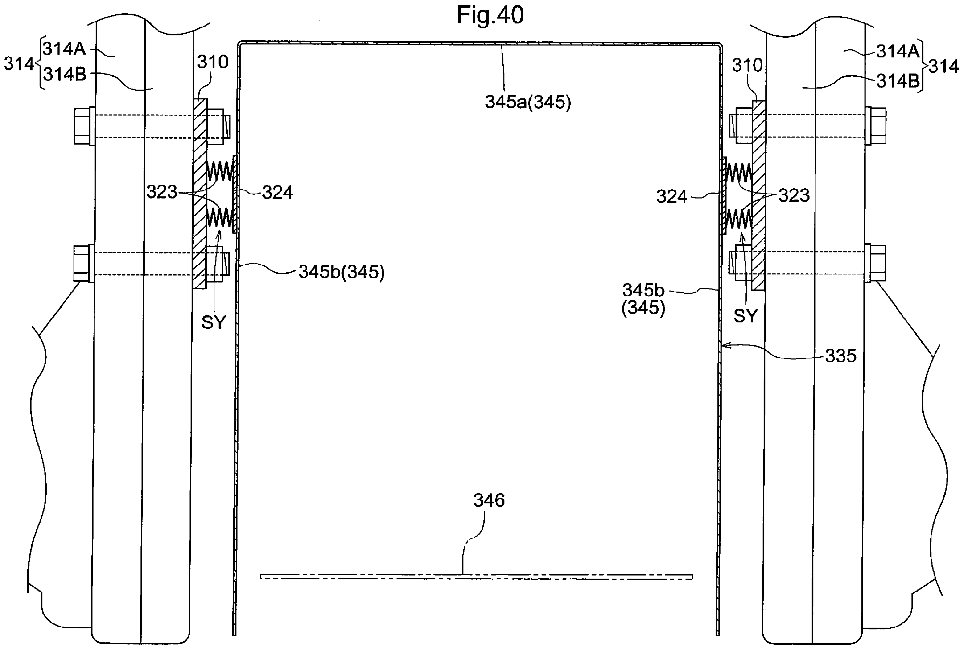

As shown in Figs. 34, 35, 36 and 39, the grass collection duct 335 is connected to and in communication with the discharge portion 334 formed in the mowing blade housing 331, and guides cut grass that is fed from the discharge portion 334. As shown in Figs. 32 and 40, the duct 335 is provided so as to extend in the front-rear direction in a space formed between the right and left transmission cases 314.

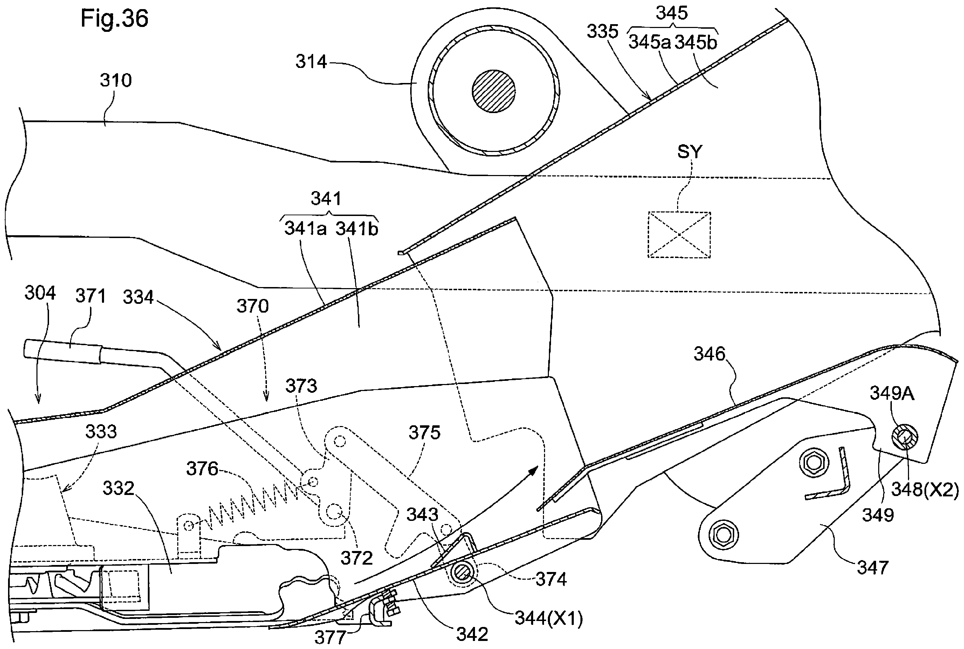

As shown in Figs. 36, 39 and 40, the duct 335 includes a duct main body 345 and a bottom plate 346. The duct main body 345 has a ceiling surface 345a and right and left side plates 345b, and is shaped as an inverted "U" in a view along the front-rear direction. Also, the plate-shaped bottom plate 346 is provided so as to cover the lower side of an interior space formed by the duct main body 345. Accordingly, similarly to the discharge portion 334 of the mower 304, an approximately rectangular tube-shaped conveying passage that extends rearward and diagonally upward is formed in an interior region that is enclosed by the duct main body 345 and the bottom plate 346.

As described above, the duct main body 345 is formed with an inverted "U" shape in a view along the front-rear direction, and there is a risk that the side place will become displaced outward in the lateral direction. In view of this, a gap suppressing member SY is provided for pressing the side plate 345b of the duct main body 345 of the duct 335 inward in the lateral direction. As shown in Fig. 40, the gap suppressing member SY is provided between the vehicle body frame 310, which is located on the laterally outward side of the duct main body 345, and the side plate 345b of the duct main body 345. The gap suppressing member SY has a plurality of coil springs 323, a plate body 324 that presses the side plate 345b using the biasing force of the coil springs 323, and the like. The side plate 345b is pressed inward in the lateral direction by the gap suppressing member SY, thus making it possible to avoid outward spreading of the side plate 345b.

Support members 347 are provided at fixed positions on the right and left outer sides of the duct 335. Although not shown, the support members 347 are supported at the fixed positions by being coupled to the vehicle body frame 310, a member fixed to the vehicle body frame 310, or the like. The bottom plate 346 of the duct 335 is supported by the right and left support members 347 so as to be capable of swinging upward and downward about a second horizontal axis X2. Specifically, as shown in Fig. 39, a pivot shaft 348 is provided so as to extend between the right and left support members 347. As shown in Fig. 36, right and left support arms 349 integrally extend backward from the lower surface of the bottom plate 346. Boss portions 349A are respectively provided on extending end portions of the right and left support arms 349, and are rotatably fitted around and supported to the pivot shaft 348.

The bottom plate 346 of the duct 335 is interlockingly coupled to a second operation lever 351, which is provided on the right side of the driver seat 320 and serves as a duct-side operation tool, via a second linking mechanism 350, and is configured to be rotated by operation of the second operation lever 351. As shown in Figs. 37 and 41, the second operation lever 351 is rotatably supported by a horizontal shaft portion 351a, and a first arm 378 is provided so as to integrally rotate with the left end portion of the horizontal shaft portion 351a. The second operation lever 351 is interlockingly linked to the second arm 379, which is coupled to the rotation boss portion 349a of the support arm 349, via a push-pull link 380. Accordingly, when the second operation lever 351 is swung, the bottom plate 346 also swings due to the interlocking structure of the second linking mechanism 350. As a result, similarly to the guide member 343, if the duct 335 becomes clogged with cut grass during mowing, the cut grass clog can be loosened and conveyed by swinging the second operation lever 351 upward and downward.

The bottom plate 346 of the duct 335 is configured so as to be able to change orientation in coordination with elevation of the mower 304 separately from the switch in orientation performed by operation of the second operation lever 351. Specifically, as shown in Figs. 37, 41 and 42, a mower linking mechanism 352 that interlockingly couples the mower 304 and the bottom plate 346 is provided so as to change the orientation of the bottom plate 346 in coordination with the raising and lowering of the mower 304. The mower linking mechanism 352 is provided at a position on the left outer side of the duct 335.

The mower linking mechanism 352 includes a push-pull link 354 having one end that is interlockingly linked to the left end portion of the pivot shaft 344 that supports the guide member 342, a pivot pin 355 provided in the support member 347, a first swing arm 356 that is pivotably connected to the other end portion of the push-pull link 354 and is swingably supported by the pivot pin 355, and a second swing arm 357 that is supported by the pivot pin 355 so as to be capable of swinging integrally with the first swing arm 356 and that has a swing end that abuts against the lower surface of the bottom plate 346. The push-pull link 354 includes a turn buckle portion 354a.

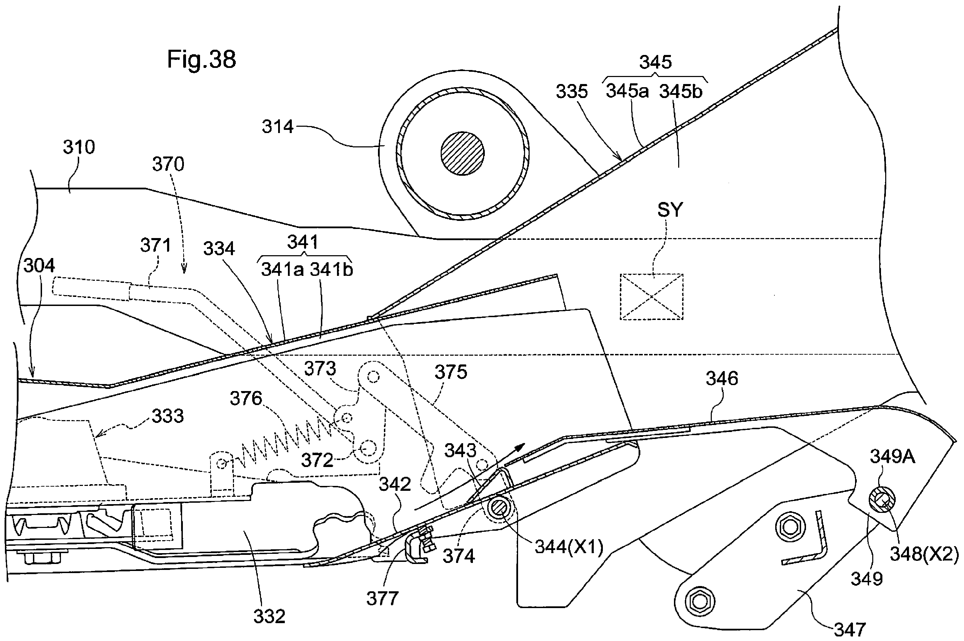

When the mower 304 is raised, the pivot shaft 344 is also raised and pushes the push-pull link 354, and thus the first swing arm 356 and the second swing arm 357 swing to change to an orientation in which front end of the bottom plate 346 rises (see Fig. 38). When the mower 304 is lowered, the pivot shaft 344 is also lowered and pulls the push-pull link 354, and thus the first swing arm 356 and the second swing arm 357 swing to change to an orientation in which front end of the bottom plate 346 descends (see Fig. 36). As a result, it is possible to prevent cases where the raising/lowering of the mower 304 causes damage to the bottom plate 346, causes cut grass to be discharged through a gap between the guide member 342 and the bottom plate 346, and the like.

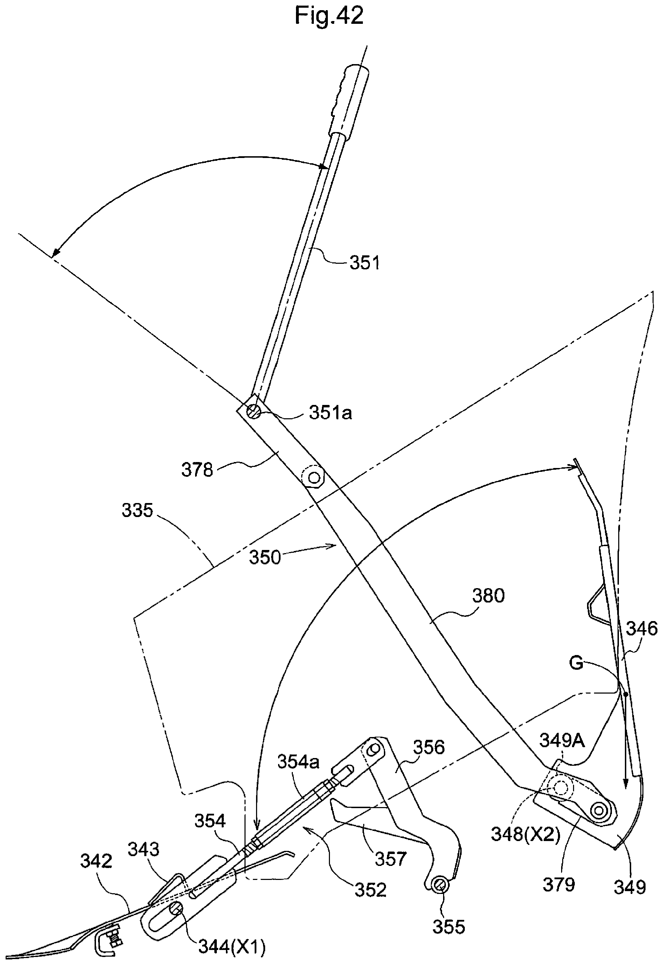

The bottom plate 346 of the duct 335 is capable of swinging between a cut grass guiding state (the state shown in Figs. 36 and 38) in which the front end portion is continuous with the guide member 342, which is the bottom plate of the discharge portion 334, and a retracted state (the state shown in Fig. 42) in which the front end portion rotates upward such that a center of gravity G is located rearward of the position of the second horizontal axis X2. Specifically, as shown in Fig. 42, when the bottom plate 346 is swung to the retracted state, due to its own weight, the bottom plate 346 enters a state in which rotation biasing force acts toward the opposite side (backward side) compared to the cut grass guiding state due to its own weight, and even if a hand releases the second operation lever 351, the orientation and position can be held.

When mowing ends, if the cut grass remaining in the discharge portion 334 is to be discharged to the outside, the bottom plate 346 of the duct 335 is switched to the retracted state to free the bottom portion, and when the guide member 342 of the discharge portion 334 is swung, the cut grass can be easily discharged.

### Variations of fourth embodiment

(1) Although the gap suppressing member SY that presses the side plate 345b of the duct 335 inward in the lateral direction is provided in the above embodiment, a configuration is possible in which such a member is not provided.
(2) Although the bottom plate 346 of the duct 335 can be switched to the retracted state in which the front end portion is rotated upward such that the center of gravity becomes located rearward of the second horizontal axis position in the above embodiment, alternatively a configuration is possible in which the bottom plate 346 of the duct 335 always returns to the cut grass guiding state when a hand releases the second operation lever 351.
(3) Although the mower 304 is raised and lowered by operation of the hydraulic cylinder 339 in the above embodiment, alternatively, if a lift arm is provided in order to raise and lower a back-side work apparatus attached to the vehicle body rear portion, a configuration is possible in which the lift arm is coupled to a link mechanism such that the mower is raised and lowered in accordance with the raising and lowering of the lift arm.
(4) The grass mower may be configured as a semi-crawler type including right and left crawlers instead of the right and left rear wheel 303. Also, an electric motor configuration including an electric motor instead of an engine may be employed, and a hybrid configuration including the engine 308 and an electric motor is also possible. Furthermore, the grass mower may have an automatic travelling configuration including an automatic driving system.
(5) The mower 304 may be configured to include a single blade 332 or three or more blades 332, and may have a configuration including a disk-shaped mowing blade or the like instead of the blade 332.

### FIFTH EMBODIMENT

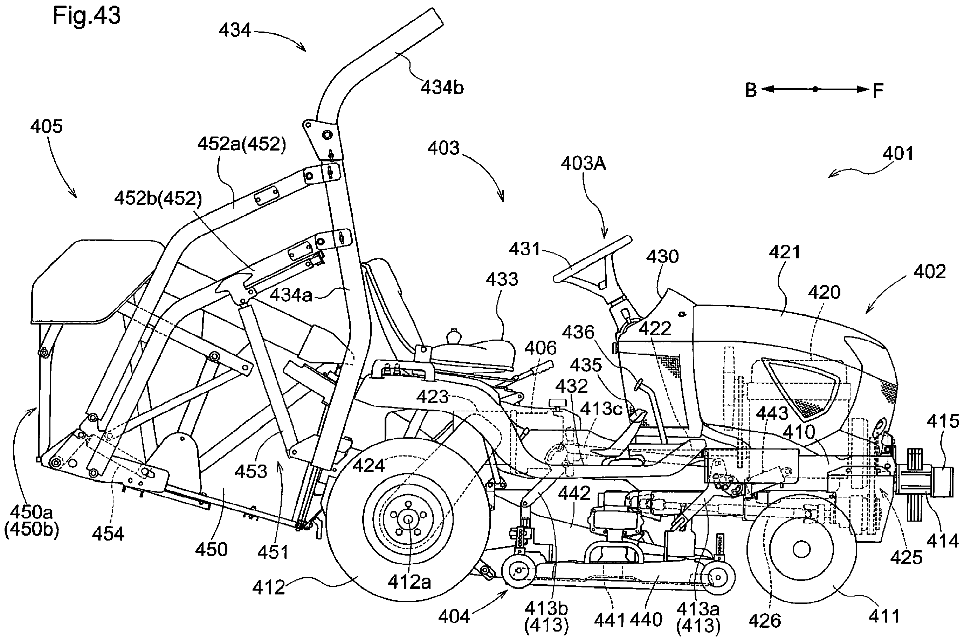

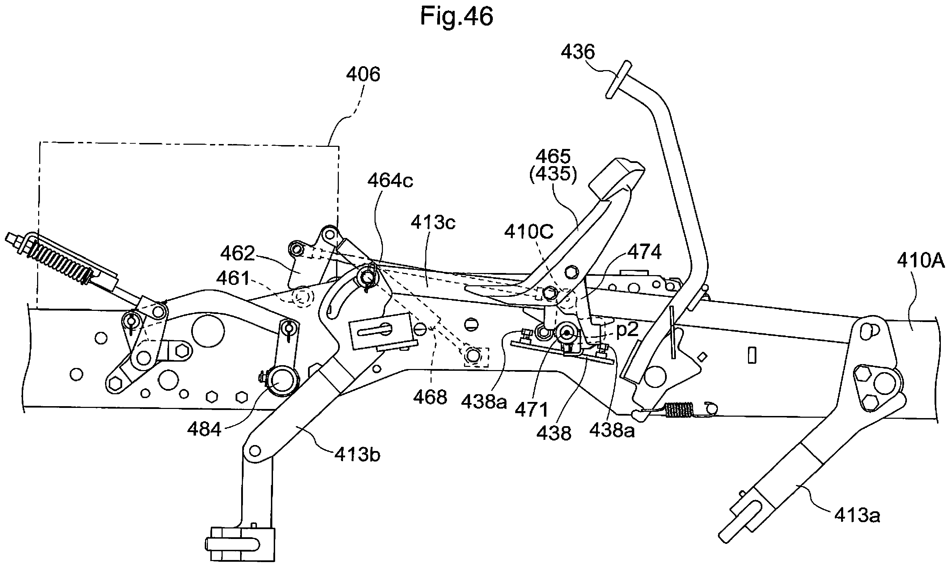

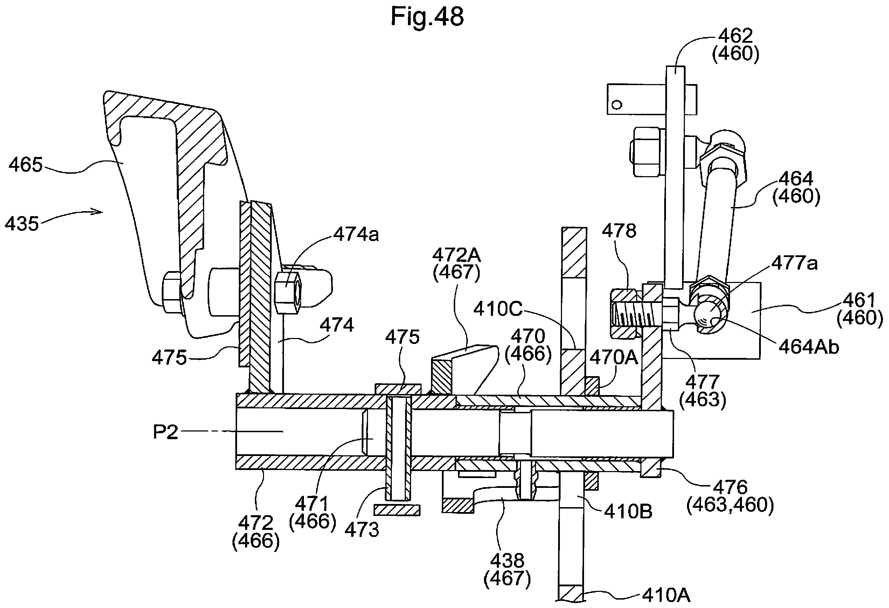

Hereinafter, a fifth embodiment will be described with reference to Figs. 43 to 50.

### Overall configuration of riding grass mower

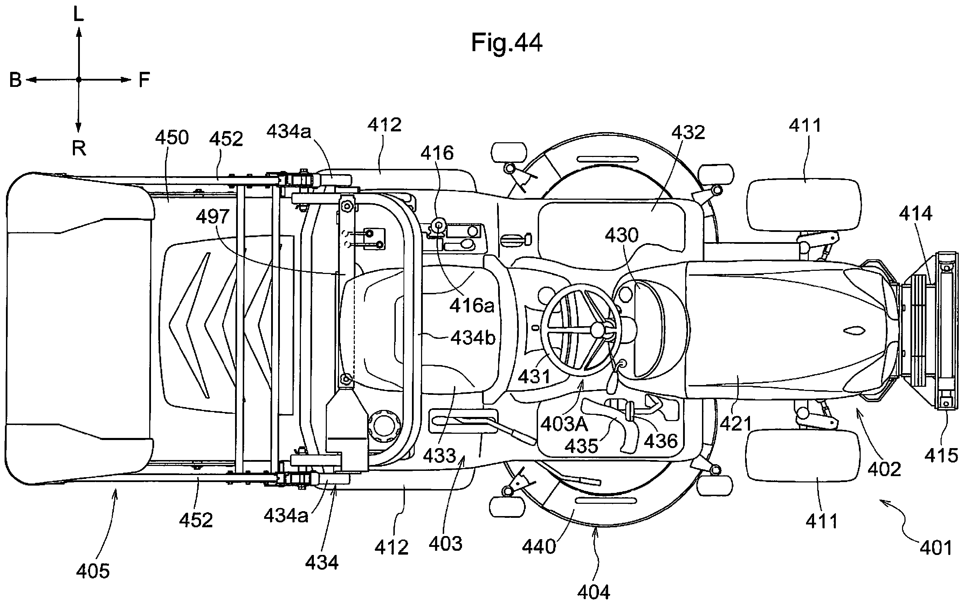

Fig. 43 is an overall side view of a riding grass mower serving as a work vehicle, and Fig. 44 is an overall plan view of the riding grass mower. This riding grass mower has a self-propelled configuration including a pair of right and left steerable front wheels 411 on the front side of a vehicle body frame 410 of a traveling vehicle body 401, and including a pair of right and left drivable rear wheel 412 on the rear side.

A rear discharge type of mower device 404 is attached by suspension so as to be capable of being raised and lowered, at a location between the front wheels 411 and the rear wheel 412 in the front-rear direction underneath the vehicle body frame 410. A grass collecting device 405 that stores grass cut by the mower device 404 is provided on the rear side of the traveling vehicle body 401.

As shown in Figs. 43 and 44, a prime mover section 402 is provided in the front portion above the vehicle body frame 410 of the traveling vehicle body 401, and a boarding driving section 403 is provided behind the prime mover section 402.

In the prime mover section 402, an engine 420 is mounted to the vehicle body frame 410 in a state of being enclosed under an engine hood 421. Motive power output from the rear side of the engine 420 is input to a hydrostatic continuously variable transmission device 406 at a rearward position via a main transmission shaft 422, and output from the hydrostatic continuously variable transmission device 406 passes through a transmission case 423 that includes a gear transmission mechanism, and is transmitted to a rear wheel shaft 412a that is supported to right and left rear wheel shaft cases 424, thus driving the rear wheel 412.

The front wheels 411 are steered by a power steering device (not shown) that operates in accordance with operations performed on a steering wheel 431 provided in the boarding driving section 403.

In this configuration, motive power for work can be extracted from the front side of the engine 420. Specifically, a power takeoff mechanism 425 constituted by a belt transmission mechanism is provided on the front side of the engine 420, and motive power from the engine 420 is transmitted to the mower device 404 via a power takeoff (PTO) shaft 426 provided in the power takeoff mechanism 425.

The boarding driving section 403 behind the prime mover section 402 is provided with a steering portion 403A that includes the steering wheel 431, a steering panel 430 that is continuous with the rear side of the engine hood 421, and the like. The driver seat 433 is disposed behind the steering portion 403A, at a position above a boarding step 432 positioned at foot level, and a ROPS (rollover protection structure) 434 is provided upright behind the driver seat 433.

The ROPS 434 has an upside-down U shape in a front view, and includes right and left columnar leg portions 434a having lower end sides that are coupled and fixed to a pair of right and left ROPS bases (not shown) that are integrated with the rear end portion of the vehicle body frame 410. The upper end portion sides of the right and left columnar leg portions 434a are connected to each other by an upside-down U-shaped upper frame 434b, thus covering the region above the driver seat 433.

A guard frame 415, which serves as a protection member for the front portion of the vehicle body, is provided at the front portion of the vehicle body frame 410.

The guard frame 415 is provided with a balance weight attachment portion 414 to which balance weights can be attached.

### Boarding driving section

As shown in Figs. 43 and 44, the riding driving section 403 is provided with a transmission operation pedal 435 and a brake pedal 436 at locations at foot level toward the right side of the steering portion 403A above the boarding step 432. A parking brake pedal 437 is arranged at foot level on the left side of the steering portion 403A.

The transmission operation pedal 435 is linked to the hydrostatic continuously variable transmission device 406 via a later-described gear shift operation mechanism 460, and gear shift operations are input to the hydrostatic continuously variable transmission device 406 by pressing the transmission operation pedal 435.

The brake pedal 436 and the parking brake pedal 437 are linked to a travel braking device (not shown) via a brake linking mechanism 480. The brake linking mechanism 480 will be described later.

### Mower device

The mower device 404 includes a housing 440 that is supported by suspension to the vehicle body frame 410 via a link device 413 so as to be capable of being raised and lowered.

The link device 413 includes front links 413a that are coupled to right and left sides of the front portion of the mower device 404, rear links 413b that are coupled to the right and left sides of the rear portion of the mower device 404, and coupling links 413c that interlink the front links 413a and the rear links 413b on the right and left sides, and furthermore, mower lift cylinders 443 are coupled to the upper end portions of the front links 413a.

The vertical height position of the housing 440 relative to the vehicle body frame 410 can be changed by extension and retraction of the mower lift cylinders 443.

A pair of right and left rotating blades 441 are arranged in the housing 440. The rotating blades 441 rotate about a vertical axis and are arranged such that portions of the rotation paths thereof are overlapped with each other, and when driven to rotate at the same speed, the rotating blades 441 cut grass and produce conveying wind by the rotating movement, and the conveying wind discharges the cut grass rearward from a discharge opening formed in the rear portion of the housing 440.

### Grass collecting device

As shown in Figs. 43 and 44, the grass collecting device 405 includes a grass collecting container 450 that stores cut grass, and an elevation drive mechanism 451 that operates so as to enable the grass collecting container 450 to be raised and lowered relative to the traveling vehicle body 401, and to enable the discharging of cut grass.

The grass collecting container 450 includes a receiving opening (not shown) on the front end side for receiving cut grass that is supplied from the mower device 404 via the conveying duct 442, a discharge opening 450a on the rear end side, and an opening/closing lid 450b that covers the discharge opening 450a.

The elevation drive mechanism 451 includes elevation links 452 that couple the grass collecting container 450 to the ROPS 434 provided at the rear side of the traveling vehicle body 401, lift cylinders 453 that raise and lower the elevation links 452 relative to the ROPS 434, and dump cylinders 454 that are for changing the orientation of the grass collecting container 450 relative to the elevation links 452 from a nearly horizontal collecting orientation to a backward inclined orientation, and are also for opening and closing the opening/closing lid 450b of the grass collecting container 450.

The elevation links 452 includes a pair of right and left upper links 452a and a pair of right and left lower links 452b, and the front end sides of the upper links 452a and the lower links 452b are detachably coupled to the upper portion of the ROPS 434, and the rear portion sides are coupled to a lower portion in the vicinity of the rear end side of the grass collecting container 450. The upper end portions of the lift cylinders 453, which are constituted by hydraulic cylinders, are coupled to the lower links 452b, and when the lift cylinders 453 extend and retract, the elevation links 452 swing, and the grass collecting container 450 is raised and lowered.

The dump cylinders 454, which are constituted by hydraulic cylinders, are arranged at the lower side of the rear end side of the grass collecting container 450. Due to the dump cylinders 454 extending and retracting, the grass collecting container 450 can swing about swing support points p1 arranged in the lower portion on the rear end side. End portions on one side of the dump cylinders 454 are coupled to a known dump operation mechanism (not shown) such that the orientation of the grass collecting container 450 can accordingly be switched between a backward inclined discharge orientation in which the front end side is lifted up, and a collecting orientation in which the front end side is lowered so as to be nearly horizontal.

The lift cylinders 453 and the dump cylinders 454 are provided in right-left pairs, and are disposed in a hydraulic circuit so as to operate in synchronization on the right and left sides.

The hydrostatic continuously variable transmission device 406, the power steering device, the lift cylinder 453, the dump cylinder454, and the mower lift cylinder 443 receive hydraulic oil from a hydraulic oil supply pump (not shown) that is driven by motive power from the engine 420.

The hydrostatic continuously variable transmission device 406 has a known structure in which a variable capacity (variable displacement) hydraulic pump (not shown), which is driven by motive power from the engine 420 similarly to the hydraulic oil supply pump, and a variable capacity hydraulic motor (not shown) are connected in a closed circuit.

### Gear shift operation mechanism

A gear shift operation mechanism 460 links the hydrostatic continuously variable transmission device 406 and the transmission operation pedal 435 provided in the boarding driving section 403, and is configured as follows.

The gear shift operation mechanism 460 includes a gear shift arm 462 provided on a gear shift operation shaft 461 of the hydrostatic continuously variable transmission device 406, an operation output portion 463 that is integrally linked with pressing of the transmission operation pedal 435, and a link rod 464 that couples the gear shift arm 462 to the operation output unit 463 such that the operation of the gear shift arm 462 is linked with the operation output portion 463.

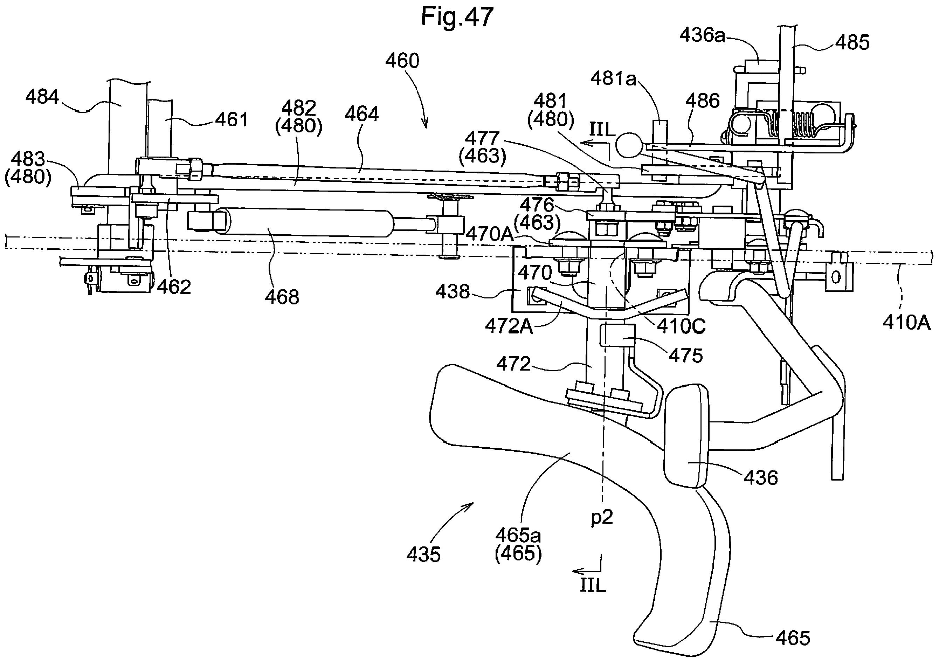

As shown in Figs. 47 to 49, the transmission operation pedal 435 includes a pressing plate 465a (corresponding to an operation input portion) that is located on the laterally outward side of the right-side main frame 410A of the vehicle body frame 410, the operation output portion 463 that is located on the vehicle body inward side relative to the main frame 410A, and a transmission shaft portion 466 that couples the pressing plate 465 and the operation output portion 463 to each other.

The transmission shaft portion 466 includes a boss portion 470 having a support hole 410B that is formed in the main frame 410A and extends in the right-left direction, a pivot shaft 471 that is inserted into the boss portion 470 and can rotate relative thereto, a cylinder shaft 472 that is fitted around the pivot shaft 471 and is located laterally outward of the boss portion 470, and a rotation prevention pin 473 that passes through the cylinder shaft 472 and the pivot shaft 471 in the diameter direction.

The boss portion 470 includes a fixing flange portion 470A that abuts against the vehicle body-inward side surface of the main frame 410A, and is fixedly coupled to the main frame 410A in a non-rotating manner via the fixing flange portion 470A and a plurality of fixing bolts 470B. The pivot shaft 471 and the cylinder shaft 472, which are integrated by the rotation prevention pin 473, are supported to the boss portion 470 so as to be capable of relative rotation about an axis p2 of the pivot shaft 471 (corresponding to the swing support point of the transmission operation pedal).

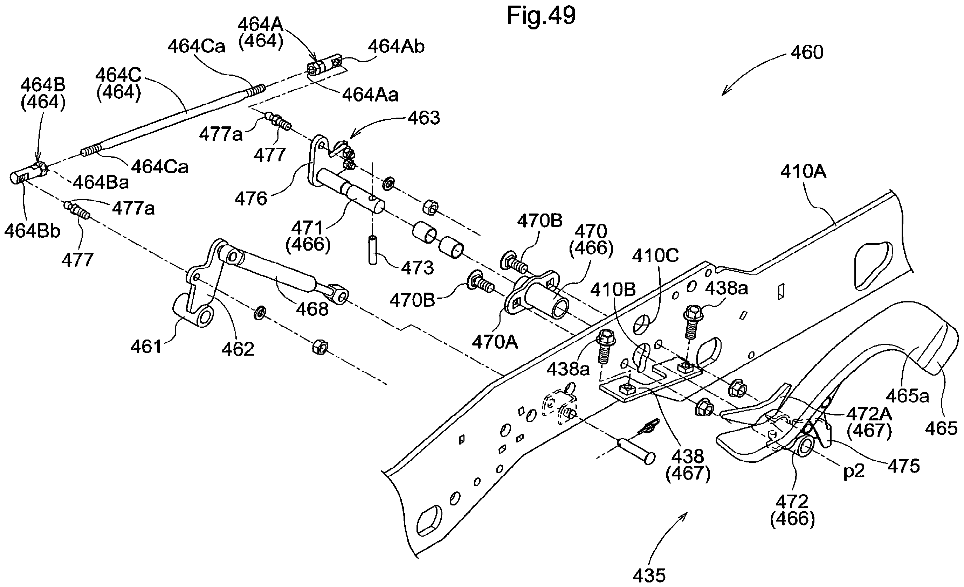

Furthermore, as shown in Figs. 47 and 49, in the transmission shaft portion 466, a swing restriction piece 472A that extends in the front-rear direction is fixed by welding to the outer circumferential surface of the cylinder shaft 472. A restriction bracket 438 is fixed by welding to the laterally outward side of the main frame 410A at a location corresponding to the lower side of the boss portion 470. The restriction bracket 438 is provided with pair of right and left adjuster bolts 438a, and it is possible to adjust the protruding length of the adjuster bolts that protrude from the upper surface of the restriction bracket 438.

The restriction bracket 438 operates along with a swing restriction piece 472A fixed to the cylinder shaft 472 so as to configure a swing restriction mechanism 467 that sets an allowable swing angle range of the transmission operation pedal 435.

The allowable swing angle range of the transmission operation pedal 435 set by the swing restriction mechanism 467 is set to a range approximately the same as the maximum swing angle range of a swash plate (not shown) when the gear shift operation shaft 461 of the hydrostatic continuously variable transmission device 406 rotates, or a range smaller than this maximum swing angle range, that is to say, is set to a range that does not exceed the maximum swing angle range of the swash plate.

Accordingly, even if the transmission operation pedal 435 is subjected to strong pressing for rotation beyond the operation limit, that strong pressing force is stopped at the location where the adjuster bolts 438a of the restriction bracket 438 abut against the swing restriction piece 472A. As a result, there is little risk of an excessive load being applied to the swash plate of the hydrostatic continuously variable transmission device 406.

The pressing plate 465 has a pressing surface 465a, a pedal arm 474 is provided upright on the outer circumferential surface of the cylinder shaft 472 that is fitted around the pivot shaft 471 and is located laterally outward of the boss portion 470, and the pressing plate 465 is fixedly coupled to the upper end portion of the pedal arm 474 via two fixing bolts 474a.

A pin press fitting 475 is integrally fixed to the laterally outward side of the pedal arm 474 with use of the fixing bolts 474a. The pin press fitting 475 extends so as to surround the outer circumferential surface of the cylinder shaft 472 at a location facing the two end portions of the rotation prevention pin 473 that passes through the cylinder shaft 472 and the pivot shaft 471 in the diameter direction.

The operation output portion 463 is configured to be capable of rotating integrally with the pivot shaft 471 that is supported to the boss portion 470, which is fixed to the main frame 410A, so as to be capable of relative rotation.

The operation output portion 463 includes a swing arm 476 having a lower end side that coupled to the pivot shaft 471 at a position exposed from the end portion of the boss portion 470 that projects inward, with respect to the vehicle body width direction, of the main frame 410A, and a coupling shaft member 477 that is attached to the upper portion of the swing arm 476. The coupling shaft member 477 includes a ball-shaped spherical coupling portion 477a having a spherical shape at the protruding end portion, and the spherical coupling portion 477a is coupled to the link rod 464.

The link rod 464 includes a front-end shaft portion 464A, a back-end shaft portion 464B, and an intermediate shaft portion 464C. A male thread portion 464Ca is provided at the two end portions of the intermediate shaft portion 464C, female thread portions 464Aa and 464Ba are provided on the front-end shaft portion 464A and the back-end shaft portion 464B, and these thread portions can be mated with each other to form a single rod-shaped member. The length of the link rod 464 can be adjusted by adjusting the extent to which the female thread portions 464Aa and 464Ba of the front-end shaft portion 464A and the back-end shaft portion 464B are mated to the male thread portions 464Ca of the intermediate shaft portion 464C.

The front-end shaft portion 464A is provided with a joint portion 464Ab at the location of coupling to the coupling shaft member 477 provided at the upper portion of the swing arm 476. The back-end shaft portion 464B is provided with a joint portion 464Bb at the location of coupling to the coupling shaft member 477 provided at the upper portion of the gear shift arm 462. The joint portions 464Ab and 464Bb include spherical receiving recession portions that can be fitted around the ball-shaped spherical coupling portions 477a. A ball-joint structure is configured by fitting the joint portions 464Ab and 464Bb to the spherical coupling portions 477a. Accordingly, the link rod 464 is coupled such that the orientation can be changed relative to the swing arm 476 and the gear shift arm 462.

The gear shift arm 462 has a lower portion that is coupled and fixed to the gear shift operation shaft 461. One end side of the damper 468 is coupled along with the link rod 464 to the upper portion of the gear shift arm 462. The other end side of the damper 468 is coupled to the main frame 410A.

The biasing direction of the damper 468 is directed such that the gear shift arm 462, which swings in accordance with forward and backward movement of the transmission operation pedal 435, is returned to the neutral return side, that is to say the gear shift operation shaft 461 of the hydrostatic continuously variable transmission device 406 is returned to the neutral position.

### Neutral reference hole

In the case of including the gear shift operation mechanism 460 having the above-described configuration, in the present invention, a neutral reference hole 410C is formed in the right-side main frame 410A of the vehicle body frame 410 that includes the transmission operation pedal 435.

The neutral reference hole 410C is provided at a position that corresponds to the location where the front-end shaft portion 464A of the link rod 464 and the coupling shaft member 477 provided at the upper portion of the swing arm 476 are coupled in the state where the hydrostatic continuously variable transmission device 406 is located at the neutral position.

The neutral reference hole 410C is formed at a location that is above the axis p2 of the pivot shaft 471, which is corresponds to the swing support point of the transmission operation pedal 435, and is furthermore below the pressing surface 465a that is exposed above the boarding step 432.

Also, the neutral reference hole 410C is used when inserting a tool from laterally outside the main frame 410A to fasten and unfasten a fastening fixing nut 478 at the location where the front-end shaft portion 464A of the link rod 464 is coupled to the coupling shaft member 477 provided at the upper portion of the swing arm 476.

The transmission operation pedal 435 and the gear shift operation shaft 461 are interlockingly coupled with use of the neutral reference hole 410C as described below.

First, while the transmission operation pedal 435 is located at the center in the swing operation angle thereof, the fastening fixing nut 478 is fastened at the location where the front-end shaft portion 464A of the link rod 464 is coupled to the coupling shaft member 477 provided at the upper portion of the swing arm 476.

Next, the gear shift arm 462 is moved to a state where the hydrostatic continuously variable transmission device 406 is operated to the neutral position. The length of the link rod 464 is adjusted by adjusting the extent of mating of the female thread portions 464Aa and 464Ba of the front-end shaft portion 464A and the back-end shaft portion 464B to the male thread portion 464Ca of the intermediate shaft portion 464C, and the length-adjusted link rod 464 is coupled to the upper portion of the gear shift arm 462 in the aforementioned state.

The link device 413, which is used to suspend the mower device 404, is detached from the vehicle body frame 410 before a tool is inserted into the neutral reference hole 410C from the laterally outward side.

The link device 413, which suspends and supports the mower device 404, includes the front link 413a, the rear link 413b, and the coupling link 413c. The coupling link 413c is located at a position that is below the boarding step 432 that extends along the upper edge of the main frame 410A, and that is above the axis p2 of the pivot shaft 471 that corresponds to the swing support point of the transmission operation pedal 435, and that furthermore is laterally outward of the main frame 410A and faces the laterally outward side of the neutral reference hole 410C.

Accordingly, by removing the coupling link 413c, it is possible to ensure a large space on the laterally outward side of the neutral reference hole 410C and facilitate the insertion of the tool and the like.

### Brake linking mechanism

As shown in Fig. 47, the brake pedal 436 is linked to the travel braking device via the brake linking mechanism 480.

The brake linking mechanism 480 includes an operation body 481 that operates in coordination with the pivot shaft 436a of the brake pedal 436, a brake operation arm 483 that applies braking force to the rear wheel 412, and a brake rod 482 that transmits the movement of the operation body 481 to the brake operation arm 483.

Accordingly, the force of pressing the brake pedal 436 is transmitted to the brake operation arm 483 via the operation body 481, which operates in coordination with the pivot shaft 436a, and the brake rod 482. The brake operation arm 483 is supported to an interlock shaft 484 that extends in the right-left direction, and is capable of rotating integrally therewith. The force of pressing the brake pedal 436 is branched to the right and left via the interlock shaft 484, and thus braking force can be applied to the right and left rear wheel 412 at the same time.

Also, a parking operation rod 481a for the parking brake is integrated with the operation body 481.

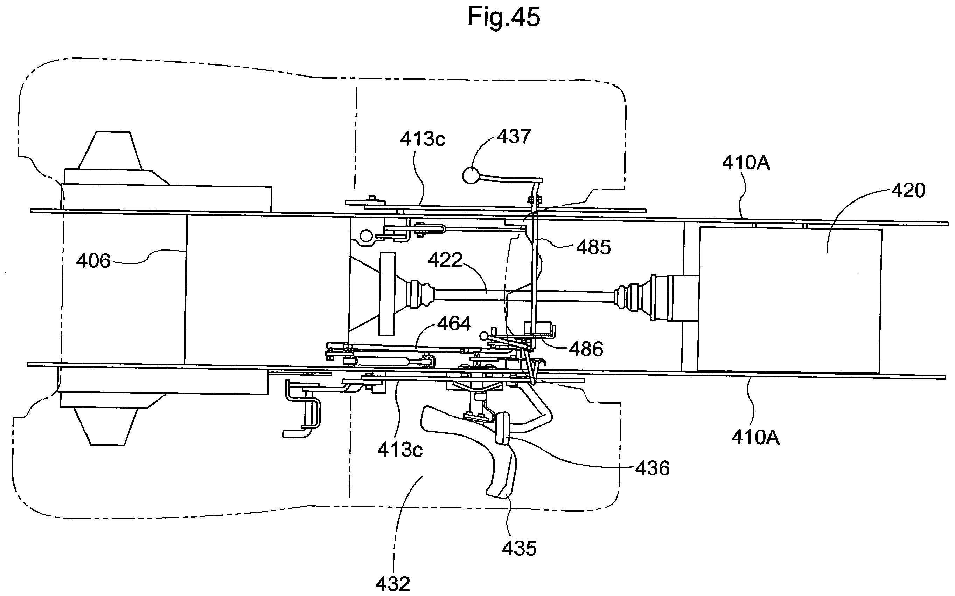

As shown in Fig. 45, the parking brake pedal 437 is arranged at the left-side front portion of the boarding step 432.

The parking brake pedal 437 is coupled to the left end portion of an operation shaft 485 that extends in the right-left direction, and can swing upward and downward about the axis of the operation shaft 485. A hook 486 is integrally attached to the operation shaft 485, which rotates in coordination with the pressing of the parking brake pedal 437.

Accordingly, while the brake pedal 436 has been pressed, if the parking brake pedal 437 is pressed, the hook 486, which operates is coordination with the pressing of the parking brake pedal 437, engages with the parking operation rod 481a of the operation body 481. In other words, the hook 486 engages with the parking operation rod 481a of the operation body 481, and thus the parking brake pedal 437 is linked to the travel braking device via the brake linking mechanism 480.

Accordingly, even when the pressing of the brake pedal 436 stops, the operation body 481 maintains the braking operation state of the brake operation arm 483 via the brake rod 482. As a result, the travel braking device can serve as a parking brake.

### Harness terminal cap

A terminal cap 429 is attached to the terminal portion of a harness 428 for a starter motor 427 in the prime mover section 402.

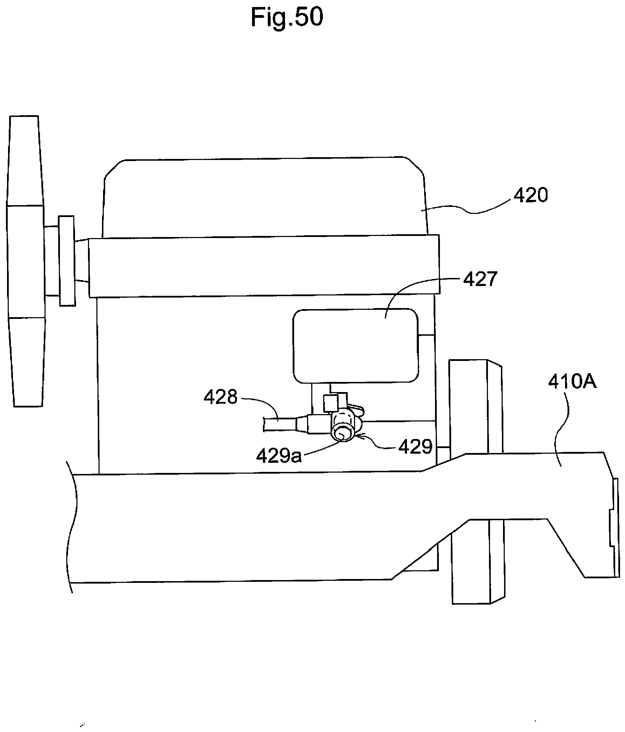

As shown in Fig. 50, the terminal cap 429 has a water drain opening 429a that is formed in the central portion of the terminal cap 429 in a side view. This facilitates avoiding the risk of rainwater or the like accumulating in the terminal cap 429.

### Variations of fifth embodiment

(1) Although the neutral reference hole 410C is configured by a round hole provided at one location in the main frame 410A in the above embodiment, the present invention is not necessarily limited to this structure. For example, the neutral reference hole 410C may be formed by an elongated hole instead of a round hole or by a cutout, and may be provided at a plurality of locations.
   It is sufficient that other configurations are similar to the configurations in the embodiment described above.
(2) In the above embodiment, an example is described in which the structure for connecting the link rod 464 to the swing arm 476 and the gear shift arm 462 is a ball-joint structure in which the joint portions 464Ab and 464Bb are fitted to the spherical coupling portions 477a, but the present invention is not necessarily limited to this structure. For example, a simple shaft support structure or a structure employing a universal joint may be employed.

It is sufficient that other configurations are similar to the configurations in the embodiment described above.

### SIXTH EMBODIMENT

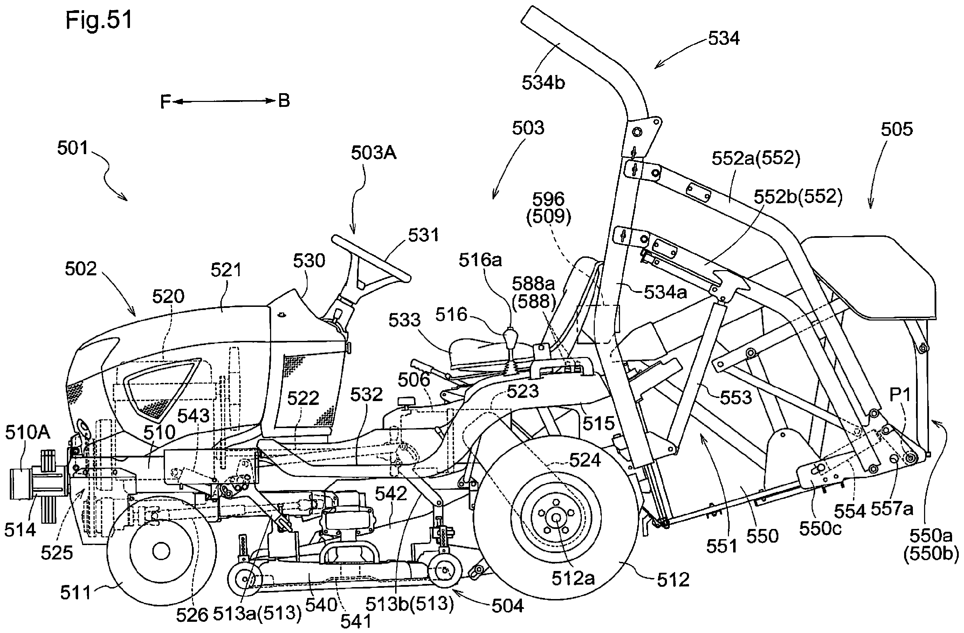

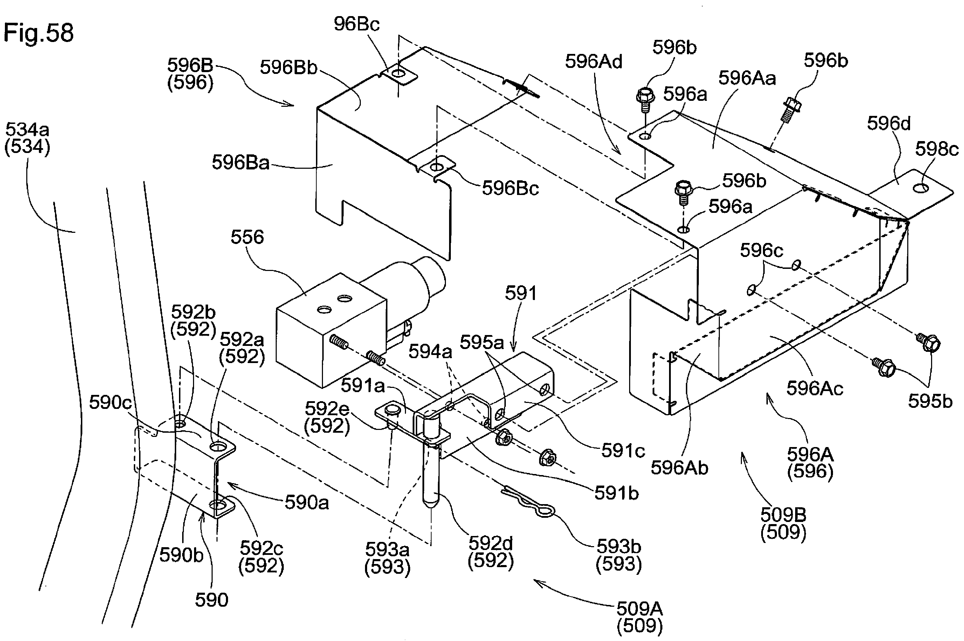

Hereinafter, a sixth embodiment will be described with reference to Figs. 51 to 63.

The configuration of this embodiment is applicable to various types of riding grass mowers from large models to small models.

### Overall configuration of riding grass mower

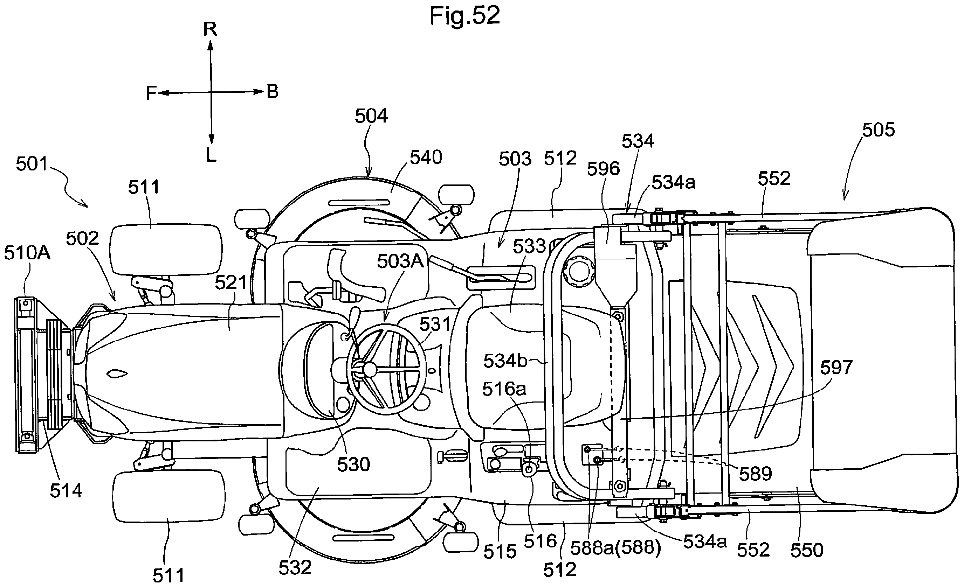

Fig. 51 is an overall side view of a riding grass mower, and Fig. 52 is an overall plan view of the riding grass mower. This riding grass mower has a self-propelled configuration including a pair of right and left steerable front wheels 511 on the front side of a vehicle body frame 510 of a traveling vehicle body 501, and including a pair of right and left drivable rear wheel 512 on the rear side.

A rear discharge type of mower device 504 is attached by suspension so as to be capable of being raised and lowered, at a location between the front wheels 511 and the rear wheel 512 in the front-rear direction underneath the vehicle body frame 510. A grass collecting device 505 that stores grass cut by the mower device 504 is provided on the rear side of the traveling vehicle body 501.

As shown in Figs. 51 and 52, a prime mover section 502 is provided in the front portion above the vehicle body frame 510 of the traveling vehicle body 501, and a boarding driving section 503 is provided behind the prime mover section 502.

In the prime mover section 502, an engine 520 is mounted to the vehicle body frame 510 in a state of being enclosed under an engine hood 521. Motive power output from the rear side of the engine 520 is input to a hydrostatic continuously variable transmission device 506 at a rearward position via a main transmission shaft 522, and output from the hydrostatic continuously variable transmission device 506 passes through a transmission case 523 that includes a gear transmission mechanism, and is transmitted to a rear wheel shaft 512a that is supported to right and left rear wheel shaft cases 524, thus driving the rear wheel 512.

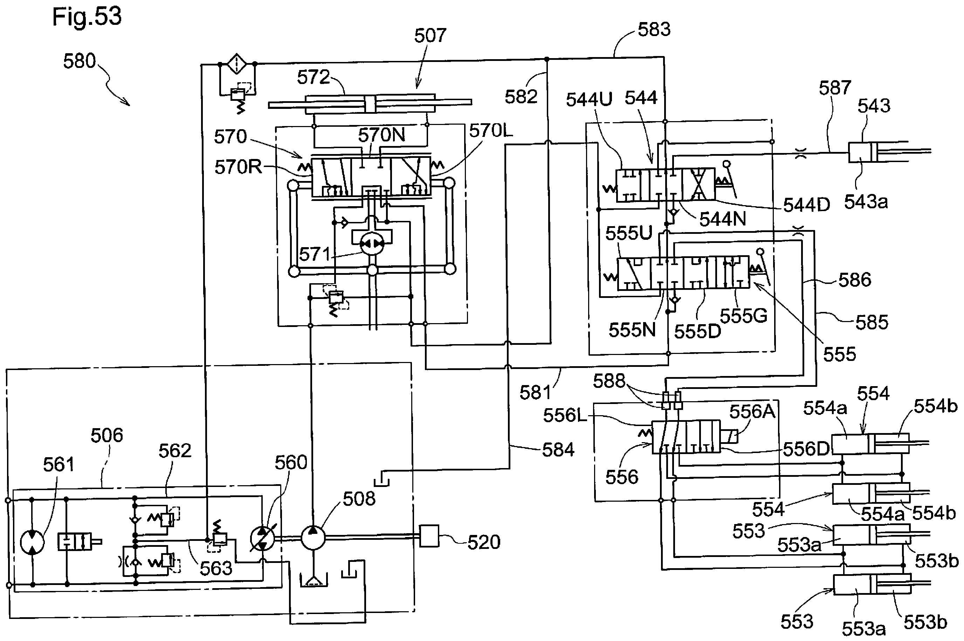

The front wheels 511 are steered by a power steering device 507 (see Fig. 53) that operates in accordance with operations performed on a steering wheel 531 provided in the boarding driving section 503.

In this configuration, motive power for work can be extracted from the front side of the engine 520. Specifically, a power takeoff (PTO) mechanism 525 constituted by a belt transmission mechanism is provided on the front side of the engine 520, and motive power from the engine 520 is transmitted to the mower device 504 via a PTO shaft 526 provided in the power takeoff mechanism 525.

The boarding driving section 503 behind the prime mover section 502 is provided with a steering portion 503A that includes the steering wheel 531, a steering panel 530 that is continuous with the rear side of the engine hood 521, and the like. The driver seat 533 is disposed behind the steering portion 503A, at a position above a boarding step 532 positioned at foot level, and a ROPS (rollover protection structure) 534 is provided upright behind the driver seat 533.

The ROPS 534 has an upside-down U shape in a front view, and includes right and left columnar leg portions 534a having lower end sides that are coupled and fixed to a pair of right and left ROPS bases (not shown) that are integrated with the rear end portion of the vehicle body frame 510. The upper end portion sides of the right and left columnar leg portions 534a are connected to each other by an upside-down U-shaped upper frame 534b, thus covering the region above the driver seat 533. An intermediate coupling frame 534c that couples the right and left columnar leg portions 534a to each other is provided at a position between the right and left columnar leg portions 534a in the up-down direction.

A guard frame 510A, which serves as a protection member for the front portion of the vehicle body, is provided at the front portion of the vehicle body frame 510.

The guard frame 510A is provided with a balance weight attachment portion 514 to which balance weights can be attached.

### Mower device

The mower device 504 includes a housing 540 that is supported by suspension so as to be capable of being raised and lowered relative to the vehicle body frame 510 via a link mechanism 513 that includes a pair of one front link 513a and one rear link 513b on each of the right and left sides.

Mower lift cylinders 543 are coupled to the upper end portions of the front links 513a of the link mechanism 513. The vertical height position of the housing 540 relative to the vehicle body frame 510 can be changed by extension and retraction of the mower lift cylinders 543.

A pair of right and left rotating blades 541 are arranged in the housing 540. The rotating blades 541 rotate about a vertical axis and are arranged such that portions of the rotation paths thereof are overlapped with each other, and when driven to rotate at the same speed, the rotating blades 541 cut grass and produce conveying wind by the rotating movement, and the conveying wind discharges the cut grass rearward from a discharge opening formed in the rear portion of the housing 540.

### Grass collecting device

As shown in Figs. 51 and 52, the grass collecting device 505 includes a grass collecting container 550 that stores cut grass, and an elevation drive mechanism 551 that operates so as to enable the grass collecting container 550 to be raised and lowered relative to the traveling vehicle body 501, and to enable the discharging of cut grass.

The grass collecting container 550 includes a receiving opening (not shown) on the front end side for receiving cut grass that is supplied from the mower device 504 via the conveying duct 542, a discharge opening 550a on the rear end side, and an opening/closing lid 550b that covers the discharge opening 550a.

The elevation drive mechanism 551 includes elevation links 552 that couple the grass collecting container 550 to the ROPS 534 provided at the rear side of the traveling vehicle body 501, lift cylinders 553 (corresponding to hydraulic actuators) that raise and lower the elevation links 552 relative to the ROPS 534, and dump cylinders 554 (corresponding to hydraulic actuators) that are for changing the orientation of the grass collecting container 550 relative to the elevation links 552 from a nearly horizontal collecting orientation to a backward inclined orientation, and are also for opening and closing the opening/closing lid 550b of the grass collecting container 550.

The elevation links 552 includes a pair of right and left upper links 552a and a pair of right and left lower links 552b, and the front end sides of the upper links 552a and the lower links 552b are detachably coupled to the upper portion of the ROPS 534, and the rear portion sides are coupled to a lower portion in the vicinity of the rear end side of the grass collecting container 550. The upper end portions of the lift cylinders 553, which are constituted by hydraulic cylinders, are coupled to the lower links 552b, and when the lift cylinders 553 extend and retract, the elevation links 552 swing, and the grass collecting container 550 is raised and lowered.

The dump cylinders 554, which are constituted by hydraulic cylinders, are arranged at the lower side of the rear end side of the grass collecting container 550. Due to the dump cylinders 554 extending and retracting, the grass collecting container 550 can swing about swing support points p1 arranged in the lower portion on the rear end side. End portions on one side of the dump cylinders 554 are coupled to a known dump operation mechanism (not shown) such that the orientation of the grass collecting container 550 can accordingly be switched between a backward inclined discharge orientation in which the front end side is lifted up, and a collecting orientation in which the front end side is lowered so as to be nearly horizontal.

The lift cylinders 553 and the dump cylinders 554 are provided in right-left pairs, and are disposed in a hydraulic circuit so as to operate in synchronization on the right and left sides.

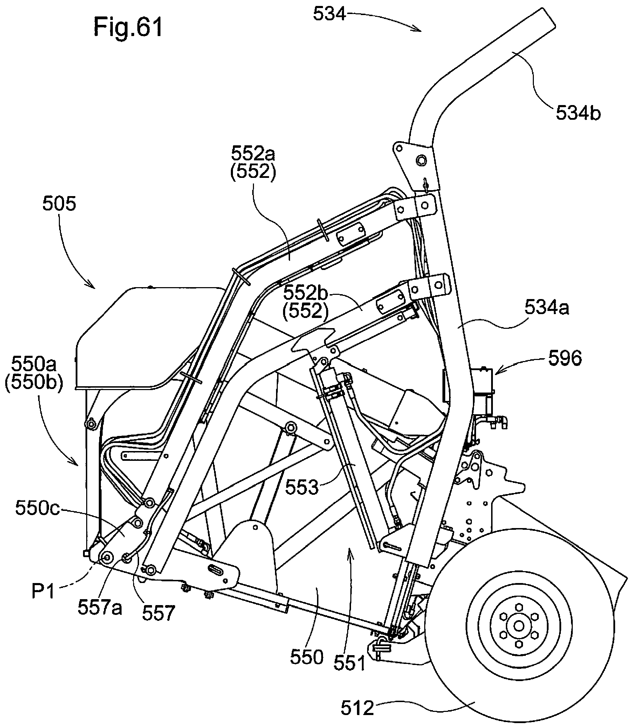

As shown in Fig. 61, the grass collecting device 505 is provided with a pivot support frame 550c that supports a swing support point p1 of the grass collecting container 550. The pivot support frame 550c is provided with a harness insertion hole 557a into which a wire harness 557 for connection to a full sensor (not shown) can be inserted.

The harness insertion hole 557a serves as a holding member for maintaining a portion of the wire harness 557 at a location in the vicinity of the swing support point p1 of the grass collecting container 550. In this way, due to a portion of the wire harness 557 being maintained at a location in the vicinity of the swing support point p1 of the grass collecting container 550, only a small amount of change in the extension/retraction of the wire harness 557 is required for a change in the orientation of the grass collecting container 550 about the swing support point p1. Accordingly, there is little risk of the wire harness 557 being pulled strongly or becoming very slack.

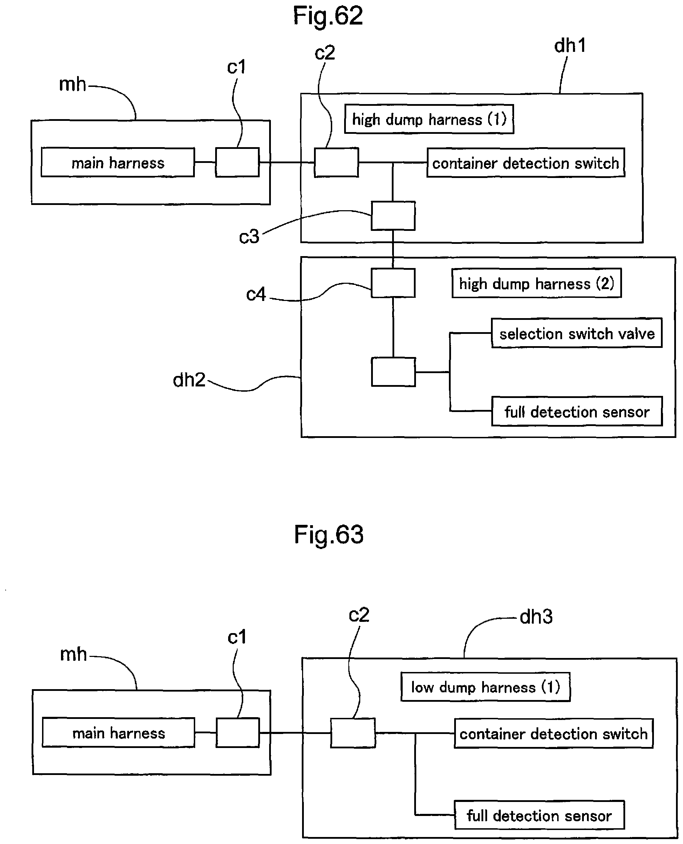

As shown in Fig. 62, the wire harness 557 includes a main harness mh that is connected to a control circuit (not shown) provided on the traveling vehicle body 501, a first wire harness dh1 that is connected to a box detection switch that detects whether or not the high-dump grass collecting container 550 is attached, and a second wire harness dh2 to which a full detection sensor and a later-described selection switch valve 556 are connected.

The main harness mh, the first wire harness dh1, and the second wire harness dh2 are detachably connected using wire connectors c1, c2, c3, and c4.

Among the main harness mh, the first wire harness dh1, and the second wire harness dh2, the main harness mh and the first wire harness dh1 are attached to the traveling vehicle body 501, and the second wire harness dh2 is attached to the detachably grass collecting device 505, not to the traveling vehicle body 501.

In this way, the functionality on the main harness mh side can be simplified by connecting the full detection sensor and the selection switch valve 556 to the second wire harness dh2 and providing the high-dump box detection switch in the first wire harness dh1.

Accordingly, if a low-dump grass collecting device 505 is connected to the traveling vehicle body 501 for example, as shown in Figs. 62 and 63, the main harness mh can be used as-is, and a third wire harness dh3 that includes a low-dump box detection switch and a full detection sensor can be connected to the main harness mh.

In other words, the same main harness mh can be used both when a high-dump grass collecting device 505 is coupled to the traveling vehicle body 501 and when a low-dump grass collecting device 505 is coupled.

### Hydraulic oil supply/discharge circuit

The hydrostatic continuously variable transmission device 506, the power steering device 507, the lift cylinder 553, the dump cylinder 554 and the mower lift cylinder 543 receive hydraulic oil from a hydraulic oil supply pump 508 that is driven by motive power from the engine 520. The following describes a hydraulic oil supply/discharge circuit 580 (see Fig. 53) along which hydraulic oil from the hydraulic oil supply pump 508 is supplied and discharged.

The hydrostatic continuously variable transmission device 506 has a known structure in which a variable capacity (variable displacement) hydraulic pump 560, which is driven by motive power from the engine 520 similarly to the hydraulic oil supply pump 508, and a variable capacity hydraulic motor 561 are connected in a closed circuit 562. A charge circuit 563 for replenishing hydraulic oil is connected to the closed circuit 562.

As shown in Fig. 53, hydraulic oil discharged from the hydraulic oil supply pump 508 is supplied to a steering control valve 570 of the power steering device 507.

The steering control valve 570 is switched to any one of three positions, including a neutral position 570N, a right turn position 570R and a left turn position 570L, in accordance with operations performed on the steering wheel 531. At this time, in accordance with the operated amount of the steering wheel 531, a metering pump 571 supplies an amount of hydraulic oil that corresponds to the operated amount of the steering wheel 531 to a steering cylinder 572 of the power steering device 507, and thus the front wheels 511 are steered to an angle that corresponds to the operated amount of the steering wheel 531.

While the steering wheel 531 has been operated to a "straight forward" position, the steering control valve 570 is located at the neutral position 570N. In this state, the entire amount of oil supplied from the hydraulic oil supply pump 508 flows to a first oil passage 581. The first oil passage 581 is connected to the lift cylinders 553, the dump cylinders 554 and the mower lift cylinder 543 on the downstream side, and can supply hydraulic oil to the lift cylinders 553, the dump cylinders 554 and the mower lift cylinder 543.

While the steering wheel 531 has been operated to a "right turn" or a "left turn" position, the steering control valve 570 is located at the right turn position 570R or the left turn position 570L.

In this state, one part of the hydraulic oil supplied from the hydraulic oil supply pump 508 flows to the first oil passage 581, and the other part of the hydraulic oil flows to a second oil passage 582. In other words, hydraulic oil supplied from the hydraulic oil supply pump 508 is supplied to both the first oil passage 581 and the second oil passage 582, and the hydraulic oil that flows to the second oil passage 582 is supplied to the charge circuit 563 of the hydrostatic continuously variable transmission device 506.

The first oil passage 581 is provided with a lift operation valve 555 as a control valve for controlling the operation of hydraulic actuators, and is provided with a selection switch valve 556 (corresponding to an electromagnetic valve for hydraulic oil supply/discharge) and a mower lift operation valve 544 on the downstream side of the lift operation valve 555.

The selection switch valve 556 is configured for selectively switching a control target between the lift cylinders 553 and the dump cylinders 554, and is configured by a manually operable solenoid valve.

The mower lift operation valve 544 is configured for switching the mower lift cylinder 543 between driven rising and self-weight lowering, and is configured by a three-way switch valve.

The lift operation valve 555 has a neutral position 555N having a center by-passable configuration, a raising position 555U, a lowering position 555D and a self-weight lowering position 555G.

As shown in Fig. 53, in the state where the selection switch valve 556 selectively connects the lift cylinders 553, and the mower lift operation valve 544 is at a neutral position 544N, hydraulic oil flows as follows at the various operation positions of the lift operation valve 555.

At a neutral position 555N, hydraulic oil flows downstream along the center by-pass passage, passes through the center by-pass passage of the mower lift operation valve 544, and is then supplied to the third oil passage 583. The third oil passage 583 is connected to the charge circuit 563 of the hydrostatic continuously variable transmission device 506, and therefore hydraulic oil supplied to the third oil passage 583 is used as charge oil.

When the lift operation valve 555 is operated to the raising position 555U, hydraulic oil in the first oil passage 581 is supplied to raising chambers 553a of the lift cylinders 553 via a fifth oil passage 585, the lift cylinders 553 extend, and the grass collecting container 550 is raised. Hydraulic oil in lowering chambers 553b of the lift cylinders 553 is returned to the lift operation valve 555 via a sixth oil passage 586, and is then supplied to the third oil passage 583 via the center by-pass passage.

When the lift operation valve 555 is operated to the lowering position 555D, hydraulic oil in the first oil passage 581 is supplied to the lowering chambers 553b of the lift cylinders 553 via the sixth oil passage 586, the lift cylinders 553 retract, and the grass collecting container 550 is lowered. Hydraulic oil in the raising chambers 553a of the lift cylinders 553 is returned to the lift operation valve 555 via the fifth oil passage 585, and is then supplied to the third oil passage 583 via the center by-pass passage.

When the lift operation valve 555 is operated to the lowering position 555D, hydraulic oil in the first oil passage 581 is supplied to the lowering chambers 553b of the lift cylinders 553 via the sixth oil passage 586, the lift cylinders 553 retract, and the grass collecting container 550 is lowered. Hydraulic oil in the raising chambers 553a of the lift cylinders 553 is returned to the lift operation valve 555 via the fifth oil passage 585, and is then supplied to the third oil passage 583 via the center by-pass passage.

When the lift operation valve 555 is operated to the self-weight lowering position 555G, hydraulic oil in the first oil passage 581 is supplied to the third oil passage 583 via the center by-pass passage. The fifth oil passage 585 and the sixth oil passage 586 become connected to a fourth oil passage 584, and hydraulic oil in the raising chambers 553a or the lowering chambers 553b of the lift cylinder 553 is returned to the tank.

In the state where the selection switch valve 556 selectively connects the dump cylinders 554, and the mower lift operation valve 544 is in the neutral position 544N, the flow of hydraulic oil to raising chambers 554a and lowering chambers 554b of the dump cylinders 554 at the various operation positions of the lift operation valve 555 is the same as in the case where the lift cylinders 553 are connected.

Next, regarding the flow of hydraulic oil when the mower lift operation valve 544 is at various operation positions, when at the neutral position 544N, hydraulic oil in the first oil passage 581 is supplied to the third oil passage 583 via the center by-pass passage. When at the raising position 544U, hydraulic oil in the first oil passage 581 is supplied to a raising chamber 543a of the mower lift cylinder 543 via a seventh oil passage 587.

When at a lowering position 544D, hydraulic oil in the raising chamber 543a of the mower lift cylinder 543 is returned to the mower lift operation valve 544 via the seventh oil passage 587 due to the weight of the mower device 504, and is then supplied to the fourth oil passage 584 and flows to the tank.

As described above, hydraulic oil supplied to the steering control valve 570 of the power steering device 507 is not directly returned to the tank regardless of whether or not the steering cylinder 572 is operated. In other words, hydraulic oil from the power steering device 507 is supplied to the first oil passage 581, which is the circuit for supply to the lift cylinders 553, the dump cylinders 554, and the mower lift cylinder 543 that are hydraulic actuators, and to the second oil passage 582 that is connected to the charge circuit 563 of the hydrostatic continuously variable transmission device 506.

In the path for the supply of hydraulic oil to the lift cylinders 553 and the dump cylinders 554 as well, oil returning from the lift cylinders 553 and the dump cylinders 554 is not entirely returned to the tank, but rather is supplied to the charge circuit 563 of the hydrostatic continuously variable transmission device 506 via the third oil passage 583.

### Structure for hydraulic pipe attachment/detachment

In the piping of the above-described hydraulic oil supply/discharge circuit 580, attachment/detachment couplers 588 that enable connection and disconnection of the hydraulic oil supply/discharge passage are provided at points along the fifth oil passage 585 and the sixth oil passage 586, which are hydraulic oil supply/discharge paths extending from the lift operation valve 555 to the selection switch valve 556.

The couplers 588 each include a male coupler 588a provided in the rear portion of the traveling vehicle body 501 and a female coupler 588b coupled on the grass collecting container 550 side, and the couplers 588 enable the supply and discharge of hydraulic oil in the connected state, and block the supply and discharge of hydraulic oil between the lift operation valve 555 and the selection switch valve 556 in the disconnected state.

A dust cap 589 is attached to each of the two male couplers 588a on the traveling vehicle body 501 side. When the male couplers 588a and the female couplers 588b are disconnected, the dust caps 589 are placed over the end portions of the male couplers 588a in order to be able to block them.

The selection switch valve 556 provided on the downstream side of the lift operation valve 555 is supported, via a later-described holder device 509, to the ROPS 534 that is provided upright at the rear end portion of the traveling vehicle body 501. The holder device 509 is configured to enable attachment and detachment of the selection switch valve 556 to and from the ROPS 534, that is to say switch between a state of being supported to the ROPS 534 and a state of not being supported to the ROPS 534.

Accordingly, when supported to the ROPS 534, the selection switch valve 556 is attached to the traveling vehicle body 501 side, and when not supported to the ROPS 534, the selection switch valve 556 is attached to the grass collecting device 505. Accordingly, when the grass collecting container 550 is attached and detached to and from the traveling vehicle body 501, the selection switch valve 556 can also, along with the grass collecting container 550, be attached to and detached from the traveling vehicle body 501.

Pipes for supply and discharge to and from the lift cylinders 553 and the dump cylinders 554 are connected to the upper surface side and the rear surface side of the selection switch valve 556, and the fifth oil passage 585 and the sixth oil passage 586 for connection to the lift operation valve 555 side are connected to the lower surface side. The female couplers 588b that can be attached to and detached from the male couplers 588a on the traveling vehicle body 501 side are provided at the terminal ends of the fifth oil passage 585 and the sixth oil passage 586.

A solenoid portion 556A is provided at the end portion of the selection switch valve 556 on the vehicle body-inward side, and a socket 556Ab that enables the insertion and withdrawal of a wire plug 556Aa in the right-left direction is provided in the solenoid portion 556A.

Accordingly, when the grass collecting container 550 is detached from the traveling vehicle body 501, by withdrawing the wire plug 556Aa from the socket 556Ab, it is possible to detach the selection switch valve 556 from the electric power supply portion on the traveling vehicle body 501 side to achieve detachment from the grass collecting container 550 as well as the traveling vehicle body 501.

The end portions on the lower end sides of the lift cylinders 553 provided in the grass collecting container 550 are coupled to the lower portion of the ROPS 534 that is fixed to the traveling vehicle body 501. For this reason, when the grass collecting container 550 is detached from the traveling vehicle body 501, the lower end portions of the lift cylinders 553 also need to be uncoupled from the lower portion of the ROPS 534. Even when uncoupled from the lower portion of the ROPS 534, there is no problem if the connection of the hydraulic piping to the lift cylinders 553 is maintained.

The dump cylinder 554 is not coupled to the traveling vehicle body 501 side, and therefore no attachment/detachment operates are necessary on the grass collecting container 550 side.

When the grass collecting container 550 is attached to the traveling vehicle body 501, it is sufficient that, opposite to the above description, the lower end portions of the lift cylinders 553 are coupled to the lower portion of the ROPS 534, the wire plug 556Aa is inserted into the socket 556Ab of the solenoid portion 556A of the selection switch valve 556, and the female couplers 588b of the fifth oil passage 585 and the sixth oil passage 586 are connected to the male couplers 588a of the traveling vehicle body 501.

### Operation of combined operation lever

The extension and retraction of the mower lift cylinder 543 and the extension and retraction of the lift cylinders 553 and the dump cylinders 554 are performed as follows.

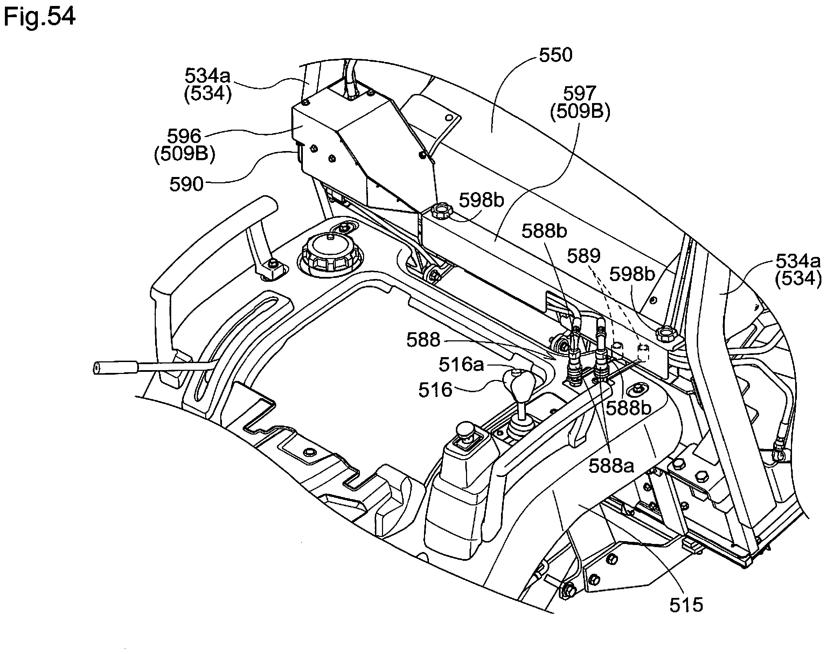

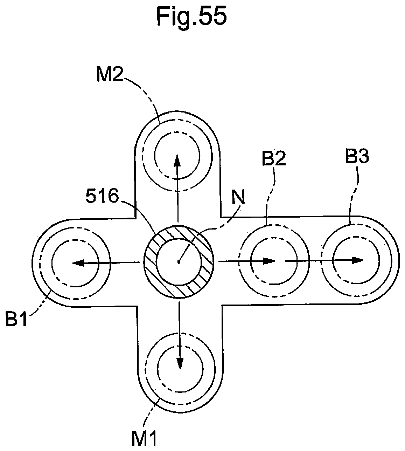

As shown in Figs. 54 and 55, the combined operation lever 516 has a rod that passes through a rear wheel fender 515 in the up-down direction, and is supported so as to be able to swing the front-rear direction and the right-left direction about a swing support point that is below the rear wheel fender 515.

The intersection location of the front-rear direction and the right-left direction in the operation direction of the combined operation lever 516 is a "neutral position N", a rightward movement location of the combined operation lever 516 is a "mower device raising position M1", and a leftward movement position is a "mower device lowering position M2".

A backward movement location of the combined operation lever 516 is a "grass collecting container raising and opening/closing lid opening position B1", and a one-step forward movement location of the combined operation lever 516 (the combined operation lever 516 is located at an intermediate position on the rear side) is a "grass collecting container lowering and opening/closing lid closing position B2". A position that is one more step forward from the "grass collecting container lowering and opening/closing lid closing position B2" (the combined operation lever 516 is located at the deepest point on the rear side) is a "grass collecting container self-weight lowering position B3".

In other words, when the combined operation lever 516 is moved rightward from the "neutral position N", the mechanism linked to rightward movement of the combined operation lever 516 switches the lift operation valve 544 to the raising position 544U.

When the combined operation lever 516 is moved leftward from the "neutral position N", the mechanism linked to leftward movement of the combined operation lever 516 switches the mower lift operation valve 544 to the lowering position 544D.

When the combined operation lever 516 is moved backward from the "neutral position N" and stops at the "grass collecting container raising and opening/closing lid opening position B1", the mechanism linked to backward movement of the combined operation lever 516 switches the lift operation valve 555 to the raising position 555U. At the same time, a signal detected by a sensor (not shown) that detects the operation position of the combined operation lever 516 is detected by a control device for the selection switch valve 556, and if the selection switch valve 556 is at a dump position 556D, the selection switch valve 556 moves to a lift position 556L at which hydraulic oil is supply and discharged to and from the lift cylinders 553.

When the lift cylinders 553 have extended by a predetermined amount, if a push button 516a provided in a grip portion of the combined operation lever 516 is pressed, the selection switch valve 556 switches to the dump position 556D at which hydraulic oil is supplied and discharged to and from the dump cylinder 554 side. Accordingly, after the grass collecting container 550 has been lifted to a predetermined height, the opening/closing lid 550b is opened, and cut grass is discharged.

When the combined operation lever 516 is moved forward from the "neutral position N" and reaches the "grass collecting container lowering and opening/closing lid closing position B2", the mechanism linked to forward movement of the combined operation lever 516 switches the lift operation valve 555 to the lowering position 555D. At the same time, a signal detected by a sensor that detects the operation position of the combined operation lever 516 is detected by the control device of the selection switch valve 556. At this time, if the selection switch valve 556 is at a dump position 556D, the dump cylinders 554 move to the lowering side so as to retract, thus closing the opening/closing lid 550b. After the opening/closing lid 550b has been closed, if the push button 516a is pressed again, the selection switch valve 556 is switched to a lift position 556L for the supply and discharge of hydraulic oil to and from the lift cylinders 553, and thus the lift cylinders 553 retract. When the lift cylinders 553 retract by a predetermined amount, the grass collecting container 550 becomes located at a predetermined height at which cut grass can be received while the opening/closing lid 550b is closed.

When the combined operation lever 516 is operated farther forward from the "grass collecting container lowering and opening/closing lid closing position B2" and reaches the "grass collecting container self-weight lowering position B3", the mechanism linked to forward movement of the combined operation lever 516 switches the lift operation valve 555 to the self-weight lowering position 555G. At the same time, a signal detected by a sensor (not shown) that detects the operation direction of the combined operation lever 516 is detected by the control device of the selection switch valve 556, and if the selection switch valve 556 is at the dump position 556D, the selection switch valve 556 is switched to the lift position 556L for the supply and discharge of hydraulic oil to and from the lift cylinders 553.

In this state, the lift operation valve 555 is located at the self-weight lowering position 555G, hydraulic oil is not supplied to the lift cylinders 553, and the discharge of hydraulic oil from the lift cylinders 553 is allowed, and therefore the grass collecting container 550 enters a floating state.

### Holder device

The following describes the holder device 509 that supports the selection switch valve 556 to the traveling vehicle body 501.

The holder device 509 includes a valve support mechanism 509A that supports the selection switch valve 556, and a cover body 509B that covers the selection switch valve 556 and the hydraulic oil supply/discharge passage, and the holder device 509 is provided in the ROPS 534 that is provided upright at the rear end portion of the travelling vehicle body 501.

### Valve support mechanism

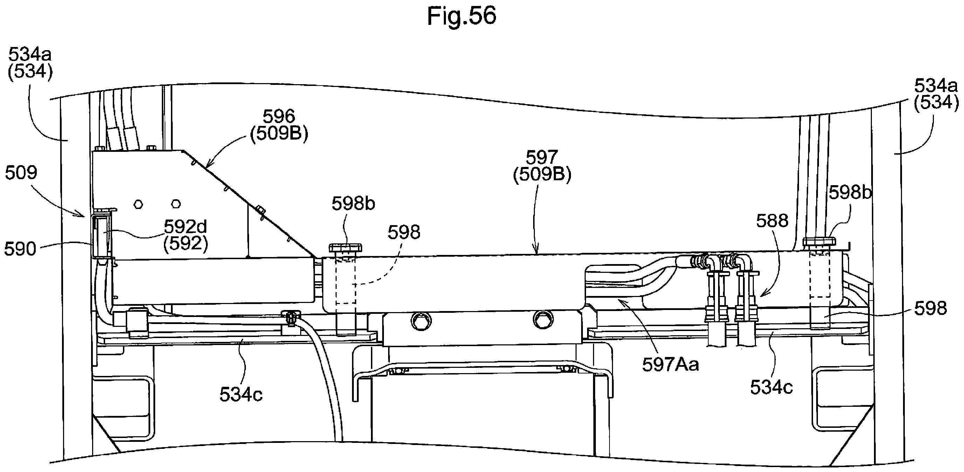

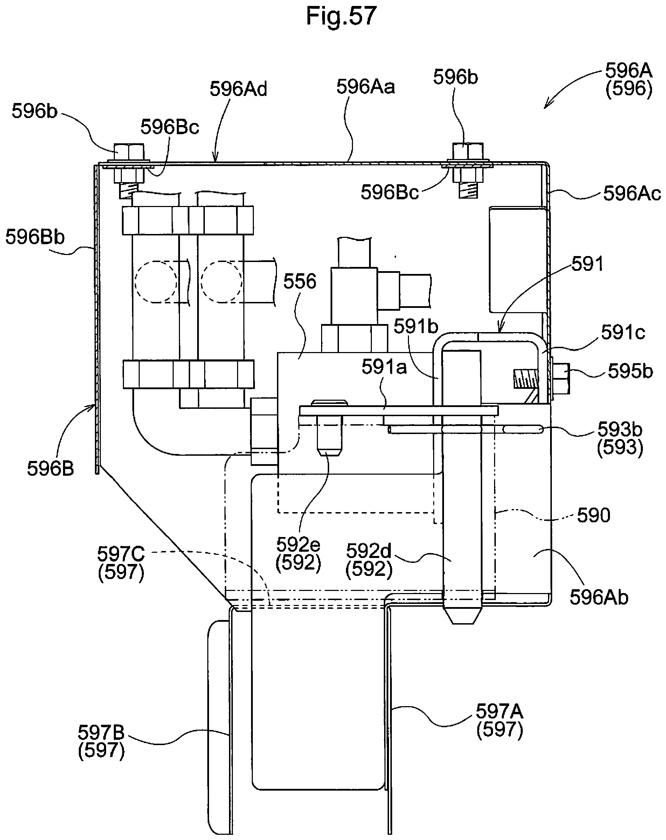

As shown in Figs. 56 and 57, the valve support mechanism 509A includes a support platform member 590 that is fixed to the ROPS 534, and a placement connection member 591 (corresponding to a placement portion) that is fixed to the selection switch valve 556.

The support platform member 590 and the placement connection member 591 are configured such that when the placement connection member 591 is placed on the support platform member 590, they can be switched between a state where the vertical and horizontal position is restricted and a state where the position is not restricted, via a horizontal positioning means 592 that can restrict and allow horizontal movement of the placement connection member 591 relative to the support platform member 590 and a vertical position restricting means 593 that can restrict and allow vertical movement of the placement connection member 591 relative to the support platform member 590.

The support platform member 590 is configured by a channel-shaped member that is fixed to the surface of the right columnar leg portion 534a of the ROPS 534 that faces the center in the vehicle body right-left direction. The channel-shaped support platform member 590 includes a right lateral portion 590b that is fixed by welding to the columnar leg portion 534a such that an open portion 590a faces the center in the vehicle body right-left direction. Also, an upper surface 590c of the support platform member 590 is provided with two pin engagement holes 592a and 592b (corresponding to the horizontal positioning means), and a lower surface 590d of the support platform member 590 is provided with one pin engagement hole 592c.

The placement connection member 591 includes a placement surface portion 591a that faces the upper surface 590c of the support platform member 590, and the placement surface portion 591a is integrally welded to a long lock pin 592d (corresponding to the horizontal positioning means) that can be inserted into one of the two pin engagement holes 592a and 592b formed in the upper surface 590c of the support platform member 590, and a short lock pin 592e (corresponding to the horizontal positioning means) that can be inserted into the other one.

When the upper portion of the long lock pin 592d is inserted into the one pin engagement hole 592a, the lower portion is also inserted to the other pin engagement hole 592c formed in the lower surface 590d of the support platform member 590, and thus is engaged with the support platform member 590 at two vertical positions.

The short lock pin 592e is inserted into the other pin engagement hole 592b formed in the upper surface 590c of the support platform member 590.

In this way, when the placement surface portion 591a of the placement connection member 591 is placed on the upper surface 590c of the support platform member 590, the long lock pin 592d and the short lock pin 592e are inserted into the two pin engagement holes 592a and 592b. Accordingly, it is possible to suppresses cases where the placement connection member 591 rotates about the axes of the lock pins 592d and 592e relative to the support platform member 590, or moves in the horizontal direction.

A pin hole 593a that passes through the long lock pin 592d in the diameter direction is formed in a portion of the lock pin 592d that is located below the upper surface 590c of the channel-shaped support platform member 590 when inserted into the pin engagement hole 592a. The pin hole 593a is configured such that an R-pin ("beta-pin") 593b can be inserted and withdrawn. Accordingly, when the R-pin 593b is inserted into the pin hole 593a, upward withdrawal of the lock pin 592d is restricted, whereas such restriction is canceled by pulling the R-pin 593b out of the pin hole 593a.

The pin hole 593a and the R-pin 593b configure the vertical position restricting means 593 that can restrict and allow vertical movement of the placement connection member 591 relative to the support platform member 590.

In addition to the placement surface portion 591a, a coupling plate portion 591b for coupling to the selection switch valve 556 and an attachment plate portion 591c for attachment to the cover body 509B are integrally formed in the placement connection member 591.

The coupling plate portion 591b is provided with a plurality of coupling holes 594a, and is coupled to the selection switch valve 556 by coupling bolts (not shown).

The attachment plate portion 591c is provided with a plurality of attachment holes 595a, and is attached to the cover body 509B by attachment bolts 595b.

### Cover body

The cover body 509B is configured as described below.

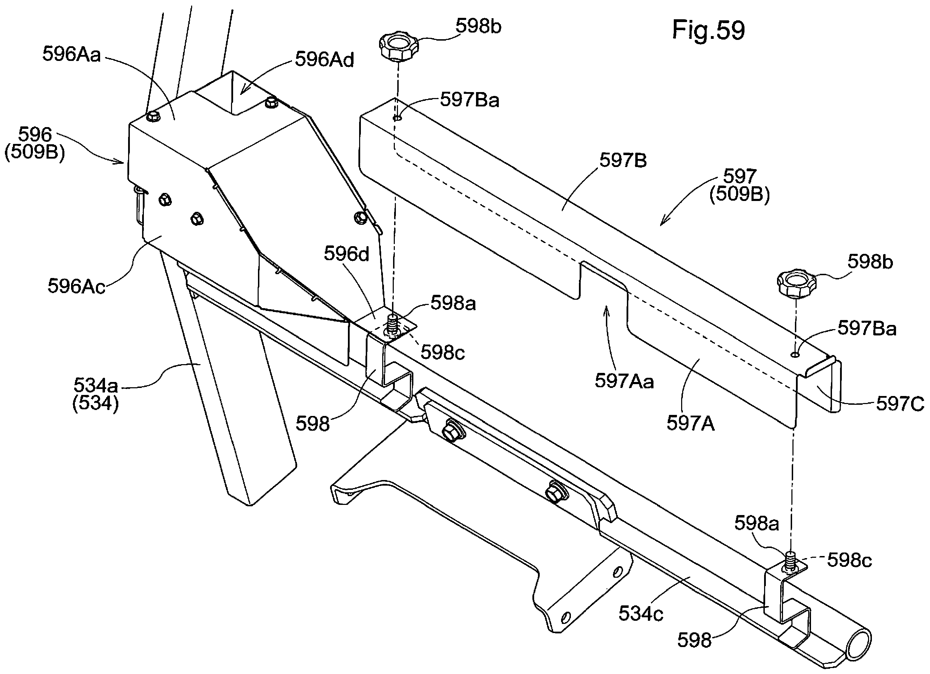

As shown in Figs. 54 and 59, the cover body 509B includes a valve cover portion 596 that encloses the selection switch valve 556, and a pipe cover portion 597 that covers the hydraulic oil supply/discharge passage from the selection switch valve 556 to the coupler 588.

The valve cover portion 596 is configured by a combination of a first valve cover portion 596A that is coupled to the attachment plate portion 591c of the placement connection member 591 and a second valve cover portion 596B that is supported to the first valve cover portion 596A.

The first valve cover portion 596A includes an upper surface portion 596Aa that covers the upper side of the selection switch valve 556, a right surface lower portion 596Ab that covers the right lower portion of the selection switch valve 556, and a front surface portion 596Ac that faces the attachment plate portion 591c of the placement connection member 591.

The second valve cover portion 596B includes a right surface upper portion 596Ba that covers the right upper portion of the selection switch valve 556, and a rear surface portion 596Bb that covers the rear side of the selection switch valve 556.

The first valve cover portion 596A and the second valve cover portion 596B are arranged such that connection pieces 596Bc provided on the upper edge portion of the second valve cover portion 596B are aligned with connection holes 596a provided in the upper surface portion 596Aa of the first valve cover portion 596A, and are coupled together using coupling bolts 596b.

The front surface portion 596Ac of the first valve cover portion 596A is provided with through-holes 596c into which attachment bolts 595b can be inserted, and when the attachment bolts 595b are fastened to the attachment plate portion 591c, the front surface portion 596Ac is sandwiched between the attachment bolts 595b and the attachment plate portion 591c of the placement connection member 591, and the first valve cover portion 596A is coupled and supported to the placement connection member 591.

The upper surface side of the first valve cover portion 596A is provided with a partial cutout portion 596Ad, and the cutout portion 596Ad is used as an opening for the extension of a pipe upward from the hydraulic oil supply/discharge passage (see Figs. 56 and 57).

The right surface lower portion 596Ab of the first valve cover portion 596A is retracted toward the center in the vehicle body right-left direction relative to the right surface upper portion 596Ba of the second valve cover portion 596B, and first valve cover portion 596A is attached such that the channel-shaped support platform member 590 is located in the gap between the retracted right surface lower portion 596Ab of the first valve cover portion 596A and the right columnar leg portion 534a of the ROPS 534.

Accordingly, the R-pin 593b and the long lock pin 592d, which projects downward from the placement surface portion 591a of the placement connection member 591, are arranged at locations exposed outward from the cover body 509B. Accordingly, there is no need for the trouble of disassembling the cover body 509B, and by merely pulling out the R-pin 593b, the selection switch valve 556 can, along with the entire cover body 509B, be easily detached from the support platform member 590 and uncoupled from the right columnar leg portion 534a of the ROPS 534.

As shown in Fig. 59, the pipe cover portion 597 has a front surface 597A, an upper surface 597B, and a rear surface 597C, and is shaped as a channel that is open at the right and left ends and on the lower surface side.

The pipe cover portion 597 is supported to a pair of right and left support stays 598 (see Fig. 56) that are attached to the intermediate coupling frame 534c that couples the right and left columnar leg portions 534a of the ROPS 534.

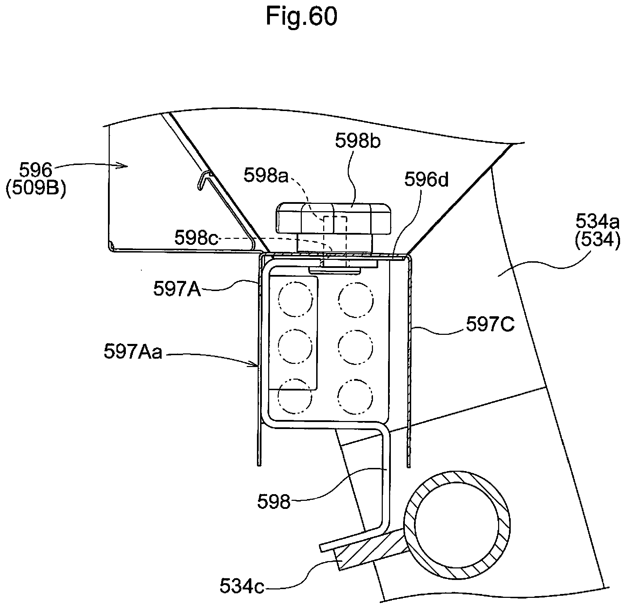

Specifically, as shown in Fig. 60, a coupling bolt 598a that projects upward is fixed by welding to the upper portion of each of the support stays 598, and through-holes 597Ba are formed in the upper surface 597B of the pipe cover portion 597. By fitting the through-holes 597Ba around the coupling bolts 598a, and screw-fastening knob nuts 598b thereto from above, it is possible to fix the upper surface 597B of the pipe cover portion 597 to the upper portions of the support stays 598 in a state of being sandwiched from above and below.

Hydraulic pipes of the hydraulic oil supply/discharge circuit 580 are arranged extending in the right-left direction in the pipe cover portion 597 that is fixed to the support stays 598. Among these hydraulic pipes, the portion of the hydraulic oil supply/discharge passage from the selection switch valve 556 to the coupler 588 is arranged extending forward through an opening 975Aa formed at a central position in the right-left direction of the front surface 597A of the pipe cover portion 597, thus enabling connection to the coupler 588.

The support mechanism is for supporting the pipe cover portion 597 and includes the pair of right and left support stays 598, the coupling bolts 598a, and the knob nuts 598b, and in this support mechanism, the support stay 598, the coupling bolt 598a, and the knob nut 598b that are provided on the right side also serve as coupling fixtures for coupling the right end portion of the pipe cover portion 597 to the left end portion of the valve cover portion 596.

Specifically, coupling holes 598c that can receive one of the coupling bolts 598a are formed in an extension cover piece 596d provided at the left end portion of the valve cover portion 596 and in the right end portion of the pipe cover portion 597, and by screwing the knob nut 598b to the coupling bolt 598a, it is possible to couple the valve cover portion 596 to the pipe cover portion 597 and also uncouple them.

In the riding grass mower having this configuration, the grass collecting device 505 is detached as described below.

First, while the engine 520 and the hydraulic oil supply pump 508 are stopped, the coupler 588 is detached, and the knob nuts 598b of the pipe cover portion 597 are removed to uncouple the pipe cover portion 597 and the intermediate coupling frame 534c.

Next, the R-pin 593b is pulled out of the lock pin 592d of the valve support mechanism 509A, and the selection switch valve 556 is detached from the support platform member 590 along with the entire cover body 509B. In this state, the cover body 509B and the selection switch valve 556 are no longer supported by the support platform member 590, but the hydraulic pipes in the hydraulic oil supply/discharge circuit 580 that is connected to the selection switch valve 556 have a relatively high shape-holding property, and therefore the cover body 509B and the selection switch valve 556 will not fall, and rather are supported in a suspended state by the hydraulic pipes of the hydraulic oil supply/discharge circuit 580 on the detached grass collecting device 505 side.

The grass collecting device 505 is attached to the traveling vehicle body 501 by following the opposite procedure.

### Variations of sixth embodiment

(1) The above embodiment illustrates an example of a structure in which the operation tool for raising and lowering the mower device 504 and the operation tool for raising/lowering and opening/closing the grass collecting container 550 are realized by the one combined operation lever 516, but there is no limitation to this, and a configuration is possible in which separate operation tools are used and can be operated separately.
   It is sufficient that other configurations are similar to the configurations in the embodiment described above.
(2) The above embodiment illustrates an example in which the holder device 509 is provided in the ROPS 534, but the present invention is not necessarily limited to this structure. For example, the holder device 509 may be provided without using the ROPS 534, or even in the case of using the ROPS 534, the holder device 509 may be provided at an appropriate fixing portion of the traveling vehicle body 501 other than the position of the ROPS 534.
   It is sufficient that other configurations are similar to the configurations in the embodiment described above.
(3) The above embodiment illustrates an example in which the holder device 509 includes both the cover body 509B and the valve support mechanism 509A that supports the selection switch valve 556, but the present invention is not necessarily limited to this structure. For example, a structure is possible in which only the valve support mechanism 509A is provided as the holder device 509, and the cover body 509B is omitted for example.
   It is sufficient that other configurations are similar to the configurations in the embodiment described above.
(4) The above embodiment illustrates an example in which the valve support mechanism 509A has a structure in which the horizontal positioning means 592 that can restrict and allow horizontal movement of the placement connection member 591 relative to the support platform member 590 and the vertical position restricting means 593 that can restrict and allow vertical movement of the placement connection member 591 relative to the support platform member 590 are provided separately, but the present invention is not necessarily limited to this structure. For example, as a structure that can serve as both the horizontal positioning means 592 and the vertical position restricting means 593, it is possible to apply a clip-type or magnet-type fixing structure, or provide only the horizontal positioning means 592 and realize the vertical positional restriction by the weight of the placement connection member 591, for example.
(5) The above embodiment illustrates an example in which the horizontal positioning means 592 includes the two pin engagement holes 592a and 592b formed in the support platform member 590 and the two lock pins 592d and 592e, but the present invention is not necessarily limited to this structure. For example, three or more pin engagement holes 592a and 592b may be formed, and two or three or more lock pins 592d and 592e may be formed, such that various attachment positions are realized.
   Also, instead of being simple round holes, the pin engagement holes 592a and 592b may be polygonal holes, have different diameters, and the like, and if the lock pins 592d and 592e for engagement therewith are also formed with polygonal shapes, different diameters, or the like, the pin engagement holes 592a and 592b and the lock pins 592d and 592e may be provided at a single location.
   It is sufficient that other configurations are similar to the configurations in the embodiment described above.
(6) The above embodiment describes an example in which the lock pins 592d and 592e include a combination of a long lock pin 592d that is long in the up-down direction and a short lock pin 592e that is short in the up-down direction, but the present invention is not necessarily limited to this structure. For example, a configuration is possible in which the pin engagement hole 592b that engages with the short lock pin 592e has a half-pierce structure, and a projection portion corresponding to the short lock pin 592e engages with the half-pierce portion.
   Also, a configuration is possible in which the lock pins 592d and 592e are provided in the support platform member 590, and the engagement holes 592a and 592b are provided in the placement connection member 591.
   It is sufficient that other configurations are similar to the configurations in the embodiment described above.
(7) The above embodiment illustrates an example in which the vertical position restricting means 593 is constituted by an R-pin 593b that can be inserted into and withdrawn from the lock pin 592d, but the present invention is not necessarily limited to this structure. For example, another appropriate structure such as a clip or a screw may be employed.
   It is sufficient that other configurations are similar to the configurations in the embodiment described above.
(8) The above embodiment illustrates an example in which the cover body 509B is constituted by a combination of the valve cover portion 596 and the pipe cover portion 597 that are provided separately, but the present invention is not necessarily limited to this structure. For example, a configuration is possible in which the valve cover portion 596 and the pipe cover portion 597 are integrated and can be detached along with the selection switch valve 556, and conversely, a configuration is possible in which the valve cover portion 596 and the pipe cover portion 597 are integrated and are fixed to the traveling vehicle body 501 side.

It is sufficient that other configurations are similar to the configurations in the embodiment described above.

## Claims

1. A work vehicle comprising:
a front wheel (111);
a rear wheel (112);
a pair of right and left main frames (110A) that are supported to the front wheel (111) and the rear wheel (112);
a prime mover section (102) located at a front portion of the main frames (110A); and
a front axle attachment bracket (107) that extends between the right and left main frames (110A) at a position below the prime mover section (102),
wherein the front axle attachment bracket (107) includes an attachment plate (170) at each of right and left end portions, and the attachment plates (170) each include an attachment surface on a side facing a corresponding main frame (110A), and
the attachment plates (170) are each configured to be detachable from the corresponding main frame (110A) via a bolt coupling mechanism, and are configured such that a coupling position can be changed in a vehicle body front-rear direction.

2. The work vehicle according to claim 1, wherein
the bolt coupling mechanism includes bolt insertion holes (110a,170a,170b) that are formed in the attachment plates (170) and the main frames (110A), and coupling bolts (174) configured to be inserted into the bolt insertion holes,
the bolt insertion holes include:
a first hole group (a1) that enables coupling of the attachment plates (170) to the main frames (110A) at a predetermined position in the vehicle body front-rear direction, and
a second hole group (a2) that enables coupling of the attachment plates (170) to the main frames (110A) at a position that is different from the predetermined position in the vehicle body front-rear direction.

3. The work vehicle according to claim 2, wherein
the first hole group (a1) and the second hole group (a2) are formed in the main frames (110A).

4. The work vehicle according to claim 2, wherein
the first hole group (a1) and the second hole group (a2) are formed in the attachment plates (170).
